(19) Europäisches Patentamt
European Patent Office
Office européen des brevets

(11) **EP 4 271 072 A1**

(12) **EUROPEAN PATENT APPLICATION**
published in accordance with Art. 153(4) EPC

(43) Date of publication:
**01.11.2023 Bulletin 2023/44**

(21) Application number: **21918799.4**

(22) Date of filing: **06.04.2021**

(51) International Patent Classification (IPC):
**H04W 72/02** (2009.01)   **H04W 4/40** (2018.01)

(52) Cooperative Patent Classification (CPC):
**H04W 4/40; H04W 72/02**

(86) International application number:
**PCT/CN2021/085752**

(87) International publication number:
**WO 2022/151600 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.01.2021 PCT/CN2021/072307**

(71) Applicant: **Huawei Technologies Co., Ltd.
Shenzhen, Guangdong 518129 (CN)**

(72) Inventors:
• **HUANG, Haining
Shenzhen, Guangdong 518129 (CN)**
• **LI, Chao
Shenzhen, Guangdong 518129 (CN)**
• **ZHANG, Tianhong
Shenzhen, Guangdong 518129 (CN)**

(74) Representative: **Roth, Sebastian
Mitscherlich PartmbB
Patent- und Rechtsanwälte
Karlstraße 7
80333 München (DE)**

(54) **COMMUNICATION METHOD AND COMMUNICATION APPARATUS**

(57)   This application discloses a communication method and a communication apparatus, and relates to the communication field, to assist a terminal device with resource overlapping in resource selection. The communication method includes: A third terminal device detects first sidelink control information SCI from a first terminal device and second SCI from a second terminal device, where one or more resources indicated by the first SCI overlap with one or more resources indicated by the second SCI. The third terminal device sends assistance information to the first terminal device when a specific condition is met, where the assistance information is used to assist the first terminal device in resource selection.

FIG. 7

FIG. 8A

## Description

This application claims priority to International Application No. PCT/CN2021/072307, filed with the China National Intellectual Property Administration on January 15, 2021 and entitled "COMMUNICATION METHOD AND COMMUNICATION APPARATUS", which is incorporated herein by reference in its entirety.

## TECHNICAL FIELD

This application relates to the communication field, and in particular, to a communication method and a communication apparatus.

## BACKGROUND

When terminal devices perform resource selection based on a resource allocation mode 2 (mode 2), probably because the two terminal devices are hidden nodes of each other (in other words, the two terminal devices are far away from each other and cannot sense existence of each other), resources used or reserved by the two terminal devices overlap; or probably because the two terminal devices perform half-duplex communication (in other words, the two terminal device cannot simultaneously perform receiving and sending), resources used or reserved by the two terminal devices overlap. However, a resource conflict does not necessarily occur between the resources used or reserved by the two terminal devices. For example, although the resources overlap, mutual interference is small, and in this case, data transmission is not affected.

## SUMMARY

Embodiments of this application provide a communication method and a communication apparatus, to assist a terminal device with resource overlapping in resource selection.

To achieve the foregoing objectives, the following technical solutions are used in embodiments of this application.

According to a first aspect, a communication method is provided. The communication method includes: A third terminal device detects first sidelink control information (SCI) from a first terminal device and second SCI from a second terminal device, where one or more resources indicated by the first SCI overlap with one or more resources indicated by the second SCI; and the third terminal device sends assistance information to the first terminal device when at least one of the following conditions is met, where the assistance information is used to assist the first terminal device in resource selection: the first terminal device is a receiver of data scheduled by the second SCI; the second terminal device is a receiver of data scheduled by the first SCI; the third terminal device is a receiver of data scheduled by the first SCI, and the third terminal device is a receiver of data scheduled by the second SCI; the third terminal device is a receiver of data scheduled by the first SCI, and a reference signal received power RSRP measurement value corresponding to the second SCI is greater than a first RSRP threshold; the third terminal device is a receiver of data scheduled by the first SCI, and a received signal strength indicator RSSI measurement value corresponding to the second SCI is greater than a first RSSI threshold; a third terminal device is a receiver of data scheduled by the first SCI, and a distance between the third terminal device and the second terminal device is less than a first distance threshold; the third terminal device is a receiver of data scheduled by the first SCI, and a channel quality indicator CQI of the second terminal device is greater than a first CQI threshold; the third terminal device is a receiver of data scheduled by the second SCI, and a reference signal received power RSRP measurement value corresponding to the first SCI is greater than a second RSRP threshold; the third terminal device is a receiver of data scheduled by the second SCI, and a received signal strength indicator RSSI measurement value corresponding to the first SCI is greater than a second RSSI threshold; the third terminal device is a receiver of data scheduled by the second SCI, and a distance between the third terminal device and the first terminal device is less than a second distance threshold; the third terminal device is a receiver of data scheduled by the second SCI, and a channel quality indicator CQI of the first terminal device is greater than a second CQI threshold; the third terminal device detects that a hybrid automatic repeat request feedback corresponding to data scheduled by the first SCI is a negative acknowledgment; the third terminal device does not successfully decode data of the first terminal device; the third terminal device successfully decodes data of the first terminal device, and an overlapping resource is located in one or more periodic resources indicated by the first SCI; the third terminal device detects that a hybrid automatic repeat request feedback corresponding to data scheduled by the second SCI is a negative acknowledgment; the third terminal device does not successfully decode data of the second terminal device; and the third terminal device successfully decodes data of the second terminal device, and an overlapping resource is located in one or more periodic resources indicated by the second SCI.

According to the communication method provided in this embodiment of this application, when the resources indicated by the first SCI from the first terminal device overlap with the resources indicated by the second SCI from the second terminal device, the third terminal device determines, based on a specific condition, that at least one of the first terminal device and the second terminal device cannot receive, due to a half-duplex communication problem, SCI sent by the other one when sending SCI. In this case, a resource used or reserved by the other one conflicts with a resource used or reserved by the at least one of the first terminal device and the second terminal device. In other words, the resources indicated by the first SCI conflict with the resources indicated by the second SCI. Alternatively, when the resources indicated by the first SCI overlap with the resources indicated by the second SCI, the third terminal device determines, based on some conditions, that the third terminal device serves as the receiver of the data scheduled by the first SCI from the first terminal device. Communication of the second terminal device causes interference to communication between the first terminal device and the third terminal device. Consequently, the resources indicated by the first SCI conflict with the resources indicated by the second SCI. In either of the two cases, the third terminal device sends the assistance information to the first terminal device, to assist the first terminal device in resource selection.

In this embodiment of this application, that one or more resources indicated by the first SCI overlap with one or more resources indicated by the second SCI may mean that some resources indicated by the first SCI overlap with some resources indicated by the second SCI, may mean that all resources indicated by the first SCI overlap with all resources indicated by the second SCI, may mean that some resources indicated by the first SCI overlap with all resources indicated by the second SCI, may mean that all resources indicated by the first SCI overlap with some resources indicated by the second SCI, may mean that one resource indicated by the first SCI overlaps with one resource indicated by the second SCI, may mean that a plurality of resources indicated by the first SCI overlap with a plurality of resources indicated by the second SCI, may mean that at least one resource that is used by the first terminal device and that is indicated by the first SCI overlaps with at least one resource that is used by the second terminal device and that is indicated by the second SCI, or may mean that at least one resource that is reserved by the first terminal device and that is indicated by the first SCI overlaps with at least one resource that is reserved by the second terminal device and that is indicated by the second SCI.

That one or more resources indicated by the first SCI overlap with one or more resources indicated by the second SCI may alternatively mean that the resources indicated by the first SCI and the resources indicated by the second SCI overlap in time domain, may mean that one of the resources indicated by the first SCI and the resources indicated by the second SCI overlap in time domain, or may mean that a plurality of resources in the resources indicated by the first SCI and the resources indicated by the second SCI overlap in time domain. That the resources overlap in time domain herein may be understood as that the resources partially overlap in time domain, or the resources completely overlap in time domain, or time domain resources overlap. That the resources completely overlap in time domain may also be understood as that the time domain resources are the same, or may be understood as that the resources are in a same time unit. The time unit herein may be a slot, a symbol, a subframe, a frame, or the like. This is not limited in this application.

That the resources indicated by the first SCI overlap with the resources indicated by the second SCI may also mean that the resources indicated by the first SCI and the resources indicated by the second SCI overlap in time and frequency, may mean that one of the resources indicated by the first SCI and the resources indicated by the second SCI overlap in time and frequency, or may mean that a plurality of resources in the resources indicated by the first SCI and the resources indicated by the second SCI overlap in time and frequency. Herein, that the resources overlap in time and frequency may be understood as that the resources partially overlap in time and frequency, or the resources completely overlap in time and frequency. That the resources partially overlap in time and frequency may be understood as that the resources partially overlap in time domain and/or the resources partially overlap in frequency domain. That the resources completely overlap in time and frequency may also be understood as a same resource.

In a possible implementation, a priority value indicated by the first SCI is greater than a priority value indicated by the second SCI. In other words, a priority of the data scheduled by the first SCI is lower than a priority of the data scheduled by the second SCI. In this case, the third terminal device may send the assistance information to the first terminal device, so that the first terminal device transmitting low-priority data reselects a resource.

In a possible implementation, the third terminal device sends the assistance information to the first terminal device, the resources indicated by the first SCI include at least one resource used by the first terminal device and at least one resource reserved by the first terminal device, the resources indicated by the second SCI include at least one resource used by the second terminal device and at least one resource reserved by the second terminal device, the assistance information is resource conflict indication information, and the resource conflict indication information indicates at least one of the following information: a plurality of resources indicated by the first SCI conflict with a plurality of resources indicated by the second SCI; the at least one resource used by the first terminal device conflicts with the at least one resource used by the second terminal device, or the at least one resource reserved by the first terminal device conflicts with the at least one resource reserved by the second terminal device; and the third terminal device is the receiver of the data scheduled by the first SCI. This implementation indicates several possible types used when the assistance information is the resource conflict indication information. The resource conflict indication information may notify an assisted terminal device of a clearer understanding of a specific conflict, so as to perform more accurate and proper processing.

The types of the resource conflict indication information include at least one of the following:

A resource conflict indicated by the resource conflict indication information is a conflict of one resource; a resource conflict indicated by the resource conflict indication information is a conflict of a plurality of resources; a resource conflict indicated by the resource conflict indication information is from a data receiver; a resource conflict indicated by the resource conflict indication information is not from a data receiver; a resource conflict indicated by the resource conflict indication information is a pre-conflict indication; and a resource conflict indicated by the resource conflict indication information is a post-conflict indication.

In a possible implementation, that the assistance information is used to assist the first terminal device in resource selection includes: The assistance information indicates an available resource and/or an unavailable resource to the first terminal device.

The available resource may be understood as a resource available for the assisted terminal device, that is, a resource that can be used by the assisted terminal device for data transmission, or may be understood as a low-interference resource that can be used by the assisted terminal device. The available resource herein may alternatively be understood as a resource that is selected by an assisting terminal device in a mode 2 (mode 2)-based resource selection process, or may be understood as a low-interference resource that is determined by the assisting terminal device based on SCI and an RSRP measurement value in the mode 2 (mode 2)-based resource selection process. The available resource may alternatively be understood as a resource that can be used by both the assisting terminal device and the assisted terminal device for data transmission. The available resource may alternatively be used by the assisted terminal device to determine information about the available resource.

The unavailable resource may be understood as a resource unavailable for the assisted terminal device, that is, a resource that cannot be used by the assisted terminal device for data transmission, or may be understood as a high-interference resource that cannot be used by the assisted terminal device. The unavailable resource herein may be understood as a resource that is excluded by the assisting terminal device in the mode 2 (mode 2)-based resource selection process, or may be understood as a high-interference resource that is determined by the assisting terminal device based on SCI and an RSRP measurement value in the mode 2 (mode 2)-based resource selection process. The unavailable resource may alternatively be understood as a resource that cannot be used by either the assisting terminal device or the assisted terminal device for data transmission. The unavailable resource may alternatively be used by the assisted terminal device to determine information about the unavailable resource. The unavailable resource may alternatively be understood as a resource that may affect data transmission reliability if the resource is used by the assisted terminal device.

In a possible implementation, that the third terminal device sends assistance information to the first terminal device when at least one of the following conditions is met includes: When the third terminal device successfully decodes the data of the first terminal device, and the overlapping resource is the periodic resource indicated by the first SCI, the third terminal device sends the assistance information to the first terminal device, where the assistance information indicates that a conflict occurs on the periodic resource indicated by the first SCI. If the third terminal device successfully decodes the data of the first terminal device, the first terminal device no longer retransmits the data to the third terminal device, and no long uses a retransmission resource of a current TB. However, the first terminal device may further send data on a conflict resource (that is, the periodic resource indicated by the first SCI) of another TB. Therefore, the third terminal device may send the assistance information to the first terminal device. The current TB is a TB scheduled by the first SCI, and the another TB is a TB that corresponds to another reserved resource and that is obtained based on the resources and a resource reservation periodicity that are indicated by the first SCI.

In a possible implementation, the method further includes: The third terminal device sends the assistance information to the second terminal device, where the assistance information is further used to assist the second terminal device in resource selection. The assistance information may help the second terminal device select a resource.

In a possible implementation, the third terminal device sends the assistance information to the second terminal device, the resources indicated by the first SCI include at least one resource used by the first terminal device and at least one resource reserved by the first terminal device, the resources indicated by the second SCI include at least one resource used by the second terminal device and at least one resource reserved by the second terminal device, the assistance information is resource conflict indication information, and the resource conflict indication information indicates at least one of the following information: a plurality of resources indicated by the first SCI conflict with a plurality of resources indicated by the second SCI; the at least one resource used by the first terminal device conflicts with the at least one resource used by the second terminal device, or the at least one resource reserved by the first terminal device conflicts with the at least one resource reserved by the second terminal device; and the third terminal device is the receiver of the data scheduled by the second SCI. This implementation indicates several possible types used when the assistance information is resource conflict indication information. The resource conflict indication information may notify an assisted terminal device of a clearer understanding of a specific conflict, so as to perform more accurate and proper processing.

In a possible implementation, that the assistance information is further used to assist the second terminal device in resource selection includes: The assistance information further indicates an available resource and/or an unavailable resource to the second terminal device. For the available resource and/or the unavailable resource, refer to the foregoing descriptions.

In a possible implementation, content of the resource conflict indication information is indicated by using a frequency domain resource carrying the resource conflict indication information. A plurality of types of resource conflict indication information may be indicated in frequency domain, and it is ensured that the resource conflict indication information does not conflict with a HARQ.

In a possible implementation, content of the resource conflict indication information is indicated by using a cyclic shift code, a root sequence, or an orthogonal cover code associated with the resource conflict indication information. A plurality of types of resource conflict indication information may be indicated in code domain, and it is ensured that the resource conflict indication information does not conflict with a HARQ.

According to a second aspect, a communication method is provided. The method includes: A first terminal device sends first sidelink control information SCI, where one or more resources indicated by the first SCI overlap with one or more resources indicated by second SCI of a second terminal device; the first terminal device receives assistance information, where the assistance information is used to assist the first terminal device in resource selection; and the first terminal device selects a resource based on the assistance information. The resources indicated by the first SCI include at least one resource used by the first terminal device and at least one resource reserved by the first terminal device. The resources indicated by the second SCI include at least one resource used by the second terminal device and at least one resource reserved by the second terminal device. The assistance information is resource conflict indication information, and the resource conflict indication information indicates at least one of the following information: A plurality of resources indicated by the first SCI conflicts with a plurality of resources indicated by the second SCI; the at least one resource used by the first terminal device conflicts with the at least one resource used by the second terminal device, or the at least one resource reserved by the first terminal device conflicts with the at least one resource reserved by the second terminal device; and a transmitter of the resource conflict indication information is a receiver of data scheduled by the first SCI.

According to the communication method provided in this embodiment of this application, when the resources indicated by the first SCI from the first terminal device overlap with the resources indicated by the second SCI from the second terminal device, the third terminal device determines, based on a specific condition, that at least one of the first terminal device and the second terminal device cannot receive, due to a half-duplex communication problem, SCI sent by the other one when sending SCI. In this case, a resource used or reserved by the other one conflicts with a resource used or reserved by the at least one of the first terminal device and the second terminal device. In other words, the resources indicated by the first SCI conflict with the resources indicated by the second SCI. Alternatively, when the resources indicated by the first SCI overlap with the resources indicated by the second SCI, the third terminal device determines, based on some conditions, that the third terminal device serves as the receiver of the data scheduled by the first SCI from the first terminal device. Communication of the second terminal device causes interference to communication between the first terminal device and the third terminal device. Consequently, the resources indicated by the first SCI conflict with the resources indicated by the second SCI. In either of the two cases, the third terminal device sends the assistance information to the first terminal device, to assist the first terminal device in resource selection.

In a possible implementation, that the first terminal device receives assistance information includes: The first terminal device receives the assistance information if a hybrid automatic repeat request feedback received by the first terminal device is a negative acknowledgment. In this implementation, the first terminal device receives the assistance information when a specific condition is met, so that complexity can be reduced.

In a possible implementation, a cast type indicated by the first SCI is a multicast option 2, and that the first terminal device receives assistance information includes: The first terminal device receives the assistance information if the first terminal device does not receive a hybrid automatic repeat request feedback of at least one terminal device. In this implementation, the first terminal device receives the assistance information when a specific condition is met, so that complexity can be reduced.

In a possible implementation, content of the resource conflict indication information is indicated by using a frequency domain resource carrying the resource conflict indication information. A plurality of types of resource conflict indication information may be indicated in frequency domain, and it is ensured that the resource conflict indication information does not conflict with a HARQ.

In a possible implementation, content of the resource conflict indication information is indicated by using a cyclic shift code, a root sequence, or an orthogonal cover code associated with the resource conflict indication information. A plurality of types of resource conflict indication information may be indicated in code domain, and it is ensured that the resource conflict indication information does not conflict with a HARQ.

According to a third aspect, a communication method is provided. The communication method includes: A third terminal device detects first sidelink control information SCI from a first terminal device and second SCI from a second terminal device, where one or more resources indicated by the first SCI overlap with one or more resources indicated by the second SCI; and the third terminal device sends first information to the first terminal device, where the first information includes a destination identifier indicated by the second SCI, and the first information is used by the first terminal device to determine that the resources indicated by the first SCI conflict with the resources indicated by the second SCI.

According to the foregoing communication method provided in this embodiment of this application, when the resources indicated by the first SCI overlap with the resources indicated by the second SCI, the third terminal device sends the destination identifier of the second terminal device to the first terminal device, so that the first terminal device determines, based on the destination identifier, that the first terminal device fails to receive the SCI of the second terminal device due to half-duplex, and therefore determines that the resources indicated by the first SCI conflict with the resources indicated by the second SCI.

In a possible implementation, a priority value indicated by the first SCI is higher than a priority value indicated by the second SCI. In other words, a priority of data scheduled by the first SCI is lower than a priority of data scheduled by the second SCI. In this case, the third terminal device may send assistance information to the first terminal device, so that the first terminal device transmitting low-priority data reselects a resource.

In a possible implementation, the first information further includes a cast type indicated by the second SCI, and the cast type includes broadcast, multicast, or unicast. If the cast type indicated by the second SCI indicates the broadcast or the multicast, the first terminal device may determine, based on the destination identifier, that the first terminal device is a receiver of data of the second terminal device. If the first terminal device is the receiver of the data sent by the second terminal device, due to a half-duplex limitation, the first terminal device fails to receive the second SCI when sending the first SCI. Therefore, the first terminal device determines that the resources indicated by the first SCI conflict with the resources indicated by the second SCI.

In a possible implementation, the first information further includes a source identifier indicated by the second SCI, and the cast type indicates the unicast. If the cast type indicated by the second SCI indicates the unicast, the first terminal device may determine, based on the destination identifier and the source identifier, that the first terminal device is a receiver of data of the second terminal device. If the first terminal device is the receiver of the data sent by the second terminal device, due to a half-duplex limitation, the first terminal device fails to receive the second SCI when sending the first SCI. Therefore, the first terminal device determines that the resources indicated by the first SCI conflict with the resources indicated by the second SCI.

In a possible implementation, the first information further includes time domain resource indication information, and the time domain resource indication information indicates a resource that conflicts with the resources indicated by the second SCI and that is in the resources indicated by the first SCI. In this way, the first terminal device may further determine the conflict resource based on the time domain resource indication information included in the first information. The conflict resource is a resource that is indicated by the time domain resource indication information and that overlaps with, in time domain, a resource used or reserved by the first terminal device.

According to a fourth aspect, a communication method is provided. The communication method includes: A first terminal device sends first sidelink control information SCI, where one or more resources indicated by the first SCI overlap with one or more resources indicated by second SCI of a second terminal device; and the first terminal device receives first information, where the first information includes a destination identifier indicated by the second SCI, and the first information is used by the first terminal device to determine that the resources indicated by the first SCI conflict with the resources indicated by the second SCI.

According to the foregoing communication method provided in this embodiment of this application, when the resources indicated by the first SCI from the first terminal device overlap with the resources indicated by the second SCI from the second terminal device, the third terminal device sends, to the first terminal device, a cast type and the destination identifier that are indicated by the SCI of the second terminal device, so that the first terminal device determines, based on the cast type and the destination identifier, that the first terminal device fails to receive the SCI of the second terminal device due to half-duplex, and therefore determines that the resources indicated by the first SCI conflict with the resources indicated by the second SCI.

In a possible implementation, that the first information is used by the first terminal device to determine that the resources indicated by the first SCI conflict with the resources indicated by the second SCI includes: The first information is used by the first terminal device to determine that the first terminal device is a receiver of data sent by the second terminal device. If the first terminal device is the receiver of the data sent by the second terminal device, due to a half-duplex limitation, the first terminal device fails to receive the second SCI when sending the first SCI. Therefore, the first terminal device determines that the resources indicated by the first SCI conflict with the resources indicated by the second SCI.

In a possible implementation, the first information further includes the cast type indicated by the second SCI, and the cast type includes broadcast, multicast, or unicast. If the cast type indicated by the second SCI indicates the broadcast or the multicast, the first terminal device may determine, based on the destination identifier, that the first terminal device is the receiver of the data of the second terminal device. If the first terminal device is the receiver of the data sent by the second terminal device, due to a half-duplex limitation, the first terminal device fails to receive the second SCI when sending the first SCI. Therefore, the first terminal device determines that the resources indicated by the first SCI conflict with the resources indicated by the second SCI.

In a possible implementation, the first information further includes a source identifier, the cast type indicates the unicast, and the cast type, the destination identifier, and the source identifier are used by the first terminal device to determine that the first terminal device is the receiver of the data sent by the second terminal device. If the cast type indicated by the second SCI indicates the unicast, the first terminal device may determine, based on the destination identifier and the source identifier, that the first terminal device is the receiver of the data of the second terminal device. If the first terminal device is the receiver of the data sent by the second terminal device, due to a half-duplex limitation, the first terminal device fails to receive the second SCI when sending the first SCI. Therefore, the first terminal device determines that the resources indicated by the first SCI conflict with the resources indicated by the second SCI.

In a possible implementation, the first information further includes time domain resource indication information, and the time domain resource indication information indicates a resource that conflicts with the resources indicated by the second SCI and that is in the resources indicated by the first SCI. In this way, the first terminal device may further determine the conflict resource based on the time domain resource indication information included in the first information. The conflict resource is a resource that is indicated by the time domain resource indication information and that overlaps with, in time domain, a resource used or reserved by the first terminal device.

According to a fifth aspect, a communication method is provided. The communication method includes: A third terminal device detects first sidelink control information SCI and at least one piece of second SCI, where one or more resources indicated by the first SCI overlap with one or more resources indicated by the second SCI, and the first SCI is from a first terminal device; and the third terminal device sends first information to the first terminal device, where the first information includes a destination identifier indicated by third SCI, and the first information is used by the first terminal device to determine that the resources indicated by the first SCI overlap with one or more resources indicated by the third SCI. The third SCI is one or more pieces of SCI in the at least one piece of second SCI.

According to the foregoing communication method provided in this embodiment of this application, when the resources indicated by the first SCI overlap with the resources indicated by the third SCI, the third terminal device sends the destination identifier of a second terminal device to the first terminal device, so that the first terminal device determines, based on the destination identifier, that the first terminal device fails to receive SCI of the second terminal device due to a half-duplex limitation, and therefore determines that the resources indicated by the first SCI conflict with the resources indicated by the third SCI. A reason is as follows: Resource overlapping does not mean a resource conflict. When the third terminal device cannot determine, based on a destination identifier indicated by the first SCI and the destination identifier indicated by the third SCI, that the resources indicated by the first SCI conflict with the resources indicated by the third SCI, the third terminal device sends, to the first terminal device, the destination identifier indicated by the third SCI, so that the first terminal device determines whether the resource overlapping is a resource conflict.

In a possible implementation, the first information further includes a cast type indicated by the third SCI, and the cast type includes broadcast, multicast, or unicast. If the cast type indicated by the third SCI is the broadcast or the multicast, the first terminal device may determine, based on the destination identifier, that the first terminal device is a receiver of data of the second terminal device. If the first terminal device is the receiver of the data sent by the second terminal device, due to a half-duplex limitation, the first terminal device fails to receive the third SCI when sending the first SCI. Therefore, the first terminal device determines that the resources indicated by the first SCI conflict with the resources indicated by the third SCI.

In a possible implementation, the first information further includes a source identifier indicated by the third SCI. The cast type that is indicated by the third SCI and that is included in the first information may be the unicast. If the cast type indicated by the third SCI is the unicast, the first terminal device may determine, based on the destination identifier and the source identifier, that the first terminal device is a receiver of data of a second terminal device. If the first terminal device is the receiver of the data sent by the second terminal device, due to a half-duplex limitation, the first terminal device fails to receive the third SCI when sending the first SCI. Therefore, the first terminal device determines that the resources indicated by the first SCI conflict with the resources indicated by the third SCI.

In a possible implementation, a priority value indicated by the first SCI is greater than a priority value indicated by the third SCI. In other words, a priority of data scheduled by the first SCI is lower than a priority of data scheduled by the third SCI. In this case, the third terminal device may send the first information to the first terminal device, so that the first terminal device transmitting low-priority data reselects a resource, and data with a higher priority is received in the slot. If the third SCI is a plurality of pieces of second SCI, the priority value indicated by the third SCI is the smallest value of priority values indicated by the plurality of pieces of second SCI.

In a possible implementation, the first information further includes time domain resource indication information, and the time domain resource indication information indicates a resource that overlaps with the resources indicated by the third SCI and that is in the resources indicated by the first SCI. In this way, the first terminal device may further determine the conflict resource based on the time domain resource indication information included in the first information. The conflict resource is a resource that is indicated by the time domain resource indication information and that overlaps with, in time domain, a resource used and/or reserved by the first terminal device.

In a possible implementation, in the resources indicated by the second SCI, a resource that overlaps with the resources indicated by the first SCI is an overlapping resource, and the third SCI is SCI that is in the at least one piece of second SCI and that has a largest quantity of overlapping resources. A larger quantity of overlapping resources indicates a greater potential impact of the second terminal device on future transmission of the first terminal device. Therefore, corresponding first information is worthier of being indicated to the first terminal device. It should be noted that an overlapping resource in the resources indicated by the first SCI includes the first reserved resource (the next resource of a used resource) in the resources indicated by the first SCI.

In a possible implementation, the third SCI may be SCI that in the at least one piece of second SCI and that indicates a smallest priority value. In this implementation, the first terminal device may not miss receiving of an important data packet (indicated by the smallest priority value).

In a possible implementation, the third SCI may be SCI that is in the at least one piece of second SCI and that indicates a resource reservation periodicity the same as a resource reservation periodicity indicated by the first SCI. In this case, one or more resources indicated by a time domain resource allocation field in the third SCI and one or more resources indicated by a time domain resource allocation field in the first SCI overlap in time domain, and a resource reservation periodicity indicated by the third SCI is the same as the resource reservation periodicity indicated by the first SCI, so that the resources indicated by the third SCI and the resources indicated by the first SCI continuously overlap in a plurality of resource reservation periodicities. If the first terminal device needs to receive a data packet sent by the second terminal device, due to the continuous overlapping, the first terminal device may continuously fail to receive the data packet sent by the second terminal device. This implementation can avoid that the first terminal device continuously fails to receive the data packet.

In a possible implementation, the third SCI may be SCI that is in the at least one piece of second SCI and that indicates a periodic reserved resource the same as a periodic reserved resource indicated by the first SCI. In this case, at least one of the resources indicated by the time domain resource allocation field in the third SCI and at least one of the resources indicated by the time domain resource allocation field in the first SCI overlap in time domain, and the resource reservation periodicity indicated by the third SCI is the same as the resource reservation periodicity indicated by the first SCI, so that the periodic reserved resources indicated by the third SCI continuously overlap with the periodic reserved resources indicated by the first SCI. Consequently, the first terminal device fails to receive a data packet in the periodic reserved resources. This implementation can avoid that the first terminal device fails to receive the data packet in the periodic reserved resources.

In a possible implementation, when a cast type indicated by 2$^{nd}$-stage SCI included in the third SCI is a multicast option 1, the first information may further include a time-frequency resource indicated by the third SCI (that is, a time-frequency resource indicated by the time domain resource field and the frequency domain resource field included in the third SCI). In this case, the third terminal device sends the first information to the first terminal device, so that the first terminal device determines that the resources indicated by the first SCI conflict with the resources indicated by the third SCI. Before feeding back a NACK to the second terminal device, the first terminal device may determine, based on a time-frequency resource indicated by 1$^{st}$-stage SCI of the third SCI, a location of a PSFCH resource for feeding back the NACK, and feed back the NACK, so that the second terminal device performs retransmission. This avoids a case in which the first terminal device cannot receive a data packet because the second terminal device does not retransmit the data packet when another terminal device successfully decodes the data packet. It should be noted that, in this case, that the resources indicated by the first SCI overlap with the resources indicated by the third SCI may be understood as: A used resource in the resources indicated by the first SCI and a used resource in the resources indicated by the third SCI overlap in time domain. Herein, the used resource in the resources indicated by the SCI may be understood as a resource used for SCI scheduling, or referred to as the first resource in the resources indicated by the SCI.

According to a sixth aspect, a communication method is provided. The communication method includes: A first terminal device receives first information, where the first information includes a destination identifier indicated by third sidelink control information SCI, the third SCI is one or more pieces of SCI in at least one piece of second SCI, one or more resources indicated by the second SCI overlap with one or more resources indicated by first SCI, and the first SCI is SCI sent by the first terminal device; and the first terminal device determines, based on the first information, that the resources indicated by the first SCI conflict with one or more resources indicated by the third SCI.

According to the foregoing communication method provided in this embodiment of this application, when the resources indicated by the first SCI overlap with the resources indicated by the second SCI, the third terminal device sends, to the first terminal device, a cast type and a destination identifier that are indicated by SCI of a second terminal device, so that the first terminal device determines, based on the cast type and the destination identifier, that the first terminal device fails to receive the SCI of the second terminal device due to a half-duplex limitation, and therefore determines that the resources indicated by the first SCI conflict with the resources indicated by the third SCI.

In a possible implementation, that the first terminal device determines, based on the first information, that the resources indicated by the first SCI conflict with one or more resources indicated by the third SCI includes: The first terminal device determines, based on the first information, that the first terminal device is a receiver of data sent by the second terminal device, where the second terminal device is a transmitter of the third SCI. Herein, that the first terminal device determines, based on the first information, that the first terminal device is a receiver of data sent by a second terminal device may also be understood or replaced with: The first terminal device confirms that the destination identifier indicated by the third SCI is equal to a 16-bit LSB of a destination layer 2 identifier of the first terminal device. If the first terminal device is the receiver of the data sent by the second terminal device, due to a half-duplex limitation, the first terminal device fails to receive the second SCI when sending the first SCI. Therefore, the first terminal device determines that the resources indicated by the first SCI conflict with the resources indicated by the second SCI.

In a possible implementation, the first information further includes a cast type indicated by the third SCI, and the cast type includes broadcast, multicast, or unicast. If the cast type indicated by the third SCI is the broadcast or the multicast, the first terminal device may determine, based on the destination identifier, that the first terminal device is the receiver of the data of the second terminal device. That the cast type indicated by the third SCI herein is the broadcast or the multicast may be understood as: The cast type indicated by the third SCI is the broadcast, or the multicast used when HARQ information is an ACK or a NACK, or the multicast used when HARQ information is only a NACK. Herein, that the first terminal device determines, based on the destination identifier, that the first terminal device is the receiver of the data of the second terminal device may be understood as: The first terminal device determines that the destination identifier indicated by the third SCI is equal to a 16-bit LSB of a destination layer 2 identifier of the first terminal device. If the first terminal device is the receiver of the data sent by the second terminal device, due to a half-duplex limitation, the first terminal device fails to receive the third SCI when sending the first SCI. Therefore, the first terminal device determines that the resources indicated by the first SCI conflict with the resources indicated by the third SCI.

In a possible implementation, the first information further includes a source identifier. The cast type indicated by the third SCI and included in the first information may be the unicast, and the cast type, the destination identifier, and the source identifier are used by the first terminal device to determine that the first terminal device is the receiver of the data sent by the second terminal device. If the cast type indicated by the third SCI is the unicast, the first terminal device may determine, based on the destination identifier and the source identifier, that the first terminal device is the receiver of the data of the second terminal device. That the first terminal device may determine, based on the destination identifier and the source identifier, that the first terminal device is the receiver of the data of the second terminal device may be understood as: The destination identifier indicated by the third SCI is equal to a 16-bit LSB of a source layer 2 identifier (layer 2 source identifier) of the first terminal device, and the source identifier indicated by the third SCI is equal to an 8-bit LSB of a destination layer 2 identifier (layer 2 destination identifier) of the first terminal device. If the first terminal device is the receiver of the data sent by the second terminal device, due to a half-duplex limitation, the first terminal device fails to receive the third SCI when sending the first SCI. Therefore, the first terminal device determines that the resources indicated by the first SCI conflict with the resources indicated by the third SCI.

In a possible implementation, the first information further includes time domain resource indication information, and the time domain resource indication information indicates a resource that overlaps with the resources indicated by the third SCI and that is in the resources indicated by the first SCI. In this way, the first terminal device may further determine the conflict resource based on the time domain resource indication information included in the first information. The conflict resource is a resource that is indicated by the time domain resource indication information and that overlaps with, in time domain, a resource used and/or reserved by the first terminal device.

In a possible implementation, in the resources indicated by the second SCI, a resource that overlaps with the resources indicated by the first SCI is an overlapping resource, and the third SCI is SCI that is in the at least one piece of second SCI and that has a largest quantity of overlapping resources. The first terminal device may determine, based on the first information, whether a conflict occurs on the resources indicated by the first SCI (whether there is a to-be-sent data packet and a to-be-received data packet in a same slot).

In a possible implementation, the third SCI may be SCI that in the at least one piece of second SCI and that indicates a smallest priority value. In this implementation, the first terminal device may not miss receiving of an important data packet (indicated by the smallest priority value).

In a possible implementation, the third SCI may be SCI that is in the at least one piece of second SCI and that indicates a resource reservation periodicity the same as a resource reservation periodicity indicated by the first SCI. To be specific, the resources indicated by the third SCI and the resources indicated by the first SCI continuously overlap in a plurality of resource reservation periodicities (a time domain resource indicated by a time domain resource indication field included in the third SCI overlaps with a time domain resource indicated by a time domain resource indication field included in the first SCI). If the first terminal device needs to receive a data packet sent by the second terminal device, due to the continuous overlapping, the first terminal device may continuously fail to receive the data packet sent by the second terminal device. This implementation can avoid that the first terminal device continuously fails to receive the data packet.

In a possible implementation, the third SCI may be SCI that is in the at least one piece of second SCI and that indicates a periodic reserved resource the same as a periodic reserved resource indicated by the first SCI. The periodic reserved resource indicated by the third SCI continuously conflicts with the periodic reserved resource indicated by the first SCI, and consequently the first terminal device cannot receive a data packet in the periodic reserved resource. This implementation can avoid that the first terminal device fails to receive the data packet in periodic reserved resources. It should be noted that, that the periodic reserved resources continuously conflict with each other may be understood as: At least one of the resources indicated by the time domain resource allocation field in the third SCI and at least one of the resources indicated by the time domain resource allocation field in the first SCI overlap in time domain, and the resource reservation periodicity indicated by the third SCI is the same as the resource reservation periodicity indicated by the first SCI.

In a possible implementation, when a cast type indicated by 2nd-stage SCI of the third SCI is a multicast option 1, the first information further includes a time-frequency resource indicated by the third SCI (that is, a time-frequency resource indicated by the time domain resource allocation field and the frequency domain resource allocation field included in the third SCI). In this case, the third terminal device sends the first information to the first terminal device, so that the first terminal device determines that the resources indicated by the first SCI conflict with the resources indicated by the third SCI. Before feeding back a NACK to the second terminal device, the first terminal device may determine, based on a time-frequency resource indicated by 1st-stage SCI of the third SCI, a location of a PSFCH resource for feeding back the NACK, so that the second terminal device does not retransmit a data packet when another terminal device successfully decodes the data packet. In this case, the first terminal device cannot receive the data packet anymore. It should be noted that, in this case, that the resources indicated by the first SCI overlap with the resources indicated by the third SCI may be understood as: A used resource in the resources indicated by the first SCI and a used resource in the resources indicated by the third SCI overlap in time domain. Herein, the used resource in the resources indicated by the SCI may be understood as a resource used for SCI scheduling, or referred to as the first resource in the resources indicated by the SCI.

In a possible implementation, when the first terminal device determines, based on the first information, that the resources indicated by the first SCI conflict with the resources indicated by the third SCI, if a priority value indicated by the first SCI is greater than a priority value indicated by the third SCI and/or the priority value indicated by the first SCI is greater than a priority threshold, it indicates that data scheduled by the first SCI is not important enough. In this case, the first terminal device receives data in a slot in which a conflict resource is located instead of sending data on the conflict resource. Herein, a resource conflict may be understood as that the first terminal device needs to send and receive data in a same slot, but the first terminal device can only send or receive data due to a half-duplex limitation, and cannot send and receive data at the same time.

In a possible implementation, when the first terminal device determines, based on the first information, that the resources indicated by the first SCI conflict with the resources indicated by the third SCI, if a priority value indicated by the first SCI is less than a priority value indicated by the third SCI and/or the priority value indicated by the first SCI is less than a priority threshold, it indicates that data scheduled by the first SCI is important enough. In this case, the first terminal device sends data on a conflict resource instead of receiving data in a slot in which the conflict resource is located.

According to a seventh aspect, a communication method is provided. The communication method includes: A third terminal device detects first sidelink control information SCI from a first terminal device, where one or more reserved resources indicated by the first SCI overlap with a resource selected by the third terminal device; and the third terminal device sends assistance information to the first terminal device when at least one of the following conditions is met, where the assistance information is used to assist the first terminal device in resource selection: a priority value corresponding to the resource selected by the third terminal device is less than a priority value corresponding to the first SCI; a priority value corresponding to the resource selected by the third terminal device is less than a priority threshold, and a reference signal received power RSRP measurement value corresponding to the first SCI is greater than an RSRP threshold.

According to the communication method provided in this embodiment of this application, when the third terminal device detects that the resources indicated by the first SCI from the first terminal device overlaps with the resource selected by the third terminal device, the third terminal device sends the assistance information to the first terminal device to assist the first terminal device in resource selection when at least one of the following conditions is met: the priority value corresponding to the resource selected by the third terminal device is less than the priority value corresponding to the first SCI; the priority value corresponding to the resource selected by the third terminal device is less than the priority threshold; and the RSRP measurement value corresponding to the first SCI is greater than the RSRP threshold. The first terminal device reselects a resource, so that the third terminal device preempts the resources of the first terminal device when the resources indicated by the first SCI conflict with the resource selected by the third terminal device.

In a possible implementation, the resources indicated by the first SCI include at least one resource used by the first terminal device and at least one resource reserved by the first terminal device, the resources indicated by the second SCI include at least one resource used by the second terminal device and at least one resource reserved by the second terminal device, the first SCI indicates a plurality of resources and the second SCI indicates a plurality of resources, the assistance information is resource conflict indication information, and the resource conflict indication information indicates at least one of the following information: a plurality of resources indicated by the first SCI conflict with a plurality of resources indicated by the second SCI; the at least one resource used by the first terminal device conflicts with the at least one resource used by the second terminal device, or the at least one resource reserved by the first terminal device conflicts with the at least one resource reserved by the second terminal device; and the third terminal device is a receiver of data scheduled by the first SCI. This implementation indicates several possible types used when the assistance information is the resource conflict indication information. The resource conflict indication information may notify an assisted terminal device of a clearer understanding of a specific conflict, so as to perform more accurate and proper processing.

In a possible implementation, content of the resource conflict indication information is indicated by using a frequency domain resource carrying the resource conflict indication information. A plurality of types of resource conflict indication information may be indicated in frequency domain, and it is ensured that the resource conflict indication information does not conflict with a HARQ.

In a possible implementation, content of the resource conflict indication information is indicated by using a cyclic shift code, a root sequence, or an orthogonal cover code associated with the resource conflict indication information. A plurality of types of resource conflict indication information may be indicated in code domain, and it is ensured that the resource conflict indication information does not conflict with a HARQ.

In a possible implementation, that the assistance information is used to assist the first terminal device in resource selection includes: The assistance information indicates an available resource and/or an unavailable resource to the first terminal device. For the available resource and/or the unavailable resource, refer to the foregoing descriptions. Details are not described herein again.

According to an eighth aspect, a communication apparatus is provided. The communication apparatus may be the third terminal device in the method according to the first aspect. The communication apparatus includes: a processing module, configured to detect first sidelink control information SCI from a first terminal device and second SCI from a second terminal device, where one or more resources indicated by the first SCI overlap with one or more resources indicated by the second SCI; and a transceiver module, configured to send assistance information to the first terminal device when at least one of the following conditions is met, where the assistance information is used to assist the first terminal device in resource selection: the first terminal device is a receiver of data scheduled by the second SCI; the second terminal device is a receiver of data scheduled by the first SCI; the communication apparatus is a receiver of data scheduled by the first SCI, and the communication apparatus is a receiver of data scheduled by the second SCI; the communication apparatus is a receiver of data scheduled by the first SCI, and a reference signal received power RSRP measurement value corresponding to the second SCI is greater than a first RSRP threshold; the communication apparatus is a receiver of data scheduled by the first SCI, and a received signal strength indicator RSSI measurement value corresponding to the second SCI is greater than a first RSSI threshold; the communication apparatus is a receiver of data scheduled by the first SCI, and a distance between the communication apparatus and the second terminal device is less than a first distance threshold; the communication apparatus is a receiver of data scheduled by the first SCI, and a channel quality indicator CQI of the second terminal device is greater than a first CQI threshold; the communication apparatus is a receiver of data scheduled by the second SCI, and a reference signal received power RSRP measurement value corresponding to the first SCI is greater than a second RSRP threshold; the communication apparatus is a receiver of data scheduled by the second SCI, and a received signal strength indicator RSSI measurement value corresponding to the first SCI is greater than a second RSSI threshold; the communication apparatus is a receiver of data scheduled by the second SCI, and a distance between the communication apparatus and the first terminal device is less than a second distance threshold; the communication apparatus is a receiver of data scheduled by the second SCI, and a channel quality indicator CQI of the first terminal device is greater than a second CQI threshold; the communication apparatus detects that a hybrid automatic repeat request feedback corresponding to data scheduled by the first SCI is a negative acknowledgment; the communication apparatus does not successfully decode data of the first terminal device; the communication apparatus successfully decodes data of the first terminal device, and an overlapping resource is located in one or more periodic resources indicated by the first SCI; the communication apparatus detects that a hybrid automatic repeat request feedback corresponding to data scheduled by the second SCI is a negative acknowledgment; the communication apparatus does not successfully decode data of the second terminal device; and the communication apparatus successfully decodes data of the second terminal device, and an overlapping resource is located in one or more periodic resources indicated by the second SCI.

In a possible implementation, a priority value indicated by the first SCI is greater than a priority value indicated by the second SCI.

In a possible implementation, the transceiver module sends the assistance information to the first terminal device, the resources indicated by the first SCI include at least one resource used by the first terminal device and at least one resource reserved by the first terminal device, the resources indicated by the second SCI include at least one resource used by the second terminal device and at least one resource reserved by the second terminal device, the assistance information is resource conflict indication information, and the resource conflict indication information indicates at least one of the following information: a plurality of resources indicated by the first SCI conflict with a plurality of resources indicated by the second SCI; the at least one resource used by the first terminal device conflicts with the at least one resource used by the second terminal device, or the at least one resource reserved by the first terminal device conflicts with the at least one resource reserved by the second terminal device; and the communication apparatus is the receiver of the data scheduled by the first SCI.

In a possible implementation, that the assistance information is used to assist the first terminal device in resource selection includes: The assistance information indicates an available resource and/or an unavailable resource to the first terminal device.

In a possible implementation, the transceiver module is configured to: when the communication apparatus successfully decodes the data of the first terminal device, and the overlapping resource is the periodic resource indicated by the first SCI, send the assistance information to the first terminal device, where the assistance information indicates that a conflict occurs on the periodic resource indicated by the first SCI.

In a possible implementation, the transceiver module is further configured to send the assistance information to the second terminal device, where the assistance information is further used to assist the second terminal device in resource selection.

In a possible implementation, the transceiver module sends the assistance information to the second terminal device, the resources indicated by the first SCI include at least one resource used by the first terminal device and at least one resource reserved by the first terminal device, the resources indicated by the second SCI include at least one resource used by the second terminal device and at least one resource reserved by the second terminal device, the assistance information is resource conflict indication information, and the resource conflict indication information indicates at least one of the following information: a plurality of resources indicated by the first SCI conflict with a plurality of resources indicated by the second SCI; the at least one resource used by the first terminal device conflicts with the at least one resource used by the second terminal device, or the at least one resource reserved by the first terminal device conflicts with the at least one resource reserved by the second terminal device; and the communication apparatus is the receiver of the data scheduled by the second SCI.

In a possible implementation, that the assistance information is further used to assist the second terminal device in resource selection includes: The assistance information further indicates an available resource and/or an unavailable resource to the second terminal device.

In a possible implementation, content of the resource conflict indication information is indicated by using a frequency domain resource carrying the resource conflict indication information.

In a possible implementation, content of the resource conflict indication information is indicated by using a cyclic shift code, a root sequence, or an orthogonal cover code associated with the resource conflict indication information.

According to a ninth aspect, a communication apparatus is provided. The communication apparatus may be the first terminal device in the method according to the second aspect. The communication apparatus includes: a transceiver module, configured to send first sidelink control information SCI, where one or more resources indicated by the first SCI overlap with one or more resources indicated by second SCI of a second terminal device, where the transceiver module is further configured to receive assistance information, where the assistance information is used to assist the communication apparatus in resource selection; and a processing module, configured to select a resource based on the assistance information. The resources indicated by the first SCI include at least one resource used by the communication apparatus and at least one resource reserved by the communication apparatus. The resources indicated by the second SCI include at least one resource used by the second terminal device and at least one resource reserved by the second terminal device. The assistance information is resource conflict indication information, and the resource conflict indication information indicates at least one of the following information: A plurality of resources indicated by the first SCI conflict with a plurality of resources indicated by the second SCI; the at least one resource used by the communication apparatus conflicts with the at least one resource used by the second terminal device, or the at least one resource reserved by the communication apparatus conflicts with the at least one resource reserved by the second terminal device; and a transmitter of the resource conflict indication information is a receiver of data scheduled by the first SCI.

In a possible implementation, content of the resource conflict indication information is indicated by using a frequency domain resource carrying the resource conflict indication information.

In a possible implementation, content of the resource conflict indication information is indicated by using a cyclic shift code, a root sequence, or an orthogonal cover code associated with the resource conflict indication information.

According to a tenth aspect, a communication apparatus is provided. The communication apparatus may be the third terminal device in the method according to the third aspect. The communication apparatus includes: a processing module, configured to detect first sidelink control information SCI from a first terminal device and second SCI from a second terminal device, where one or more resources indicated by the first SCI overlap with one or more resources indicated by the second SCI; and a transceiver module, configured to send first information to the first terminal device, where the first information includes a destination identifier indicated by the second SCI, the first information is used by the first terminal device to determine that the resources indicated by the first SCI conflict with the resources indicated by the second SCI, and a cast type includes broadcast, multicast, or unicast.

In a possible implementation, a priority value indicated by the first SCI is higher than a priority value indicated by the second SCI.

In a possible implementation, the first information further includes a cast type indicated by the second SCI, and the cast type includes broadcast, multicast, or unicast.

In a possible implementation, the first information further includes a source identifier indicated by the second SCI, and the cast type indicates the unicast.

In a possible implementation, the first information further includes time domain resource indication information, and the time domain resource indication information indicates a resource that conflicts with the resources indicated by the second SCI and that is in the resources indicated by the first SCI.

According to an eleventh aspect, a communication apparatus is provided. The communication apparatus may be the first terminal device in the method according to the fourth aspect. The communication apparatus includes: a transceiver module, configured to send first sidelink control information SCI, where one or more resources indicated by the first SCI overlap with one or more resources indicated by second SCI of a second terminal device, where the transceiver module is further configured to receive first information, where the first information includes a destination identifier indicated by the second SCI, and the first information is used by the communication apparatus to determine that the resources indicated by the first SCI conflict with the resources indicated by the second SCI.

In a possible implementation, that the first information is used by the communication apparatus to determine that the resources indicated by the first SCI conflict with the resources indicated by the second SCI includes: The first information is used by the communication apparatus to determine that the communication apparatus is a receiver of data sent by the second terminal device.

In a possible implementation, the first information further includes a cast type indicated by the second SCI, and the cast type includes broadcast, multicast, or unicast.

In a possible implementation, the first information further includes a source identifier, the cast type indicates the unicast, and the cast type, the destination identifier, and the source identifier are used by the communication apparatus to determine that the communication apparatus is the receiver of the data sent by the second terminal device.

In a possible implementation, the first information further includes time domain resource indication information, and the time domain resource indication information indicates a resource that conflicts with the resources indicated by the second SCI and that is in the resources indicated by the first SCI.

According to a twelfth aspect, a communication apparatus is provided. The communication apparatus may be the third terminal device in the method according to the fifth aspect. The communication apparatus includes: a processing module, configured to detect first sidelink control information SCI and at least one piece of second SCI, where one or more resources indicated by the first SCI overlap with one or more resources indicated by the second SCI, and the first SCI is from a first terminal device; and a transceiver module, configured to send first information to the first terminal device, where the first information includes a destination identifier indicated by third SCI, the first information is used by the first terminal device to determine that the resources indicated by the first SCI conflict with one or more resources indicated by the third SCI, and the third SCI is one or more pieces of SCI in the at least one piece of second SCI.

In a possible implementation, the first information further includes a cast type indicated by the third SCI, and the cast type includes broadcast, multicast, or unicast.

In a possible implementation, the first information further includes a source identifier indicated by the third SCI.

In a possible implementation, a priority value indicated by the first SCI is greater than a priority value indicated by the third SCI.

In a possible implementation, the first information further includes time domain resource indication information, and the time domain resource indication information indicates a resource that conflicts with the resources indicated by the third SCI and that is in the resources indicated by the first SCI.

In a possible implementation, in the resources indicated by the second SCI, a resource that overlaps with the resources indicated by the first SCI is an overlapping resource, and the third SCI is SCI that is in the at least one piece of second SCI and that has a largest quantity of overlapping resources.

In a possible implementation, the third SCI is SCI that in the at least one piece of second SCI and that indicates a smallest priority value.

In a possible implementation, the third SCI is SCI that is in the at least one piece of second SCI and that indicates a resource reservation periodicity the same as a resource reservation periodicity indicated by the first SCI.

In a possible implementation, the third SCI is SCI that is in the at least one piece of second SCI and that indicates a periodic reserved resource the same as a periodic reserved resource indicated by the first SCI.

In a possible implementation, when the cast type indicated by the third SCI is a multicast option 1, the first information further includes a time-frequency resource indicated by the third SCI.

According to a thirteenth aspect, a communication apparatus is provided. The communication apparatus may be the first terminal device in the method according to the sixth aspect. The communication apparatus includes: a transceiver module, configured to receive first information, where the first information includes a destination identifier indicated by third sidelink control information SCI, the third SCI is one or more pieces of SCI in at least one piece of second SCI, one or more resources indicated by the second SCI overlap with one or more resources indicated by first SCI, and the first SCI is SCI sent by the communication apparatus; and a processing module, configured to determine, based on the first information, that the resources indicated by the first SCI conflict with one or more resources indicated by the third SCI.

In a possible implementation, the processing module is specifically configured to determine, based on the first information, that the communication apparatus is a receiver of data sent by a second terminal device, where the second terminal device is a transmitter of the third SCI.

In a possible implementation, the first information further includes a cast type indicated by the third SCI, and the cast type includes broadcast, multicast, or unicast.

In a possible implementation, the first information further includes a source identifier.

In a possible implementation, the first information further includes time domain resource indication information, and the time domain resource indication information indicates a resource that overlaps with the resources indicated by the third SCI and that is in the resources indicated by the first SCI.

In a possible implementation, in the resources indicated by the second SCI, a resource that overlaps with the resources indicated by the first SCI is an overlapping resource, and the third SCI is SCI that is in the at least one piece of second SCI and that has a largest quantity of overlapping resources.

In a possible implementation, the third SCI is SCI that in the at least one piece of second SCI and that indicates a smallest priority value.

In a possible implementation, the third SCI is SCI that is in the at least one piece of second SCI and that indicates a resource reservation periodicity the same as a resource reservation periodicity indicated by the first SCI.

In a possible implementation, the third SCI is SCI that is in the at least one piece of second SCI and that indicates a periodic reserved resource the same as a periodic reserved resource indicated by the first SCI.

In a possible implementation, when a cast type indicated by 2nd-stage SCI of the third SCI is a multicast option 1, the first information further includes a time-frequency resource indicated by the third SCI.

In a possible implementation, when the communication apparatus determines, based on the first information, that the resources indicated by the first SCI conflict with the resources indicated by the third SCI, if a priority value indicated by the first SCI is greater than a priority value indicated by the third SCI and/or the priority value indicated by the first SCI is greater than a priority threshold, the transceiver module receives data in a slot in which a conflict resource is located.

In a possible implementation, when the communication apparatus determines, based on the first information, that the resources indicated by the first SCI conflict with the resources indicated by the third SCI, if a priority value indicated by the first SCI is less than a priority value indicated by the third SCI and/or the priority value indicated by the first SCI is less than a priority threshold, the transceiver module sends data on a conflict resource.

According to a fourteenth aspect, a communication apparatus is provided. The communication apparatus may be the third terminal device in the method according to the fifth aspect. The communication apparatus includes: a processing module, configured to detect first sidelink control information SCI from a first terminal device, where a reserved resource indicated by the first SCI overlaps with a resource selected by a third terminal device; and a transceiver module, configured to send assistance information to the first terminal device when at least one of the following conditions is met, where the assistance information is used to assist the first terminal device in resource selection: a priority value corresponding to the resource selected by the third terminal device is less than a priority value corresponding to the first SCI; a priority value corresponding to the resource selected by the third terminal device is less than a priority threshold; and a reference signal received power RSRP measurement value corresponding to the first SCI is greater than an RSRP threshold.

In a possible implementation, the resources indicated by the first SCI include at least one resource used by the first terminal device and at least one resource reserved by the first terminal device, the resources indicated by the second SCI include at least one resource used by the second terminal device and at least one resource reserved by the second terminal device, the first SCI indicates a plurality of resources and the second SCI indicates a plurality of resources, the assistance information is resource conflict indication information, and the resource conflict indication information indicates at least one of the following information: a plurality of resources indicated by the first SCI conflict with a plurality of resources indicated by the second SCI; the at least one resource used by the first terminal device conflicts with the at least one resource used by the second terminal device, or the at least one resource reserved by the first terminal device conflicts with the at least one resource reserved by the second terminal device; and the communication

14

apparatus is a receiver of data scheduled by the first SCI.

In a possible implementation, content of the resource conflict indication information is indicated by using a frequency domain resource carrying the resource conflict indication information.

In a possible implementation, content of the resource conflict indication information is indicated by using a cyclic shift code, a root sequence, or an orthogonal cover code associated with the resource conflict indication information.

In a possible implementation, that the assistance information is used to assist the first terminal device in resource selection includes: The assistance information indicates an available resource and/or an unavailable resource to the first terminal device.

According to a fifteenth aspect, a communication apparatus is provided. The communication apparatus includes a processor and a memory. The memory stores a program run on the processor. When executing the program, the processor implements the method according to any one of the first aspect and the implementations of the first aspect.

According to a sixteenth aspect, a communication apparatus is provided. The communication apparatus includes a processor and a memory. The memory stores a program run on the processor. When executing the program, the processor implements the method according to any one of the second aspect and the implementations of the second aspect.

According to a seventeenth aspect, a communication apparatus is provided. The communication apparatus includes a processor and a memory. The memory stores a program run on the processor. When executing the program, the processor implements the method according to any one of the third aspect and the implementations of the third aspect.

According to an eighteenth aspect, a communication apparatus is provided. The communication apparatus includes a processor and a memory. The memory stores a program run on the processor. When executing the program, the processor implements the method according to any one of the fourth aspect and the implementations of the fourth aspect.

According to a nineteenth aspect, a communication apparatus is provided. The communication apparatus includes a processor and a memory. The memory stores a program run on the processor. When executing the program, the processor implements the method according to any one of the fifth aspect and the implementations of the fifth aspect.

According to a twentieth aspect, a communication apparatus is provided. The communication apparatus includes a processor and a memory. The memory stores a program run on the processor. When executing the program, the processor implements the method according to any one of the sixth aspect and the implementations of the sixth aspect.

According to a twenty-first aspect, a communication apparatus is provided. The communication apparatus includes a processor and a memory. The memory stores a program run on the processor. When executing the program, the processor implements the method according to any one of the fifth aspect and the implementations of the fifth aspect.

According to a twenty-second aspect, a communication apparatus is provided. The communication apparatus includes a processor and an interface circuit. The interface circuit is configured to receive code instructions and transmit the code instructions to the processor. The processor is configured to run the code instructions to perform the method according to any one of the first aspect and the implementations of the first aspect.

According to a twenty-third aspect, a communication apparatus is provided. The communication apparatus includes a processor and an interface circuit. The interface circuit is configured to receive code instructions and transmit the code instructions to the processor. The processor is configured to run the code instructions to perform the method according to any one of the second aspect and the implementations of the second aspect.

According to a twenty-fourth aspect, a communication apparatus is provided. The communication apparatus includes a processor and an interface circuit. The interface circuit is configured to receive code instructions and transmit the code instructions to the processor. The processor is configured to run the code instructions to perform the method according to any one of the third aspect and the implementations of the third aspect.

According to a twenty-fifth aspect, a communication apparatus is provided. The communication apparatus includes a processor and an interface circuit. The interface circuit is configured to receive code instructions and transmit the code instructions to the processor. The processor is configured to run the code instructions to perform the method according to any one of the fourth aspect and the implementations of the fourth aspect.

According to a twenty-sixth aspect, a communication apparatus is provided. The communication apparatus includes a processor and an interface circuit. The interface circuit is configured to receive code instructions and transmit the code instructions to the processor. The processor is configured to run the code instructions to perform the method according to any one of the fifth aspect and the implementations of the fifth aspect.

According to a twenty-seventh aspect, a communication apparatus is provided. The communication apparatus includes a processor and an interface circuit. The interface circuit is configured to receive code instructions and transmit the code instructions to the processor. The processor is configured to run the code instructions to perform the method according to any one of the sixth aspect and the implementations of the sixth aspect.

According to a twenty-eighth aspect, a communication apparatus is provided. The communication apparatus includes a processor and an interface circuit. The interface circuit is configured to receive code instructions and transmit the code instructions to the processor. The processor is configured to run the code instructions to perform the method according to any one of the fifth aspect and the implementations of the fifth aspect.

According to a twenty-ninth aspect, a computer-readable storage medium is provided. The computer-readable storage medium stores instructions, and the instructions are run on a communication apparatus, to enable the communication apparatus to perform the methods according to the first aspect to the seventh aspect.

According to a thirtieth aspect, a computer program product including instructions is provided. The instructions are run on a communication apparatus, to enable the communication apparatus to perform the methods according to the first aspect to the seventh aspect.

According to a thirty-first aspect, a communication system is provided. The communication system includes the communication apparatus according to the eighth aspect and the communication apparatus according to the ninth aspect, includes the communication apparatus according to the tenth aspect and the communication apparatus according to the eleventh aspect, includes the communication apparatus according to the twelfth aspect and the communication apparatus according to the thirteenth aspect, includes the communication apparatus according to the fourteenth aspect and the communication apparatus according to the ninth aspect, includes the communication apparatus according to the fifteenth aspect and the communication apparatus according to the sixteenth aspect, includes the communication apparatus according to the seventeenth aspect and the communication apparatus according to the eighteenth aspect, includes the communication apparatus according to the nineteenth aspect and the communication apparatus according to the twentieth aspect, includes the communication apparatus according to the twenty-first aspect and the communication apparatus according to the sixteenth aspect, includes the communication apparatus according to the twenty-second aspect and the communication apparatus according to the twenty-third aspect, includes the communication apparatus according to the twenty-fourth aspect and the communication apparatus according to the twenty-fifth aspect, includes the communication apparatus according to the twenty-sixth aspect and the communication apparatus according to the twenty-seventh aspect, or includes the communication apparatus according to the twenty-eighth aspect and the communication apparatus according to the twenty-third aspect.

For technical effects brought by the eighth aspect to the thirty-first aspect, refer to the technical effects brought by different implementations of the first aspect to the seventh aspect. Details are not described herein again.

**BRIEF DESCRIPTION OF DRAWINGS**

FIG. 1 is a schematic diagram of an architecture of a communication system according to an embodiment of this application;
FIG. 2 is a schematic diagram of how a terminal device performs resource allocation mode 2 according to an embodiment of this application;
FIG. 3 is a schematic diagram of how a terminal device transmits data by using a resource indicated by SCI according to an embodiment of this application;
FIG. 4 is a schematic diagram of a resource occupied by a HARQ according to an embodiment of this application;
FIG. 5 is a schematic diagram of two terminal devices that are hidden nodes of each other according to an embodiment of this application;
FIG. 6 is a schematic diagram of half-duplex communication between two terminal devices according to an embodiment of this application;
FIG. 7 is a schematic diagram of a time relationship between a resource conflict and assistance information sending according to an embodiment of this application;
FIG. 8A is a schematic flowchart 1 of a communication method according to an embodiment of this application;
FIG. 8B is a schematic diagram 1 in which resources indicated by first SCI overlap with resources indicated by second SCI according to an embodiment of this application;
FIG. 8C is a schematic diagram 2 in which resources indicated by first SCI overlap with resources indicated by second SCI according to an embodiment of this application;
FIG. 8D is a schematic diagram 3 in which resources indicated by first SCI overlap with resources indicated by second SCI according to an embodiment of this application;
FIG. 8E is a schematic diagram 4 in which resources indicated by first SCI overlap with resources indicated by second SCI according to an embodiment of this application;
FIG. 9 is a schematic diagram of resources occupied by a HARQ and assistance information according to an embodiment of this application;
FIG. 10A is a schematic flowchart 2 of a communication method according to an embodiment of this application;
FIG. 10B is a schematic flowchart 3 of a communication method according to an embodiment of this application;
FIG. 10C is a schematic diagram of a resource conflict according to an embodiment of this application;
FIG. 11 is a schematic flowchart 4 of a communication method according to an embodiment of this application;

FIG. 12 is a schematic diagram of a structure of a communication apparatus according to an embodiment of this application;

FIG. 13 is a schematic diagram of a structure of another communication apparatus according to an embodiment of this application; and

FIG. 14 is a schematic diagram of a structure of still another communication apparatus according to an embodiment of this application.

## DESCRIPTION OF EMBODIMENTS

Terms such as "component", "module", and "system" used in this application are used to indicate computer-related entities. The computer-related entities may be hardware, firmware, combinations of hardware and software, software, or software in running. For example, a component may be, but is not limited to, a process that is run on a processor, a processor, an object, an executable file, a thread of execution, a program, and/or a computer. As an example, both a computing device and an application that runs on the computing device may be components. One or more components may reside within a process and/or a thread of execution, and a component may be located on one computer and/or distributed between two or more computers. In addition, these components may be executed from various computer-readable media that have various data structures. These components may communicate by using a local and/or remote process and according to, for example, a signal having one or more data packets (for example, data from one component, where the component interacts with another component in a local system or a distributed system, and/or interacts with other systems via a network such as the Internet by using a signal).

Embodiments of this application are described by using a scenario of a 5th generation (5th generation, 5G) network in a wireless communication network. It should be noted that the solutions in embodiments of this application may be further applied to another wireless communication network, and a corresponding name may also be replaced with a name of a corresponding function in the another wireless communication network.

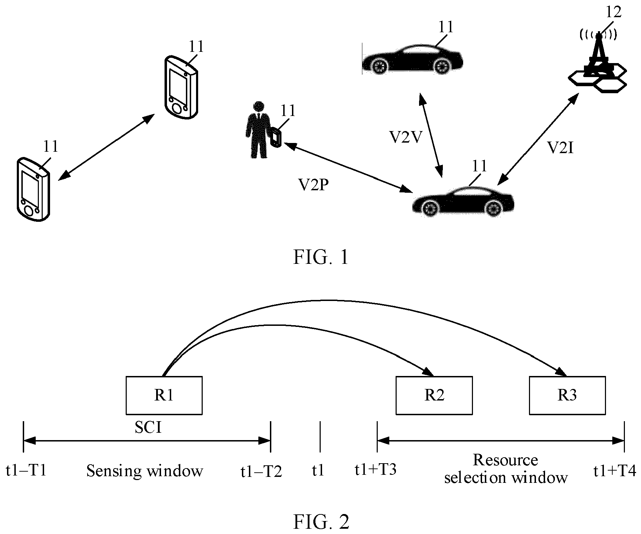

As shown in FIG. 1, embodiments of this application provide a communication system, including terminal devices 11 and a network device 12. The terminal devices 11 may communicate with each other. In this case, a link between the terminal devices 11 is a sidelink (sidelink, SL). The terminal device 11 may communicate with the network device 12. In this case, a link between the terminal device 11 and the network device 12 includes an uplink (uplink) and a downlink (downlink).

For example, when the communication system is applied to a vehicle to X (vehicle to X, V2X) scenario, the communication system may include vehicle to vehicle (vehicle to vehicle, V2V) communication (that is, communication between a terminal device and a terminal device), vehicle to pedestrian (vehicle to pedestrian, V2P) communication (that is, communication between a terminal device and a terminal device), and vehicle to infrastructure (vehicle to infrastructure, V2I) communication (that is, communication between a terminal device and a network device). For example, a vehicle-mounted terminal device may keep a connection to the network device to obtain some configuration information, or may keep a connection to another vehicle-mounted terminal device to implement vehicle-mounted communication.

In embodiments of this application, the network device may be a base station, or may be referred to as a wireless access point, a transceiver station, a relay station, a cell, a transmission reception station, an evolved NodeB eNodeB, a next-generation NodeB gNB, a road side unit (road site unit, RSU), or the like. This is not limited in this application.

In this embodiment of this application, the terminal device may be a device that includes a wireless transceiver function and that can provide a communication service for a user. Specifically, the terminal device may be a device in a V2X system, a device in a D2D system, or a device in an MTC system, for example, an industrial robot, an industrial automation device, an access terminal, a subscriber unit, a subscriber station, a mobile station, a remote station, a remote terminal, a mobile device, a user terminal, a terminal, a wireless terminal device, a mobile terminal MS, a CPE, a vehicle-mounted terminal, a user agent or a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function or another processing device connected to a wireless modem, a vehicle-mounted device, a wearable device, user equipment (user equipment, UE), a mobile station (mobile station, MS), a mobile terminal (mobile terminal, MT), a mobile phone (mobile phone), a tablet computer, a notebook computer, a palmtop computer, a mobile Internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in smart home (smart home), and a road side site unit (road site unit, RSU). Alternatively, the terminal device may be a terminal device in a 5G network, a network after 5G, a terminal device in a future evolved public land mobile network (public land mobile network, PLMN) network, or the like. This is not limited in this application.

When the terminal device communicates with the network device or another terminal device by using a resource, a resource allocation mode 1 (Mode 1 resource allocation) or a resource allocation mode 2 (Mode 2 resource allocation) may be used. The resource allocation mode 1 means that the network device allocates a resource for data transmission to terminal devices, and the resource is used for communication between the terminal devices in coverage of the network device. The resource allocation mode 2 means that the terminal device can independently determine the resource for data transmission. This application focuses on resource allocation mode 2.

A core idea of the resource allocation mode 2 is as follows: In a resource pool, a terminal device determines a resource set used for a physical sidelink control channel (physical sidelink control channel, PSCCH) and a physical sidelink shared channel (physical sidelink shared channel, PSSCH) by detecting sidelink control information (sidelink control information, SCI) and measuring reference signal received power (reference signal received power, RSRP).

The SCI includes 1st-stage SCI and 2nd-stage SCI. The 1st-stage SCI includes indication information of a resource and is carried on a PSCCH channel. The 2nd-stage SCI is carried on a PSSCH channel.

Specifically, the 1st-stage SCI includes the following fields:

Priority field: Indicates a priority of data scheduled by SCI. A higher value indicates a lower priority. The priority field occupies three bits.

Frequency domain resource allocation field: Indicates frequency domain information of a resource. A length of the field varies with a maximum quantity of resources and a quantity of subchannels that can be indicated. The maximum quantity of resources is a maximum value of a quantity of resources reserved for each transport block (transport block, TB) at a time. The maximum value may be 2 or 3, and may be a preconfigured value or configured by a base station.

The transport block herein is data carried on the PSSCH. Generally, one TB may be transmitted on one PSSCH. When spatial multiplexing is supported, two TBs can be transmitted on one PSSCH. In the present invention, one TB is transmitted on one PSSCH by default.

Time domain resource allocation field: Indicates time domain information of a resource. If a maximum quantity reserved for each TB is 2, the time domain resource allocation field occupies five bits. If a maximum quantity reserved for each TB is 3, the time domain resource allocation field occupies nine bits.

Resource reservation periodicity field: Indicate a periodicity length of same resources reserved for another TB, and occupies zero to four bits.

With reference to the frequency domain resource allocation field and the time domain resource allocation field, resources used and reserved for a current TB of the terminal device may be indicated. The first resource in the resources indicated by the frequency domain resource allocation field and the time domain resource allocation field is a resource used for the current TB of the terminal device, and a non-first resource (the second resource and the third resource, if the maximum quantity of resources reserved for each TB is 3) is a resource reserved for the current TB of the terminal device. The resource reserved for the current TB is used for retransmission. If the terminal device does not perform retransmission, the resource reserved for the current TB is not used.

In addition, a resource reserved by the terminal device for another TB may be further obtained with reference to the resource used and reserved for the current TB of the terminal device and the resource reservation periodicity. This will be described in detail below.

In conclusion, the resource used by the terminal device is the resource used for the current TB of the terminal device, and the resource reserved by the terminal device includes the resource reserved by the terminal device for the current TB and the resource reserved by the terminal device for the another TB.

2nd-stage SCI format field: Indicates a format used by the 2nd-stage SCI, and occupies two bits.

Specifically, the 2nd-stage SCI includes the following fields:

Destination identifier (destination ID) (16 bits) field and source identifier (source ID) (eight bits) field: The destination identifier (destination ID) field indicates a destination of receiving data, and the source identifier (source ID) field indicates a source of sending data. A destination identifier (destination ID) and a source identifier (source ID) may be understood as layer 1 identifiers, and the layer 1 identifiers are intercepted from layer 2 identifiers.

Hybrid automatic repeat request (hybrid automatic repeat request, HARQ) feedback enable/disable field: Indicates whether to enable a HARQ, and occupies one bit.

Cast type indication field: Indicates that a cast type (Cast type) is unicast (Unicast), a multicast option 1, a multicast option 2, or broadcast (Broadcast), as shown in Table 1. The multicast option 1 indicates that a HARQ feedback includes only a HARQ-negative acknowledge (non acknowledge, NACK). The multicast option 2 indicates that a HARQ feedback includes a HARQ-acknowledge (acknowledge, ACK) message or a HARQ-NACK message.

**Table 1**

| Value of the cast type indication field | Cast type |
|---|---|
| 00 | Broadcast |

(continued)

| Value of the cast type indication field | Cast type |
|---|---|
| 01 | Multicast option 2 |
| 10 | Unicast |
| 11 | Multicast option 1 |

The following describes, with reference to FIG. 2, how the terminal device performs the resource allocation mode 2.

It is assumed that a terminal device A sends SCI, and the SCI indicates three resources R1, R2, and R3. A terminal device B is triggered to select a resource at a moment t1.

The terminal device B determines a sensing window [t1-T1, t1-T2] and a resource selection window [t1+T3, t1+T4] based on the moment t1, and selects candidate resources in the resource selection window based on SCI and an RSRP measurement result that are sensed in the sensing window [t1-T1, t1-T2]. Initial candidate resources include all resources in the resource selection window [t1+T3, t1+T4]. If one or more resources indicated by the SCI of the terminal device A overlap with the candidate resources of the terminal device B, and the RSRP measurement value corresponding to the SCI is greater than a threshold, the terminal device B excludes an overlapping resource from the candidate resources, and reports the determined remaining candidate resources to a higher layer of the terminal device.

It should be noted that the threshold in this application may be preconfigured, or configured by the network device.

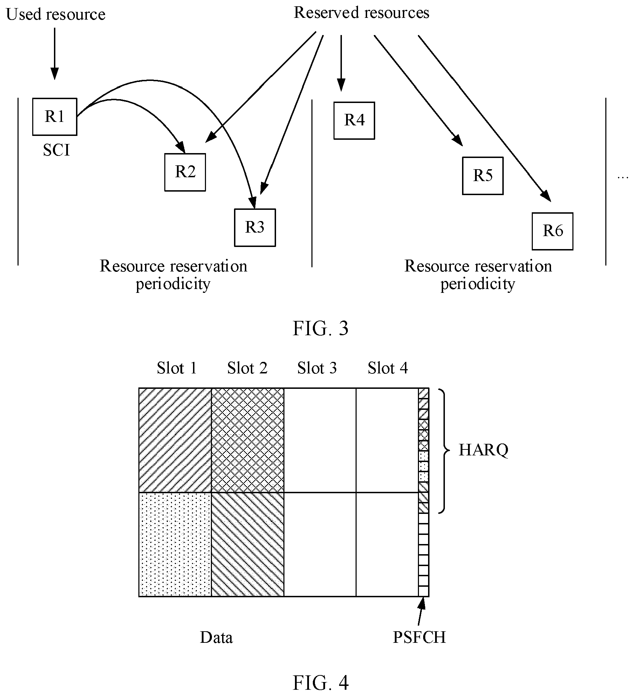

With reference to FIG. 3, the following describes how the terminal device transmits data by using the resources indicated by the SCI.

As shown in FIG. 3, it is assumed that the SCI sent by the terminal device A indicates resources R1, R2, and R3 used and reserved by the terminal device for a current TB. The resource R1 is a resource used by the current TB of the terminal device, and the resources R2 and R3 are resources reserved by the terminal device for the current TB. The terminal device B may obtain, with reference to the resources used and reserved for the current TB and a resource reservation periodicity P1 that are indicated by the SCI, resources (which may also be referred to as periodic resources) reserved for another TB, for example, resources R4, R5, and R6 of the next TB. Relative locations and a quantity of the reserved resources of the another TB in a periodicity are the same as those of the resources used and reserved for the current TB in a current period. R4 is obtained based on R1 and P1, R5 is obtained based on R2 and P1, and R6 is obtained based on R3 and P1.

For the current TB, the terminal device A first transmits data on the resource R1. If the terminal device A receives a HARQ-ACK message, the terminal device A does not retransmit the data. In this case, the terminal device A no longer uses the resource R2 or R3, but transmits new data on the resource R4 of the next TB. If the terminal device A receives a HARQ-NACK message after transmitting data on the resource R1, the terminal device A retransmits the data on the resource R2 of the current TB. If the terminal device A still receives the HARQ-NACK message, the terminal device A retransmits the data again on the resource R3 of the current TB. A process in which the terminal device A transmits new data in the next TB is similar to this process. Therefore, the resources R2 and R3 may be referred to as retransmission resources reserved for the current TB, the resources R5 and R6 may be referred to as retransmission resources reserved for the next TB, and so on.

With reference to FIG. 4, the following describes resources occupied by a HARQ.

HARQ is a technology that combines forward error correction (forward error correction, FEC) coding and automatic repeat request (automatic repeat request, ARQ). A receive end decodes received data by using the FEC. If the receive end fails to decode the data, the receive end sends a HARQ-NACK message to a transmit end to request the transmit end to retransmit the data. If the receive end successfully decodes the data, the receive end may send a HARQ-ACK message (corresponding to the multicast option 2) to the transmit end, or may not send a HARQ-ACK message (corresponding to the multicast option 1).

The HARQ-ACK message and the HARQ-NACK message are carried on a physical sidelink feedback channel (physical sidelink feedback channel, PSFCH). A PSFCH resource is periodically configured in a resource pool, and a configuration periodicity may be 0, 1, 2, or 4. If the periodicity is 0, it indicates the HARQ is disabled. If the periodicity is 1, 2, or 4, it indicates the HARQ is enabled.

When the periodicity is 1, 2, or 4, the receive end determines, based on an indication of the HARQ feedback enable/disable field in the 2nd-stage SCI, whether to feed back a HARQ.

As shown in FIG. 4, the configuration periodicity of the PSFCH resource is 4, that is, the PSFCH resource is configured in one of every four slots. A minimum value of a time gap from receiving data to sending a HARQ feedback by the receive end is 2 or 3. A specific value is preconfigured, or configured by the network device. It is assumed that the minimum value of the time gap is 2, and the receive end receives data in a slot 1. In this case, the receive end sends the HARQ feedback in the first slot (namely, a slot 4) in which the PSFCH resource exists after a slot 3 (1+2). There is an implicit association relationship between a resource for transmitting a HARQ and a resource for transmitting data corresponding to the HARQ. For example, same patterns in FIG. 4 indicate data and corresponding PSFCH resources.

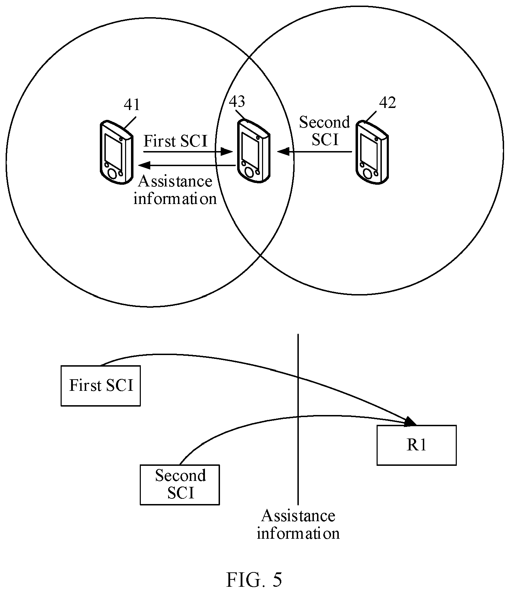

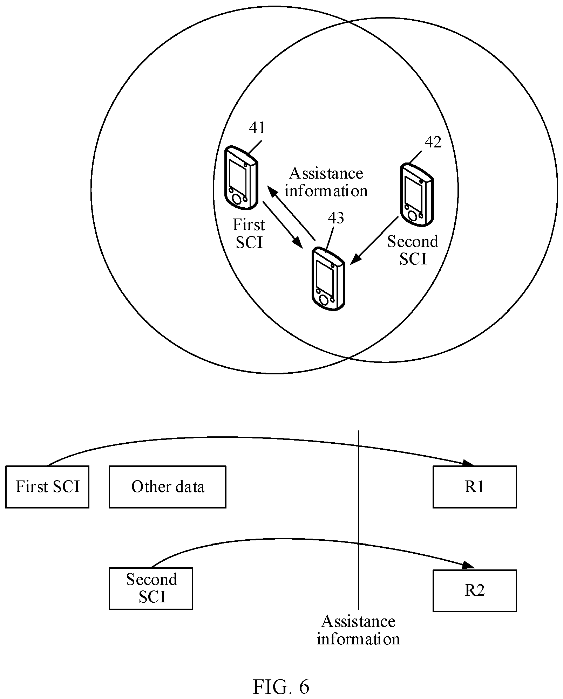

The following describes, with reference to FIG. 5 and FIG. 6, several cases of resource conflicts that exist when a terminal device communicates with another terminal device.

In a possible implementation, as shown in FIG. 5, a first terminal device 41 may directly communicate with a third terminal device 43, and the third terminal device 43 may directly communicate with a second terminal device 42. However, the first terminal device 41 and the second terminal device 42 cannot directly communicate with each other. In this case, the first terminal device 41 and the second terminal device 42 are invisible hidden nodes of each other. In this case, resource selection performed by the first terminal device 41 and resource selection performed by the second terminal device 42 are independent of each other. That is, during resource selection, a terminal device does not consider a resource selected by another terminal device. In this case, one or more resources indicated by first SCI sent by the first terminal device 41 and one or more resources indicated by second SCI sent by the second terminal device 42 overlap in time and frequency. This may cause a conflict. Consequently, when the first terminal device 41 and the second terminal device 42 transmit data on a conflict resource, mutual interference is high, and the third terminal device 43 may fail to receive the data.

In another possible implementation, as shown in FIG. 6, the first terminal device 41, the second terminal device 42, and the third terminal device 43 may directly communicate with each other. However, due to a half-duplex problem of a terminal device (that is, the terminal device can only send or receive data at a moment), since the first terminal device 41 and the second terminal device 42 may send data at a same moment, for example, the first terminal device 41 sends the first SCI and corresponding data, and the second terminal device 42 sends the second SCI at the same time when the first terminal device 41 sends the data, the first terminal device 41 cannot receive the second SCI of the second terminal device 42, and cannot learn of a resource for transmitting the data by the second terminal device 42. However, the resources indicated by the first SCI and the resources indicated by the second SCI overlap in time domain, and a conflict may be caused, but the first terminal device 41 does not perform resource reselection or re-evaluation due to the resources indicated by the second SCI. In this case, when the first terminal device 41 and the second terminal device 42 transmit the data on the conflict resource, mutual interference is high, and data may fail to be received.

It should be noted that the resource conflict in embodiments of this application may be a past resource conflict or a future resource conflict, or may be at least one resource conflict or a persistent resource conflict. The past resource conflict herein may be understood as a resource conflict that occurs before assistance information is sent. The future resource conflict may be understood as a resource conflict that occurs after the assistance information is sent. The at least one resource conflict may be understood as that a conflict occurs on at least one of resources indicated by SCI. The persistent resource conflict may be understood as that a conflict occurs on a plurality of resources in resources indicated by SCI or a periodic resource conflict occurs. As shown in FIG. 2, relative to the moment t1, the resource conflict detected by the terminal device B may be a past resource conflict, for example, a conflict on the resource R1; or the resource conflict detected by the terminal device B may be a future resource conflict, for example, conflicts on the resource R2 and the resource R3.

To resolve the problem of resource conflict that occurs when terminal devices communicate with each other, as shown in FIG. 5 or FIG. 6, the third terminal device 43 may help the first terminal device 41 (or the second terminal device 42) select a resource through inter-UE cooperation (Inter-UE cooperation). The first terminal device 41 (or the second terminal device 42) may be referred to as an assisted terminal device, and the third terminal device 43 may be referred to as an assisting terminal device. For example, the third terminal device 43 may send one piece of assistance information to the first terminal device 41 (or the second terminal device 42). The assistance information indicates that a resource conflict occurs. The first terminal device 41 (or the second terminal device 42) may select a resource with reference to the assistance information. The assistance information may indicate an available resource or an unavailable resource, and the first terminal device 41 (or the second terminal device 42) may select a resource with reference to the available resource or the unavailable resource. The available resource may be understood as a resource that can be used by the first terminal device 41, or may be understood as a resource that can be used by both the first terminal device 41 and the third terminal device 43. The unavailable resource may be understood as a resource that cannot be used by the first terminal device 41, or may be understood as a resource that cannot be used by either the first terminal device 41 or the third terminal device 43. The available resource herein may be understood as a resource selected by the terminal device after the terminal device performs resource selection, or may be considered by the terminal device as a low-interference resource during resource selection. The unavailable resource herein may be understood as a resource that is not selected by the terminal device during resource selection, or may be considered by the terminal device as a high-interference resource during resource selection.

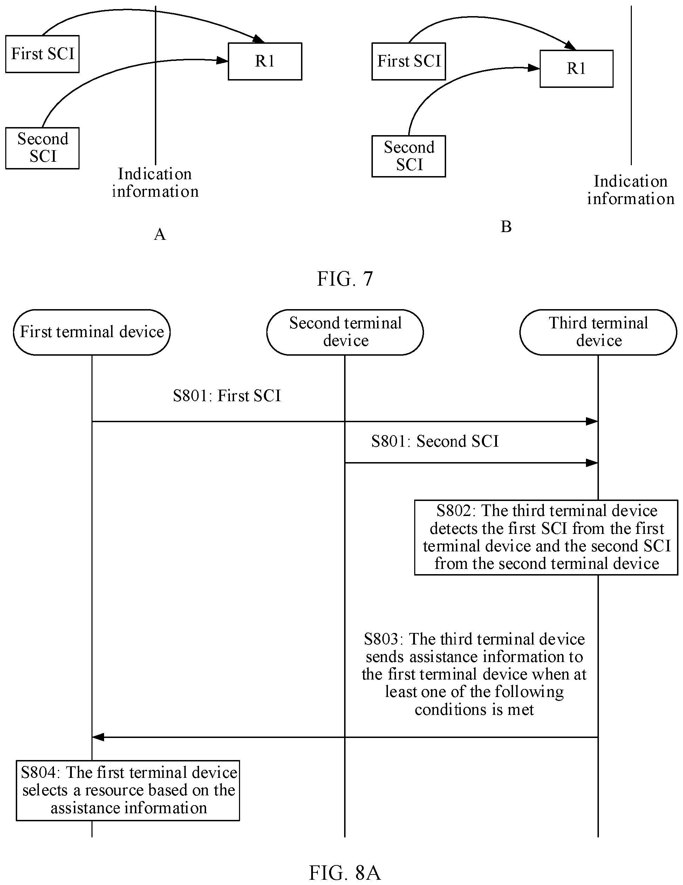

It should be noted that in this embodiment of this application, as shown in FIG. 7, sending the assistance information before a future resource conflict may be referred to as a pre-conflict (Pre-conflict) indication, and sending the assistance information after a resource conflict may be referred to as a post-conflict (Post-conflict) indication.

The assistance information sent by the third terminal device 43 is useless for the first terminal device 41 (or the second terminal device 42), and therefore, it is meaningless for the third terminal device 43 to send the assistance information. Because the third terminal device sends valid assistance information, it is useful for the third terminal device to send the assistance information, and this also helps the assisted terminal device improve data transmission reliability. For example, as shown in FIG. 5 or FIG. 6, the resources indicated by the first SCI overlap with the resources indicated by the second SCI, but a true resource conflict may not occur on the overlapping resource. For example, the resources indicated by the first SCI overlap with the resources indicated by the second SCI, but the second SCI is not sent to the first terminal device. In this case, no impact is caused to the first terminal device, when the first terminal device that schedules the first SCI fails to receive the second SCI. In this case, the resource overlapping is not a true resource conflict. However, if the second SCI is sent to the first terminal device, and the first terminal device cannot receive the second SCI, the resource overlapping is a true resource conflict. For another example, a resource used for data transmission of one terminal device overlaps with a resource used for data transmission of another terminal device, but transmission of the two terminal devices does not interfere with each other. In this case, the resource overlapping does not affect transmission of the two terminal devices. Therefore, resource overlapping is not equivalent to a resource conflict. It is unnecessary for the third terminal device 43 to send the assistance information when the third terminal device detects that resources overlap. Instead, sending the assistance information increases signaling overheads, provides inaccurate information for the first terminal device 41 (or the second terminal device 42), and causes the first terminal device 41 (or the second terminal device 42) to perform unnecessary resource reselection.

In view of this, an embodiment of this application provides a communication method. When detecting that the resources indicated by the first SCI overlap with the resources indicated by the second SCI, and a specific condition is met, the third terminal device sends the assistance information to the first terminal device, to assist the first terminal device in resource selection. The communication method may be applied to a scenario in which the first terminal device and the second terminal device perform half-duplex communication, or a scenario in which the first terminal device and the second terminal device are hidden nodes of each other.

As shown in FIG. 8A, the communication method includes steps S801 to S804.

S801: The first terminal device sends the first SCI, and the second terminal device sends the second SCI.

The first terminal device and the second terminal device may be two terminal devices that are hidden nodes of each other in FIG. 5. Alternatively, the first terminal device and the second terminal device may be two terminal devices that perform half-duplex communication in FIG. 6.

The resources indicated by the first SCI include at least one resource used by the first terminal device and at least one resource reserved by the first terminal device, and the resources indicated by the second SCI include at least one resource used by the second terminal device and at least one resource reserved by the second terminal device. In other words, the first SCI may indicate a plurality of resources, and the second SCI may also indicate a plurality of resources. The resource may be a time-frequency resource.

In this embodiment of this application, resources indicated by SCI not only includes a resource used by a terminal device for a current TB, but also includes a resource (that is, a periodic resource) that is reserved by the terminal device for another TB and that is obtained with reference to the resources used and reserved for the current TB of the terminal device and a resource reservation periodicity. For how the SCI indicates the resources used by the terminal device and reserved by the terminal device, refer to the foregoing descriptions. Details are not described herein again.

S802: A third terminal device detects the first SCI from the first terminal device and the second SCI from the second terminal device.

In this embodiment of this application, the third terminal device is not limited to being a receiver of data of the first terminal device, and the third terminal device is not limited to being a receiver of data of the second terminal device. Related detection may be detection, receiving, blind detection, or the like.

The third terminal device may determine that the resources indicated by the first SCI overlap with the resources indicated by the second SCI.

In this embodiment of this application, that one or more resources indicated by the first SCI overlap with one or more resources indicated by the second SCI may mean that some resources indicated by the first SCI overlap with some resources indicated by the second SCI, may mean that all resources indicated by the first SCI overlap with all resources indicated by the second SCI, may mean that some resources indicated by the first SCI overlap with all resources indicated by the second SCI, may mean that all resources indicated by the first SCI overlap with some resources indicated by the second SCI, may mean that one resource indicated by the first SCI overlaps with one resource indicated by the second SCI, may mean that a plurality of resources indicated by the first SCI overlap with a plurality of resources indicated by the second SCI, may mean that at least one resource that is used by the first terminal device and that is indicated by the first SCI overlaps with at least one resource that is used by the second terminal device and that is indicated by the second SCI, or may mean that at least one resource that is reserved by the first terminal device and that is indicated by the first SCI overlaps with at least one resource that is reserved by the second terminal device and that is indicated by the second SCI.

That one or more resources indicated by the first SCI overlap with one or more resources indicated by the second SCI may alternatively mean that the resources indicated by the first SCI and the resources indicated by the second SCI overlap in time domain, may mean that one of the resources indicated by the first SCI and the resources indicated by the second SCI overlap in time domain, or may mean that a plurality of resources in the resources indicated by the first SCI and the resources indicated by the second SCI overlap in time domain. That the resources overlap in time domain herein may be understood as that the resources partially overlap in time domain, or the resources completely overlap in time domain, or time domain resources overlap. That the resources completely overlap in time domain may also be understood as that the time domain resources are the same, or may be understood as that the resources are in a same time unit. The time unit herein may be a slot, a symbol, a subframe, a frame, or the like. This is not limited in this application.

That the resources indicated by the first SCI overlap with the resources indicated by the second SCI may also mean that the resources indicated by the first SCI and the resources indicated by the second SCI overlap in time and frequency, may mean that one of the resources indicated by the first SCI and the resources indicated by the second SCI overlap in time and frequency, or may mean that a plurality of resources in the resources indicated by the first SCI and the resources indicated by the second SCI overlap in time and frequency. Herein, that the resources overlap in time and frequency may be understood as that the resources partially overlap in time and frequency, or the resources completely overlap in time and frequency. That the resources partially overlap in time and frequency may be understood as that the resources partially overlap in time domain and/or the resources partially overlap in frequency domain. That the resources completely overlap in time and frequency may also be understood as a same resource.

That the resources indicated by the first SCI overlap with the resources indicated by the second SCI may include but is not limited to the following cases.

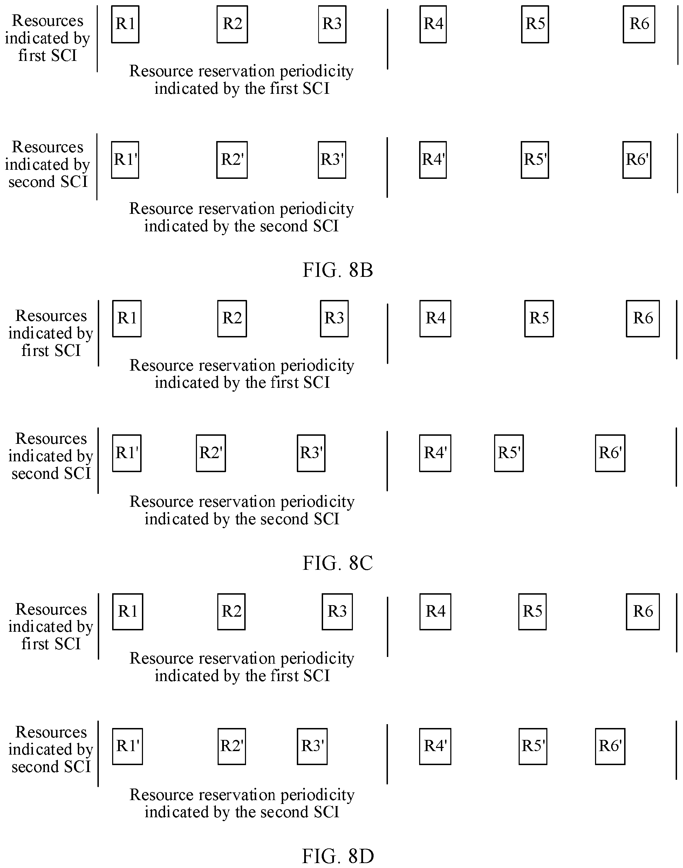

For example, as shown in FIG. 8B, all resources R1 to R3 indicated by the first SCI (a time domain resource allocation field and a frequency domain resource allocation field that are included in 1st-stage SCI) are the same as all resources R1' to R3' indicated by the second SCI (a time domain resource allocation field and a frequency domain resource allocation field that are included in 1st-stage SCI). In addition, if a resource reservation periodicity indicated by the first SCI is the same as a resource reservation periodicity indicated by the second SCI, all periodic reserved resources R4 to R6 indicated by the first SCI and all periodic reserved resources R4' to R6' indicated by the second SCI also overlap in time domain. All the periodic reserved resources R4 to R6 indicated by the first SCI are obtained based on all the resources R1 to R3 indicated by the first SCI and the resource reservation periodicity indicated by the first SCI. All the periodic reserved resources R4' to R6' indicated by the second SCI are obtained based on all the resources R1' to R3' indicated by the second SCI and the resource reservation periodicity indicated by the second SCI. The resource reservation periodicity indicated by the first SCI may be 0 (in this case, there is no periodic reserved resource).

For example, as shown in FIG. 8C, the first resource R1 (used resource) indicated by the first SCI (a time domain resource allocation field and a frequency domain resource allocation field that are included in 1st-stage SCI) and the first resource R1' (used resource) indicated by the second SCI (a time domain resource allocation field and a frequency domain resource allocation field that are included in 1st-stage SCI) overlap in time domain. In addition, if a resource reservation periodicity indicated by the first SCI is the same as a resource reservation periodicity indicated by the second SCI, the first periodic reserved resource (the first one of periodic reserved resources) R4 of the next TB indicated by the first SCI and the first periodic reserved resource R4' of the next TB indicated by the second SCI overlap in time domain. The first periodic reserved resource R4 of the next TB indicated by the first SCI is obtained based on the first resource R1 indicated by the first SCI and the resource reservation periodicity indicated by the first SCI. The first periodic reserved resource R4' of the next TB indicated by the second SCI is obtained based on the first resource R1' indicated by the second SCI and the resource reservation periodicity indicated by the second SCI. The resource reservation periodicity indicated by the first SCI is not 0.

For example, as shown in FIG. 8D, the first reserved resource R2 indicated by the first SCI (a time domain resource allocation field and a frequency domain resource allocation field in 1st-stage SCI) and the first reserved resource R2' indicated by the second SCI (a time domain resource allocation field and a frequency domain resource allocation field in 1st-stage SCI) overlap in time domain. In addition, if a resource reservation periodicity indicated by the first SCI is the same as a resource reservation periodicity indicated by the second SCI, the second periodic reserved resource R5 of the next TB indicated by the first SCI and the second periodic reserved resource R5' of the next TB indicated by the second SCI overlap in time domain. The second periodic reserved resource R5 of the next TB indicated by the first SCI is obtained based on the first reserved resource R2 indicated by the first SCI and the resource reservation periodicity indicated by the first SCI. The second periodic reserved resource R5' of the next TB indicated by the second SCI is obtained based on the first reserved resource R2' indicated by the second SCI and the resource reservation periodicity indicated by the second SCI. The resource reservation periodicity indicated by the first SCI is not 0.

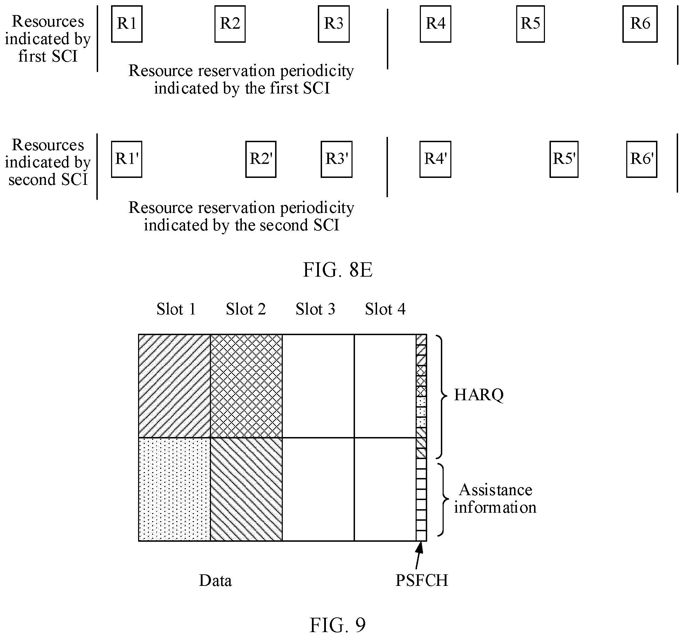

For example, as shown in FIG. 8E, the second reserved resource R3 indicated by the first SCI (a time domain resource allocation field and a frequency domain resource allocation field in 1st-stage SCI) and the second reserved resource R3' indicated by the second SCI (a time domain resource allocation field and a frequency domain resource

allocation field in 1st-stage SCI) overlap in time domain. In addition, if a resource reservation periodicity indicated by the first SCI is the same as a resource reservation periodicity indicated by the second SCI, the third periodic reserved resource R6 of the next TB indicated by the first SCI and the third periodic reserved resource R6' of the next TB indicated by the second SCI overlap in time domain. The third periodic reserved resource R6 of the next TB indicated by the first SCI is obtained based on the second reserved resource R3 indicated by the first SCI and the resource reservation periodicity indicated by the first SCI. The third periodic reserved resource R6' of the next TB indicated by the second SCI is obtained based on the second reserved resource R3' indicated by the second SCI and the resource reservation periodicity indicated by the second SCI. The resource reservation periodicity indicated by the first SCI is not 0.

It should be noted that the examples of FIG. 8C to FIG. 8E may be alternatively combined in pairs.

S803: The third terminal device sends the assistance information to the first terminal device when at least one of the following conditions is met.

Correspondingly, the first terminal device receives the assistance information. The assistance information is used to assist the first terminal device in resource selection.

The conditions are first described. When the resources indicated by the first SCI overlap with the resources indicated by the second SCI, and at least one of the following conditions is met, it may be determined that the resources indicated by the first SCI conflict with the resources indicated by the second SCI:

In a scenario in which the first terminal device and the second terminal device perform half-duplex communication, the third terminal device may send the assistance information to the first terminal device when at least one of a condition 1 or a condition 2 is met. When the resources indicated by the first SCI overlap with the resources indicated by the second SCI, due to a half-duplex communication problem, at least one party cannot receive SCI sent by another party when the one party sends SCI. As a result, a resource used or reserved by the another party conflicts with a resource used or reserved by the one party, in other words, the resources indicated by the first SCI conflict with the resources indicated by the second SCI. In this case, the one party cannot receive data scheduled by the SCI of the another party, and the data scheduled by the SCI fails to be received or the data scheduled by the SCI fails to be sent.

**Condition 1:** The first terminal device is a receiver of data scheduled by the second SCI.

The third terminal device may determine, in any one of the following manners, that the first terminal device is the receiver of the data scheduled by the second SCI.

Manner 1: If a cast type indicated by the second SCI is broadcast, the third terminal device may determine that the first terminal device is the receiver of the data scheduled by the second SCI.

Manner 2: If a cast type indicated by the first SCI is unicast, a cast type indicated by the second SCI is the unicast, an 8-bit least significant bit (least significant bit, LSB) of a destination identifier (destination ID) indicated by the first SCI is equal to a source identifier indicated by the second SCI, and an 8-bit LSB of a destination identifier indicated by the second SCI is equal to a source identifier (source ID) indicated by the first SCI, the third terminal device may determine that the first terminal device is the receiver of the data scheduled by the second SCI. In this case, the first terminal device and the second terminal device are receivers of unicast services of each other.

Manner 3: If a cast type indicated by the first SCI is a multicast option 1, a multicast option 2, or broadcast, a cast type indicated by the second SCI is the multicast option 1, the multicast option 2, or the broadcast, and a destination identifier indicated by the first SCI is equal to a destination identifier indicated by the second SCI, the third terminal device may determine that the first terminal device is the receiver of the data scheduled by the second SCI. In this case, the first terminal device and the second terminal device are receivers of multicast services or broadcast services of each other.

For the condition 1, as described above, when the resources indicated by the first SCI and the resources indicated by the second SCI overlap in time domain, the following conclusions may be made:

In the manner 1 of the condition 1, the cast type indicated by the second SCI is the broadcast. Because a broadcast service does not limit a receiver, the first terminal device is to receive the data scheduled by the second SCI.

In the manner 2, the cast types indicated by both the second SCI and the first SCI are the unicast. In this case, it may be determined, based on the destination identifier and the source identifier that are indicated by the first SCI and the second SCI, that the two terminal devices send unicast services to each other. However, because the terminal device cannot receive and send data at the same time, resource overlapping is a resource conflict, and the two terminal devices cannot receive data from each other.

In the manner 3, the cast types indicated by both the second SCI and the first SCI are the multicast or the broadcast. In this case, it may be determined, based on the destination identifiers indicated by the first SCI and the second SCI, that the two terminal devices send multicast services or broadcast services to each other. However, because the terminal device cannot receive and send data at the same time, resource overlapping is a resource conflict, and the two terminal devices cannot receive data from each other. Therefore, the first terminal device is the receiver of the data of the second terminal device. Because time domain resources overlap, if the first terminal device sends data, the first terminal device cannot receive the data of the second terminal device. Consequently, data transmission reliability of the second terminal device cannot be ensured. Therefore, the third terminal device sends the assistance information to the first terminal device, to assist the first terminal device in resource selection, so that it can be ensured that the data sent by the second terminal device to the first terminal device is not affected by a resource conflict, thereby ensuring the data transmission reliability.

**Condition 2:** The second terminal device is a receiver of data scheduled by the first SCI.

The third terminal device may determine, in any one of the following manners, that the second terminal device is the receiver of the data scheduled by the first SCI.

Manner 1: If a cast type indicated by the first SCI is broadcast, the third terminal device may determine that the second terminal device is the receiver of the data scheduled by the first SCI.

Manner 2: If a cast type indicated by the first SCI is unicast, a cast type indicated by the second SCI is the unicast, an 8-bit LSB of a destination identifier indicated by the first SCI is equal to a source identifier indicated by the second SCI, and an 8-bit LSB of a destination identifier indicated by the second SCI is equal to a source identifier indicated by the first SCI, the third terminal device may determine that the second terminal device is the receiver of the data scheduled by the first SCI. In this case, the first terminal device and the second terminal device are receivers of unicast services of each other.

Manner 3: If a cast type indicated by the first SCI is a multicast option 1, a multicast option 2, or broadcast, a cast type indicated by the second SCI is the multicast option 1, the multicast option 2, or the broadcast, and a destination identifier indicated by the first SCI is equal to a destination identifier indicated by the second SCI, the third terminal device may determine that the second terminal device is the receiver of the data scheduled by the first SCI. In this case, the first terminal device and the second terminal device are receivers of multicast services or broadcast services of each other.

For the condition 2, as described above, when the resources indicated by the first SCI and the resources indicated by the second SCI overlap in time domain, the following conclusions may be made:

In the manner 1 of the condition 2, the cast type indicated by the first SCI is the broadcast. Because a broadcast service does not limit a receiver, the second terminal device is to receive the data scheduled by the first SCI. However, because resources overlap in time domain, and both terminal devices need to send the data, the second terminal device cannot receive the data while sending the data.

In the manner 2, the cast types indicated by both the second SCI and the first SCI are the unicast. In this case, it may be determined, based on the destination identifier and the source identifier that are indicated by the first SCI and the second SCI, that the two terminal devices send unicast services to each other. However, because the terminal device cannot receive and send data at the same time, resource overlapping is a resource conflict, and the two terminal devices cannot receive data from each other.

In the manner 3, the cast types indicated by both the second SCI and the first SCI are the multicast or the broadcast. In this case, it may be determined, based on the destination identifiers indicated by the first SCI and the second SCI, that the two terminal devices send multicast services or broadcast services to each other. However, because the terminal device cannot receive and send data at the same time, resource overlapping is a resource conflict, and the two terminal devices cannot receive data from each other. Therefore, the second terminal device is the receiver of the data of the first terminal device. Because time domain resources overlap, if the second terminal device sends data, the second terminal device cannot receive the data of the first terminal device. Consequently, data transmission reliability of the first terminal device cannot be ensured. Therefore, the third terminal device sends the assistance information to the first terminal device, to assist the first terminal device in resource selection, so that it can be ensured that the data sent by the first terminal device to the second terminal device is not affected by a resource conflict, thereby ensuring the data transmission reliability.

For example, the condition 1 and the condition 2 may be combined. To be specific, a time domain resource used by the first terminal device to send data to the second terminal device overlaps with a time domain resource used by the second terminal device to send data to the first terminal device. In this case, because the two terminal devices are receive ends of each other, the two terminal devices cannot receive data from each other. In this case, the resource overlapping is a resource conflict, and the data transmission reliability of the two terminal devices is affected. The third terminal device sends the assistance information, to assist the first terminal device in resource selection, so that it can be ensured that data transmission is not affected by a resource conflict, thereby ensuring the data transmission reliability.

**Condition 3:** The third terminal device is a receiver of data scheduled by the first SCI, and the third terminal device is a receiver of data scheduled by the second SCI.

If a cast type indicated by the first SCI is unicast, the third terminal device may determine, in at least one of the following manners, that the third terminal device is the receiver of the data scheduled by the first SCI.

Manner 1: A destination identifier indicated by the first SCI is equal to a 16-bit LSB of a layer 2 source identifier (or referred to as a source layer 2 identifier) of the third terminal device, and a DST field (where the DST field carries an 8-bit MSB (most significant bit, MSB) of a layer 2 destination identifier) of a media access control (media access control, MAC) protocol data unit (protocol data unit, PDU) subheader (subheader) of a PSSCH scheduled by the first SCI is equal to an 8-bit MSB of a layer 2 source identifier of the third terminal device.

Manner 2: A source identifier indicated by the first SCI is equal to an 8-bit LSB of a layer 2 destination identifier (or referred to as a destination layer 2 identifier) of the third terminal device, and an SRC field (where the SRC field carries a 16-bit MSB of a layer 2 source ID) of a MAC PDU subheader of a PSSCH scheduled by the first SCI that is obtained through decoding is equal to an 16-bit MSB of the layer 2 destination ID of the third terminal device.

Manner 3: A destination identifier indicated by the first SCI and a source identifier indicated by the first SCI correspond to a same PC5 radio resource control (PC5-radio resource control, PC5-RRC) connection.

If a cast type indicated by the first SCI is a multicast option 1, a multicast option 2, or broadcast, the third terminal device determines, in the following manner, that the third terminal device is the receiver of the data scheduled by the first SCI.

The destination identifier indicated by the first SCI is equal to a 16-bit LSB of a layer 2 destination identifier of the third terminal device, and a DST field of a MAC PDU subheader of a PSSCH scheduled by the first SCI is equal to an 8-bit MSB of the layer 2 destination identifier of the third terminal device.

For how to determine that the third terminal device is the receiver of the data scheduled by the second SCI, refer to related descriptions of how to determine that the third terminal device is the receiver of the data scheduled by the first SCI. A difference lies in that the first SCI is replaced with the second SCI. Details are not described herein again.

For the condition 3, a combination of the manner 1 and the manner 2 in the condition 3 is used as an example, and it may be determined that the third terminal device is the receiver of the data scheduled by the first SCI. In a similar manner, it may be determined that the third terminal device is the receiver of the data scheduled by the second SCI. In the foregoing step, the resources indicated by the first SCI overlap with the resources indicated by the second SCI. The third terminal device receives the data of the first terminal device and the second terminal device on an overlapping time-frequency resource, and transmission of the two terminal devices interferes with each other. In this case, the resource overlapping is a resource conflict, and consequently causes a failure in receiving data of the third terminal device. Similarly, data sending reliability of the first terminal device and the second terminal device cannot be ensured. Therefore, the third terminal device sends the assistance information to the first terminal device, to assist the first terminal device in resource selection, so that it can be ensured that the data sent by the first terminal device and the second terminal device to the third terminal device is not mutually affected by a resource conflict, thereby ensuring the data transmission reliability.

**Condition 4:** The third terminal device is a receiver of data scheduled by the first SCI, and an RSRP measurement value corresponding to the second SCI is greater than a first RSRP threshold.

For how to determine that the third terminal device is the receiver of the data scheduled by the first SCI, refer to the descriptions of the condition 3. Details are not described herein again.

The RSRP measurement value may be an RSRP measurement value based on a PSCCH demodulation reference signal (demodulation reference signal, DMRS) or an RSRP measurement value based on a PSSCH DMRS.

For example, the RSRP measurement value may be measured based on a DMRS of a PSCCH carrying the second SCI, or may be measured based on a DMRS of a PSSCH scheduled by the second SCI.

For example, the first RSRP threshold is used by the third terminal device to determine whether the third terminal device is strongly interfered by other transmission when receiving the data scheduled by the first SCI. When the RSRP measurement value is greater than the first RSRP threshold, it indicates that the data scheduled by the second SCI interferes with receiving, by the third terminal device, the data scheduled by the first SCI. The first RSRP threshold may be an absolute threshold (for measuring an interference degree), or may be a relative threshold (an RSRP threshold determined based on a priority).

For example, based on a sensing (sensing) result in a resource selection process of the third terminal device, or based on a sensing and/or blind detection (blind detection) result in a resource conflict determining process, the third terminal device may determine whether resource overlapping is a resource conflict. This process is applicable to other conditions in step S803.

For the condition 4, the third terminal device is the receiver of the data of the first terminal device. In addition, based on the RSRP measurement value, transmission of the second terminal device causes strong interference to receiving of the third terminal device. In this case, time-frequency resource overlapping is a resource conflict. Data transmission of the second terminal device affects the data transmission reliability of the first terminal device. Therefore, the third terminal device sends the assistance information to the first terminal device, to assist the first terminal device in resource selection, so that it can be ensured that sending data by the first terminal device to the third terminal device is not affected by interference caused by the second terminal device, thereby ensuring the data transmission reliability.

Condition 5: The third terminal device is a receiver of data scheduled by the first SCI, and a received signal strength indicator (received signal strength indication, RSSI) measurement value corresponding to the second SCI is greater than a first RSSI threshold.

For how to determine that the third terminal device is the receiver of the data scheduled by the first SCI, refer to the descriptions of the condition 3. Details are not described herein again.

An RSSI is defined as a linear average of total received power on symbols of a PSCCH and a PSSCH within a slot of a configured subchannel.

The RSSI measurement value may be an RSSI measurement value of subchannels of a PSCCH and a PSSCH that are associated with SCI in a slot. The PSCCH associated with the SCI is a PSCCH carrying the SCI, and the PSSCH associated with the SCI is a PSSCH scheduled by the SCI. The RSSI measurement value of the subchannels of the PSCCH and the PSSCH that are associated with the SCI may be a sum or a linear average of RSSI measurement values of all the subchannels.

For the condition 5, the third terminal device is the receiver of the data of the first terminal device. In addition, based on the RSRI measurement value, transmission of the second terminal device causes strong interference to receiving of the third terminal device. In this case, time-frequency resource overlapping is a resource conflict. Data transmission of the second terminal device affects the data transmission reliability of the first terminal device. Therefore, the third terminal device sends the assistance information to the first terminal device, to assist the first terminal device in resource selection, so that it can be ensured that sending data by the first terminal device to the third terminal device is not affected by interference caused by the second terminal device, thereby ensuring the data transmission reliability.

**Condition 6:** The third terminal device is a receiver of data scheduled by the first SCI, and a distance between the third terminal device and the second terminal device is less than a first distance threshold.

For how to determine that the third terminal device is the receiver of the data scheduled by the first SCI, refer to the descriptions of the condition 3. Details are not described herein again.

The distance may be a distance determined by the third terminal device based on a zone identifier (zone ID) indicated by the second SCI and a location of the third terminal device. Alternatively, the distance may be a distance between a central location of a closest zone (zone) and a location of the third terminal device, where the central location is calculated by the third terminal device based on a zone identifier (zone ID) and a zone (zone) length that are indicated by the second SCI. If the second SCI includes a communication range requirement field, the zone (zone) length may be related to a communication range requirement indicated by the communication range requirement field.

Alternatively, the distance may be a distance between a central location of a closest zone (zone) and a location of the third terminal device, where the central location is calculated by the third terminal device based on a zone identifier (zone ID) and a zone (zone) length that are indicated by the second SCI, and the distance is less than a communication range requirement indicated by the second SCI. The distance may be a distance between the location of the third terminal device and a location of the second terminal device.

For the condition 6, the third terminal device is the receiver of the data of the first terminal device, and based on the distance between the third terminal device and the second terminal device, transmission of the second terminal device causes strong interference to receiving of the third terminal device. In this case, time-frequency resource overlapping is a resource conflict. Data transmission of the second terminal device affects the data transmission reliability of the first terminal device. Therefore, the third terminal device sends the assistance information to the first terminal device, to assist the first terminal device in resource selection, so that it can be ensured that sending data by the first terminal device to the third terminal device is not affected by interference caused by the second terminal device, thereby ensuring the data transmission reliability.

**Condition 7:** The third terminal device is a receiver of data scheduled by the first SCI, and a channel quality indicator (channel quality indication, CQI) of the second terminal device is greater than a first CQI threshold.

For how to determine that the third terminal device is the receiver of the data scheduled by the first SCI, refer to the descriptions of the condition 3. Details are not described herein again.

The CQI may be a CQI measured after the third terminal device receives channel state information (channel state information, CSI) reporting triggered by the second terminal device, or may be understood as a CQI sent by the third terminal device to the second terminal device. The CQI herein may be understood as a CQI measurement value, a CQI value, a CQI reporting value, and the like.

Alternatively, the CQI may be a CQI measured by the second terminal device and sent to the third terminal device after the third terminal device triggers the second terminal device to perform CSI reporting, or may be understood as a CQI sent by the second terminal device to the third terminal device.

The CQI of the second terminal device may also be understood as a CQI measurement value between the third terminal device and the second terminal device.

For the condition 7, the third terminal device is the receiver of the data of the first terminal device, and based on the CQI measurement value between the third terminal device and the second terminal device, it can be predicted that transmission of the second terminal device causes strong interference to receiving of the third terminal device. In this case, time-frequency resource overlapping is a resource conflict. Data transmission of the second terminal device affects the data transmission reliability of the first terminal device. Therefore, the third terminal device sends the assistance information to the first terminal device, to assist the first terminal device in resource selection, so that it can be ensured that sending data by the first terminal device to the third terminal device is not affected by interference caused by the second terminal device, thereby ensuring the data transmission reliability.

**Condition 8:** The third terminal device is a receiver of data scheduled by the second SCI, and a reference signal received power RSRP measurement value corresponding to the first SCI is greater than a second RSRP threshold.

For how to determine that the third terminal device is the receiver of the data scheduled by the second SCI, refer to the descriptions of the condition 3. Details are not described herein again.

For the RSRP measurement value, refer to the descriptions of the condition 4. Details are not described herein again.

For the condition 8, the third terminal device is the receiver of the data of the second terminal device. In addition, based on the RSRP measurement value, transmission of the first terminal device causes strong interference to receiving of the third terminal device. In this case, time-frequency resource overlapping is a resource conflict. Data transmission of the first terminal device affects the data transmission reliability of the second terminal device. Therefore, the third terminal device sends the assistance information to the first terminal device, to assist the first terminal device in resource selection, so that it can be ensured that sending data by the second terminal device to the third terminal device is not affected by interference caused by the first terminal device, thereby ensuring the data transmission reliability.

**Condition 9:** The third terminal device is a receiver of data scheduled by the second SCI, and a received signal strength indicator RSSI measurement value corresponding to the first SCI is greater than a second RSSI threshold.

For how to determine that the third terminal device is the receiver of the data scheduled by the second SCI, refer to the descriptions of the condition 3. Details are not described herein again.

For the RSSI measurement value, refer to the descriptions of the condition 5. Details are not described herein again.

For the condition 9, the third terminal device is the receiver of the data of the second terminal device. In addition, based on the RSRI measurement value, transmission of the first terminal device causes strong interference to receiving of the third terminal device. In this case, time-frequency resource overlapping is a resource conflict. Data transmission of the first terminal device affects the data transmission reliability of the second terminal device. Therefore, the third terminal device sends the assistance information to the first terminal device, to assist the first terminal device in resource selection, so that it can be ensured that sending data by the second terminal device to the third terminal device is not affected by interference caused by the first terminal device, thereby ensuring the data transmission reliability.

**Condition 10:** The third terminal device is a receiver of data scheduled by the second SCI, and a distance between the third terminal device and the first terminal device is less than a second distance threshold.

For how to determine that the third terminal device is the receiver of the data scheduled by the second SCI, refer to the descriptions of the condition 3. Details are not described herein again.

The distance may be a distance determined by the third terminal device based on a zone identifier (zone ID) indicated by the first SCI and a location of the third terminal device. Alternatively, the distance may be a distance between a central location of a closest zone (zone) and a location of the third terminal device, where the central location is calculated by the third terminal device based on a zone identifier (zone ID) and a zone (zone) length that are indicated by the first SCI. If the first SCI includes a communication range requirement field, the zone (zone) length may be related to a communication range requirement indicated by the communication range requirement field.

Alternatively, the distance may be a distance between a central location of a closest zone (zone) and a location of the third terminal device, where the central location is calculated by the third terminal device based on a zone identifier (zone ID) and a zone (zone) length that are indicated by the first SCI, and the distance is less than a communication range requirement indicated by the first SCI. The distance may be a distance between the location of the third terminal device and a location of the first terminal device.

For the condition 10, the third terminal device is the receiver of the data of the second terminal device, and based on the distance between the third terminal device and the first terminal device, transmission of the first terminal device causes strong interference to receiving of the third terminal device. In this case, time-frequency resource overlapping is a resource conflict. Data transmission of the first terminal device affects the data transmission reliability of the second terminal device. Therefore, the third terminal device sends the assistance information to the first terminal device, to assist the first terminal device in resource selection, so that it can be ensured that sending data by the second terminal device to the third terminal device is not affected by interference caused by the first terminal device, thereby ensuring the data transmission reliability.

**Condition 11:** The third terminal device is a receiver of data scheduled by the second SCI, and a channel quality indicator CQI of the first terminal device is greater than a second CQI threshold.

For how to determine that the third terminal device is the receiver of the data scheduled by the second SCI, refer to the descriptions of the condition 3. Details are not described herein again.

The CQI may be a CQI measured after the third terminal device receives CSI reporting triggered by the first terminal device, or may be understood as a CQI sent by the third terminal device to the first terminal device. The CQI herein may be understood as a CQI measurement value, a CQI value, a CQI reporting value, and the like.

Alternatively, the CQI may be a CQI measured by the first terminal device and sent to the third terminal device after the third terminal device triggers the first terminal device to perform CSI reporting, or may be understood as a CQI sent by the first terminal device to the third terminal device.

The CQI of the first terminal device may also be understood as a CQI measurement value between the third terminal device and the first terminal device.

For the condition 11, the third terminal device is the receiver of the data of the second terminal device, and based on the CQI measurement value between the third terminal device and the first terminal device, it can be predicted that transmission of the first terminal device causes strong interference to receiving of the third terminal device. In this case, time-frequency resource overlapping is a resource conflict. Data transmission of the first terminal device affects the data transmission reliability of the second terminal device. Therefore, the third terminal device sends the assistance information to the first terminal device, to assist the first terminal device in resource selection, so that it can be ensured that sending data by the second terminal device to the third terminal device is not affected by interference caused by the first terminal device, thereby ensuring the data transmission reliability.

**Condition 12:** The third terminal device detects that a HARQ feedback corresponding to data scheduled by the first SCI is a negative acknowledgment (HARQ-NACK message).

The condition may be understood as a manner 1 or a manner 2.

Manner 1: The third terminal device detects that the HARQ feedback corresponding to the data scheduled by the first SCI is a negative acknowledgment (HARQ-NACK message). It may be understood that the third terminal device is a receiver. When a cast type indicated by the first SCI is a multicast option 1 or a multicast option 2, another terminal device in addition to the third terminal device may receive the data of the first terminal device. Although the third terminal device can successfully decode the data of the first terminal device, the another terminal device may fail to successfully decode the data of the first terminal device because interference is caused due to a conflict between the resources indicated by the first SCI and the resources indicated by the second SCI. The another terminal device sends a HARQ-NACK message to the first terminal device, so that the first terminal device retransmits the data.

Manner 2: That the third terminal device detects a HARQ-NACK message sent by another terminal device may also be understood as that the third terminal device blindly detects the HARQ-NACK message sent by the another terminal device. It may be understood that the third terminal device is not a receiver. The third terminal device can learn, by blindly detecting the HARQ-NACK message sent by the another terminal device, that the another terminal device does not successfully decode the data of the first terminal device. This may be caused by a conflict between the resources indicated by the first SCI and the resources indicated by the second SCI. In this case, the assistance information may help the first terminal device avoid a data transmission failure caused by a resource conflict.

For the condition 12, the third terminal device sends the assistance information to the first terminal device, to assist the first terminal device in resource selection, so that it can be ensured that the data sent by the first terminal device is not affected by a resource conflict, thereby ensuring the data transmission reliability.

**Condition 13:** The third terminal device does not successfully decode data of the first terminal device;
The condition 13 may be alternatively replaced with that the third terminal device sends a HARQ-NACK message to the first terminal device. The HARQ-NACK message sent by the third terminal device to the first terminal device herein may be understood as a HARQ-NACK message for data that is received by the third terminal device and that is from the first terminal device.

If the third terminal device does not successfully decode the data of the first terminal device or the third terminal device sends the HARQ-NACK message to the first terminal device, it indicates that external interference is relatively strong. It is probable that the third terminal device does not successfully receive the data from the first terminal device because interference is caused due to a conflict between the resources indicated by the first SCI and the resources indicated by the second SCI. In this case, sending the assistance information can help the first terminal device avoid using a conflict resource, help the first terminal device improve the data transmission reliability, and improve data receiving reliability of the third terminal device.

For the condition 13, the third terminal device sends the assistance information to the first terminal device, to assist the first terminal device in resource selection, so that it can be ensured that the data sent by the first terminal device is not affected by a resource conflict, thereby ensuring data transmission reliability.

**Condition 14:** The third terminal device successfully decodes data of the first terminal device, and an overlapping resource is located in one or more periodic resources indicated by the first SCI.

In this embodiment of this application, the overlapping resource is located in the periodic resources indicated by the SCI. Alternatively, it may be described as that the overlapping resource is located in resources of another TB indicated by the SCI, or it may be described as that the overlapping resource is located in reserved resources of another TB indicated by the SCI.

If the third terminal device successfully decodes the data of the first terminal device, the first terminal device no longer retransmits the data to the third terminal device, and no long uses a retransmission resource of a current TB. However, the first terminal device may further send data on the resource (that is, the periodic resource indicated by the first SCI) of the another TB. Therefore, if the assistance information indicates that a conflict occurs on the resources of the another TB, sending of the assistance information is meaningful. This can help the first terminal device avoid transmitting another TB on a conflict resource, and improve the data transmission reliability. The current TB is a TB scheduled by the first SCI, and the another TB is a TB that corresponds to another reserved resource and that is obtained based on the resources of the current TB and the resource reservation periodicity that are indicated by the first SCI.

For the condition 14, the third terminal device sends the assistance information to the first terminal device, to assist the first terminal device in resource selection, so that it can be ensured that the data sent by the first terminal device on the periodic resource is not affected by a resource conflict, thereby ensuring the data transmission reliability.

**Condition 15:** The third terminal device detects that a HARQ feedback corresponding to data scheduled by the second SCI is a negative acknowledgment (HARQ-NACK message).

The condition may be understood as a manner 1 or a manner 2.

Manner 1: The third terminal device detects that the HARQ feedback corresponding to the data scheduled by the second SCI is a negative acknowledgment (HARQ-NACK message). It may be understood that the third terminal device is a receiver.

When a cast type indicated by the second SCI is a multicast option 1 or a multicast option 2, another terminal device in addition to the third terminal device may receive the data of the second terminal device. Although the third terminal device can successfully decode the data of the second terminal device, the another terminal device may fail to successfully decode the data of the second terminal device because interference is caused due to a conflict between the resources indicated by the first SCI and the resources indicated by the second SCI. The another terminal device sends a HARQ-NACK message to the second terminal device, so that the second terminal device retransmits the data.

Manner 2: That the third terminal device detects a HARQ-NACK message sent by another terminal device may also be understood as that the third terminal device blindly detects the HARQ-NACK message sent by the another terminal device. It may be understood that the third terminal device is not a receiver. The third terminal device can learn, by blindly detecting the HARQ-NACK message sent by the another terminal device, that the another terminal device does not successfully decode the data of the second terminal device. This may be caused by a conflict between the resources indicated by the first SCI and the resources indicated by the second SCI. In this case, the assistance information may help the second terminal device avoid a data transmission failure caused by a resource conflict.

For the condition 15, the third terminal device sends the assistance information to the first terminal device, to assist the first terminal device in resource selection, so that it can be ensured that the data sent by the second terminal device is not affected by a resource conflict, thereby ensuring the data transmission reliability.

**Condition 16:** The third terminal device does not successfully decode data of the second terminal device;
The condition 16 may be alternatively replaced with that the third terminal device sends a HARQ-NACK message to the second terminal device. The HARQ-NACK message sent by the third terminal device to the second terminal device herein may be understood as a HARQ-NACK message for data that is received by the third terminal device and that is from the second terminal device.

If the third terminal device does not successfully decode the data of the second terminal device or the third terminal device sends the HARQ-NACK message to the second terminal device, it indicates that external interference is relatively strong. It is probable that the third terminal device does not successfully receive the data from the second terminal device because interference is caused due to a conflict between the resources indicated by the first SCI and the resources indicated by the second SCI. In this case, sending the assistance information can help the second terminal device avoid using a conflict resource, help the second terminal device improve the data transmission reliability, and improve data receiving reliability of the third terminal device.

For the condition 16, the third terminal device sends the assistance information to the first terminal device, to assist the first terminal device in resource selection, so that it can be ensured that the data sent by the first terminal device is not affected by a resource conflict, thereby ensuring data transmission reliability.

**Condition 17:** The third terminal device successfully decodes data of the second terminal device, and an overlapping resource is located in one or more periodic resources indicated by the second SCI.

If the third terminal device successfully decodes the data of the second terminal device, the second terminal device no longer retransmits the data to the third terminal device, and no long uses a retransmission resource of a current TB. However, the second terminal device may further send data on resources (that is, the periodic resource indicated by the second SCI) of another TB. Therefore, if the assistance information indicates that a conflict occurs on the resources of the another TB, sending of the assistance information is meaningful. This can help the second terminal device avoid transmitting another TB on a conflict resource, and improve the data transmission reliability. The current TB is a TB scheduled by the second SCI, and the another TB is a TB that corresponds to another reserved resource and that is obtained based on the resources of the current TB and the resource reservation periodicity that are indicated by the second SCI.

For the condition 17, the third terminal device sends the assistance information to the first terminal device, to assist the first terminal device in resource selection, so that it can be ensured that the data sent by the second terminal device on the periodic resource is not affected by a resource conflict, thereby ensuring data transmission reliability.

**Condition 18:** The third terminal device successfully decodes data of the first terminal device, a cast type indicated by the first SCI is a multicast option 1 or a multicast option 2, and a quantity of retransmissions of the data of the first terminal device received by the third terminal device is greater than a retransmission threshold.

The retransmission threshold may be preconfigured, or configured by a network device in a resource pool.

Herein, the data of the first terminal device is data scheduled by the first SCI.

When the cast type indicated by the first SCI is the multicast option 1 or the multicast option 2, another terminal device in addition to the third terminal device may receive the data of the first terminal device. Although the third terminal device can successfully decode the data of the first terminal device, the another terminal device may fail to successfully decode the data of the first terminal device and sends a HARQ-NACK message to the first terminal device, so that the first terminal device retransmits the data. The receiving failure of the another terminal device may be caused by interference caused due to a conflict between the resources indicated by the first SCI and the resources indicated by the second SCI. In this case, sending the assistance information may help the first terminal device successfully send the data.

For the condition 18, the third terminal device sends the assistance information to the first terminal device, to assist the first terminal device in resource selection, so that it can be ensured that the data sent by the first terminal device through multicast is not affected by a resource conflict, thereby ensuring the data transmission reliability.

**Condition 19:** The third terminal device successfully decodes data of the second terminal device, a cast type indicated by the second SCI is a multicast option 1 or a multicast option 2, and a quantity of retransmissions of the data of the second terminal device received by the third terminal device is greater than a retransmission threshold.

The retransmission threshold may be preconfigured, or configured by a network device in a resource pool.

Herein, the data of the second terminal device is data scheduled by the second SCI.

Similar to the condition 18, when the cast type indicated by the second SCI is the multicast option 1 or the multicast option 2, another terminal device in addition to the third terminal device may receive the data of the second terminal device. Although the third terminal device can successfully decode the data of the second terminal device, the another terminal device may fail to successfully decode the data of the second terminal device and sends a HARQ-NACK message to the second terminal device, so that the second terminal device retransmits the data. The receiving failure of the another terminal device may be caused by interference caused due to a conflict between the resources indicated by the first SCI and the resources indicated by the second SCI. In this case, sending the assistance information may help the second terminal device successfully send the data.

For the condition 19, the third terminal device sends the assistance information to the first terminal device, to assist the first terminal device in resource selection, so that it can be ensured that the data sent by the second terminal device through multicast is not affected by a resource conflict, thereby ensuring the data transmission reliability.

For the condition 1 to the condition 11, when any one of the condition 1 to the condition 11 is met, the third terminal device determines that the resources indicated by the first SCI conflict with the resources indicated by the second SCI, and the third terminal device sends the assistance information to the first terminal device. For the condition 12 to the condition 19, when any one of the condition 12 to the condition 19 is met, the third terminal device may send the assistance information to the first terminal device.

In an optional implementation, the third terminal device determines that the resources indicated by the first SCI conflict with the resources indicated by the second SCI, and to further determine that the conflict exactly occurs, the third terminal device sends the assistance information when determining that any one of the conditions 12 to 19 is met. In this implementation, a manner in which the third terminal device determines that the resources indicated by the first SCI conflict with the resources indicated by the second SCI may be any one of the foregoing conditions 1 to 11. However, this is not limited in this embodiment of this application. For the conflict in this embodiment of this application, refer to the foregoing descriptions. Therefore, it may be understood that the conditions 1 to 11 and the conditions 12 to 19 in this embodiment of this application may be combined. In other words, the first terminal device sends the assistance information when the resources indicated by the first SCI overlap with the resources indicated by the second SCI, any one of the conditions 1 to 11 is met, and any one of the conditions 12 to 19 is met.

The following describes the assistance information. The assistance information may have the following possible forms.

In a possible implementation, the assistance information may indicate an available resource and/or an unavailable resource to the first terminal device.

The available resource may be understood as a resource available for the assisted terminal device, that is, a resource that can be used by the assisted terminal device for data transmission, or may be understood as a low-interference resource that can be used by the assisted terminal device. The available resource herein may alternatively be understood as a resource that is selected by an assisted terminal device in a mode 2 (mode 2)-based resource selection process, or may be understood as a low-interference resource that is determined by the assisting terminal device based on SCI and an RSRP measurement value in the mode 2 (mode 2)-based resource selection process. The available resource may alternatively be understood as a resource that can be used by both the assisting terminal device and the assisted terminal device for data transmission. The available resource may alternatively be used by the assisted terminal device to determine information about the available resource.

The unavailable resource may be understood as a resource unavailable for the assisted terminal device, that is, a resource that cannot be used by the assisted terminal device for data transmission, or may be understood as a high-interference resource that cannot be used by the assisted terminal device. The unavailable resource herein may be understood as a resource that is excluded by the assisting terminal device in the mode 2 (mode 2)-based resource selection process, or may be understood as a high-interference resource that is determined by the assisting terminal device based on SCI and an RSRP measurement value in the mode 2 (mode 2)-based resource selection process. The unavailable resource may alternatively be understood as a resource that cannot be used by either the assisting terminal device or the assisted terminal device for data transmission.

The available resource and the unavailable resource may alternatively be understood as information used by the assisted terminal device to determine the available resource and the unavailable resource, for example, a sensing result of the assisting terminal device, and information indicated by SCI detected by the assisting terminal device.

In another possible implementation, the assistance information may alternatively be resource conflict indication (resource collision indication, RCI) information. The resource conflict indication information indicates a resource conflict, a resource collision, or the like, may indicate a past resource conflict or a future resource conflict, and may indicate at least one resource conflict or a persistent resource conflict. For the past resource conflict, the future resource conflict, the at least one resource conflict, and the persistent resource conflict, refer to the foregoing descriptions. Details are not described herein again.

The RCI information may indicate at least one piece of the following information:

A plurality of resources indicated by the first SCI conflict with a plurality of resources indicated by the second SCI.

At least one resource used by the first terminal device conflicts with at least one resource used by the second terminal device, or at least one resource reserved by the first terminal device conflicts with at least one resource reserved by the second terminal device.

The third terminal device (that is, a transmitter of the RCI information) is the receiver of the data scheduled by the first SCI, that is, the third terminal device is the receiver of the data of the first terminal device.

In still another possible implementation, when the condition 14 or 17 is met, the assistance information further indicates that a conflict occurs on the periodic resources indicated by the first SCI.

For the RCI information, information indicated by the RCI information may be distinguished in a plurality of manners.

In a possible implementation, content of the RCI information is indicated by using a frequency domain resource carrying the RCI information. For the RCI information sent to the first terminal device, the frequency domain resource may be associated with a PSSCH resource scheduled by the first SCI, or may be associated with a conflict resource. For the RCI information sent to the second terminal device, the frequency domain resource may be associated with a PSSCH resource scheduled by the second SCI, or may be associated with a conflict resource.

For example, if a first resource indicated by the first SCI conflicts with a second resource indicated by the second SCI, a resource for transmitting the RCI information may be associated with the first resource, may be associated with the second resource, may be associated with a resource overlapping with the first resource and the second resource, may be associated with a slot and a subchannel in which a resource overlapping with the first resource and the second resource is located, may be associated with a resource used by the first SCI, or may be associated with a resource used by the second SCI.

As shown in FIG. 4, in PSFCH resources for transmitting a HARQ, each data transmission corresponds to more than one PSFCH resource. Therefore, similar to the HARQ, as shown in FIG. 9, the RCI information may be transmitted by using a PSFCH resource. The HARQ and the RCI information may be located in different PRBs, and different RCI information for same data transmission may be located in different PRBs.

Resources occupied by the RCI information may be calculated by using the following

$$(P_{ID} + M_{ID}) \bmod R_{PRB,CS}^{PSFCH} + i \quad \text{or} \quad (P_{ID} + M_{ID} + i) \bmod R_{PRB,CS}^{PSFCH}$$

. $P_{ID}$ is a physical layer source ID (a source identifier indicated by the second SCI) provided in the SCI. If a cast type indicated by the SCI is a multicast option 2, $M_{ID}$ is an identifier of a terminal device that receives the PSSCH. Otherwise, $M_{ID}$ is 0. $R_{PRB,CS}^{PSFCH}$ is a PSFCH resource that may be used to carry a HARQ corresponding to data transmission, and $R_{PRB,CS}^{PSFCH}$ is equal to a subchannel occupied by data or a start subchannel of data x (multiplied by) a feedback location associated with each subchannel x a code domain resource. For FIG. 4, $R_{PRB,CS}^{PSFCH} = 1$ x 3 x 1 = 3. That is, each piece of data corresponds to three feedback resources in three dimensions of time domain, frequency domain, and code domain. The feedback resource is a resource that can be used for transmitting a PSFCH.

i is an index of a type of the RCI information. For example, if the RCI information includes two types, i=1 indicates a first type of the RCI information, and i=2 indicates a second type of the RCI information. In addition, because the resource occupied by the HARQ is calculated based on $(P_{ID} + M_{ID}) \bmod R^{PSFCH}_{PRB,CS}$ , if i is not 0, it can be ensured that the RCI information and the HARQ occupy different resources. In other words, it is ensured that the RCI information does not conflict with the HARQ.

The types of the RCI information include at least one of the following:

A resource conflict indicated by the RCI is a conflict of one resource; a resource conflict indicated by the RCI is a conflict of a plurality of resources; a resource conflict indicated by the RCI is from a data receiver; a resource conflict indicated by the RCI is not from a data receiver; a resource conflict indicated by the RCI is a pre-conflict indication; and a resource conflict indicated by the RCI is a post-conflict indication.

For example, a resource set for transmitting the RCI and a resource set for transmitting the HARQ may be independent. That is, the resource set for transmitting the RCI and the resource set for transmitting the HARQ are different resource sets.

In another possible implementation, content of the RCI information is indicated by using a cyclic shift (cyclic shift, CS) code, a root sequence, or an orthogonal cover code (orthogonal cover code, OCC) associated with the RCI information. For example, a CS code of 0 indicates that a plurality of resources indicated by the first SCI conflict with a plurality of resources indicated by the second SCI, and a CS code of 6 indicates that a transmitter of the resource conflict indication information receives data scheduled by destination SCI.

The types of the RCI information include at least one of the following:

A resource conflict indicated by the RCI is a conflict of one resource; a resource conflict indicated by the RCI is a conflict of a plurality of resources; a resource conflict indicated by the RCI is from a data receiver; a resource conflict indicated by the RCI is not from a data receiver; a resource conflict indicated by the RCI is a pre-conflict indication; and a resource conflict indicated by the RCI is a post-conflict indication.

It should be noted that the foregoing two implementations may be used in combination to indicate more types of the RCI information.

The RCI information may notify an assisted terminal device of a clearer understanding of a specific conflict, so as to perform more accurate and proper processing.

The following describes in detail several forms in which the third terminal device sends the assistance information to the first terminal device.

If a priority value indicated by the first SCI from the first terminal device is greater than a priority value indicated by the second SCI of the second terminal device, in other words, a priority of data scheduled by the first SCI is lower than a priority of data scheduled by the second SCI, the third terminal device may send the assistance information to the first terminal device, so that the first terminal device transmitting low-priority data reselects a resource. When a resource conflict occurs between two terminal devices, as long as one terminal device no longer uses a conflict resource, the resource conflict does not occur. In this case, a resource used for low-priority transmission is changed, to avoid a resource conflict, and ensure that high-priority transmission is normally performed.

When the third terminal device is the receiver of the data scheduled by for the first SCI, a receiver of the first terminal device feeds back the assistance information. It can be ensured that transmission of the first terminal device is not affected by the resource conflict, thereby ensuring the data transmission reliability.

When the third terminal device is not the receiver of the data scheduled by for the first SCI, a non-receiver of the first terminal device feeds back the assistance information. Transmission of the first terminal device is not necessarily affected because a destination terminal device for the transmission of the first terminal device is not determined, and is not necessarily the third terminal device. However, the transmission of the first terminal device affects transmission of another terminal device. In this case, the assistance information is used to help the another terminal improve data transmission reliability.

Optionally, the third terminal device may further send the assistance information to the first terminal device and the second terminal device. For technical effects thereof, refer to the technical effects of sending, by the third terminal device, the assistance information to the first terminal device.

Both the assistance information and a HARQ feedback (a HARQ-ACK message or a HARQ-NACK message) may be transmitted by using a PSFCH resource, and may be distinguished by using a frequency domain resource or a code domain resource. However, the two pieces of information overlap in time domain, and due to a sending capability limitation of the terminal device, sometimes the two pieces of information cannot be sent at the same time, and the HARQ feedback may conflict with the assistance information. In this case, necessity of sending the assistance information may depend on the HARQ feedback. Therefore, that the third terminal device sends the HARQ and/or the assistance information to the first terminal device may include the following several possible cases. A case 3 and a case 5 may correspond to the foregoing condition 13, and a case 4 may correspond to the foregoing condition 14.

The following first describes a case: When the first SCI indicates that the HARQ is enabled, the third terminal device sends a HARQ-ACK message and/or a HARQ-NACK message to the first terminal device.

When the third terminal device can successfully decode the data of the first terminal device, if a cast type indicated by the first SCI is a multicast option 1, the third terminal device does not send the HARQ-ACK message to the first terminal device, or when a cast type indicated by the first SCI is unicast, a multicast option 2, or broadcast, the third terminal device may send the HARQ-ACK message to the first terminal device.

When the third terminal device does not successfully decode the data of the first terminal device, regardless of whether a cast type indicated by the first SCI is unicast, a multicast option 1, a multicast option 2, or broadcast, the third terminal device may send the HARQ-NACK message to the first terminal device.

It should be noted that, in some cases, when the third terminal device does not successfully decode the data of the first terminal device, the third terminal device may send the assistance information to the first terminal device instead of sending the HARQ-NACK message. In this case, in addition to the foregoing meaning, the assistance information may further indicate that the third terminal device does not successfully decode the data of the first terminal device, and the first terminal device may perform retransmission based on the assistance information. Details are described below.

The following describes occasions for the third terminal device to send the assistance information to the first terminal device.

In one aspect, for a resource conflict of a current TB (that is, a conflict resource is a data retransmission resource), there are following cases:

Case 1: When the third terminal device successfully decodes the data of the first terminal device, and a cast type indicated by the first SCI is unicast, the third terminal device does not send the assistance information to the first terminal device. A reason is as follows: If the third terminal device successfully decodes the data of the first terminal device, the first terminal device no longer retransmits the data to the third terminal device, and no longer uses the retransmission resource of the current TB. In this case, even if a conflict occurs on the retransmission resource of the current TB, there is no impact. In this case, signaling overheads can be reduced if the assistance information is not sent.

Case 2 (corresponding to the condition 18): When the third terminal device successfully decodes the data of the first terminal device, and a cast type indicated by the first SCI is a multicast option 1 or a multicast option 2, if a quantity of retransmissions of the data of the first terminal device received by the third terminal device is greater than a retransmission threshold, the third terminal device sends the assistance information to the first terminal device. A reason is as follows: When the cast type indicated by the first SCI is the multicast option 1 or the multicast option 2, another terminal device in addition to the third terminal device may receive the data of the first terminal device. Although the third terminal device can successfully decode the data of the first terminal device, the another terminal device may fail to successfully decode the data of the first terminal device and sends a HARQ-NACK message to the first terminal device, so that the first terminal device retransmits the data. The receiving failure of the another terminal device may be caused by interference caused due to a conflict between the resources indicated by the first SCI and the resources indicated by the second SCI. In this case, sending the assistance information may help the first terminal device successfully send the data.

The third terminal device sends the assistance information to the first terminal device, to assist the first terminal device in resource selection, so that it can be ensured that the data sent by the first terminal device through multicast is not affected by a resource conflict, thereby ensuring the data transmission reliability. It should be noted that when the HARQ-ACK message conflicts with the assistance information, the third terminal device sends the HARQ-ACK message.

Case 3 (corresponding to the condition 13): When the third terminal device does not successfully decode the data of the first terminal device, the third terminal device may send the assistance information to the first terminal device. A reason is as follows: If the third terminal device does not successfully decode the data of the first terminal device or the third terminal device sends the HARQ-NACK message to the first terminal device, it indicates that external interference is relatively strong. It is probable that the third terminal device fails to successfully receive the data from the first terminal device because interference is caused due to a conflict between the resources indicated by the first SCI and the resources indicated by the second SCI. In this case, sending the assistance information can help the first terminal device avoid using a conflict resource, help the first terminal device improve the data transmission reliability, and improve data receiving reliability of the third terminal device.

Therefore, the third terminal device may send the assistance information to the first terminal device, to assist the first terminal device in resource selection, so that it can be ensured that the data sent by the first terminal device is not affected by a resource conflict, thereby ensuring the data transmission reliability.

It should be noted that, as described above for the HARQ, the third terminal device may send the assistance information to the first terminal device instead of sending the HARQ-NACK message. In this case, in addition to the foregoing meaning, the assistance information may further indicate that the third terminal device does not successfully decode the data of the first terminal device, so that signaling overheads can be reduced. In addition, the assistance information may be used to request data retransmission. Alternatively, the third terminal device may send the HARQ-NACK message to the first terminal device, instead of sending the assistance information. This is because sending the assistance information by the third terminal device indicates a resource conflict but does not indicate a data receiving failure. In this case, the third terminal device sends the HARQ-NACK message to request data retransmission.

In another aspect, for a resource (a periodic resource) conflict of another TB (that is, a conflict resource is not a data retransmission resource), there are following cases:

Case 4 (corresponding to the condition 14): When the third terminal device successfully decodes the data of the first terminal device, the third terminal device sends the assistance information to the first terminal device. A reason is as follows: If the third terminal device successfully decodes the data of the first terminal device, the first terminal device no longer retransmits the data to the third terminal device, and no long uses a retransmission resource of a current TB. However, the first terminal device may further send data on a resource (that is, the periodic resource indicated by the first SCI) of another TB. Therefore, if the assistance information indicates that a conflict occurs on the resources of the another TB, sending of the assistance information is meaningful. This can help the first terminal device avoid transmitting another TB on a conflict resource, and improve the data transmission reliability. The current TB is a TB scheduled by the first SCI, and the another TB is a TB that corresponds to another reserved resource and that is obtained based on the resources of the current TB and the resource reservation periodicity that are indicated by the first SCI.

The third terminal device sends the assistance information to the first terminal device, to assist the first terminal device in resource selection, so that it can be ensured that the data sent by the first terminal device on the periodic resource is not affected by a resource conflict, thereby ensuring data transmission reliability.

Case 5 (corresponding to the condition 13): When the third terminal device does not successfully decode the data of the first terminal device, the third terminal device sends the assistance information to the first terminal device. A reason is as follows: If the third terminal device does not successfully decode the data of the first terminal device or the third terminal device sends the HARQ-NACK message to the first terminal device, it indicates that external interference is relatively strong. It is probable that the third terminal device does not successfully receive the data from the first terminal device because interference is caused due to a conflict between the resources indicated by the first SCI and the resources indicated by the second SCI. In this case, sending the assistance information can help the first terminal device avoid using a conflict resource, help the first terminal device improve the data transmission reliability, and improve data receiving reliability of the third terminal device.

The third terminal device sends the assistance information to the first terminal device, to assist the first terminal device in resource selection, so that it can be ensured that the data sent by the first terminal device is not affected by a resource conflict, thereby ensuring the data transmission reliability. It should be noted that when the HARQ-NACK message conflicts with the assistance information, the first terminal device sends the assistance information.

In addition, if the third terminal device is not the receiver of the data scheduled by the first SCI (that is, the third terminal device does not receive the data of the first terminal device), the third terminal device detects that the resources indicated by the first SCI overlap with the resources indicated by the second SCI, and sending time of a HARQ associated with SCI is earlier than sending time of assistance information associated with the same SCI, the third terminal device blindly detects a HARQ (that is, a HARQ from another terminal device for data sent by the first terminal device) corresponding to the resources indicated by first RCI. If all HARQs blindly detected by the third terminal device are HARQ-ACK messages, the third terminal device does not send the assistance information. This may correspond to the foregoing case 1, case 2, and case 4. If the third terminal device blindly detects at least one HARQ-NACK message, the third terminal device sends the assistance information to the first terminal device. This may correspond to the foregoing case 3 and case 5. In this case, the first terminal device may perform retransmission based on the assistance information until a maximum quantity of retransmissions is reached, and a conflict resource is no longer used during retransmission. The HARQ of the data sent by the first terminal device is a NACK, because interference is caused due to a conflict between the resources indicated by the first SCI and the resources indicated by the second SCI. Consequently, the another terminal device does not successfully decode the data of the first terminal device.

The following describes occasions for the third terminal device to send the assistance information to the first terminal device if no PSFCH resource is configured in a resource pool, that is, a configuration periodicity of the PSFCH resource is 0, or the first SCI indicates that the HARQ is disabled, or the cast type indicated by the first SCI is the broadcast, and the first terminal device performs blind retransmission during data transmission.

In a possible implementation, if the third terminal device determines, based on at least one of the condition 1 to the condition 11 described above, that the resources indicated by the first SCI conflict with the resources indicated by the second SCI, the third terminal device sends the assistance information to the first terminal device. If no resource conflict is detected, the assistance information is not sent.

In another possible implementation, if the third terminal device determines, based on at least one of the condition 1 to the condition 11 described above, that the resources indicated by the first SCI conflict with the resources indicated by the second SCI, a reserved resource of a current TB indicated by the first SCI conflicts with the resources indicated by the second SCI, and the third terminal device successfully decodes the data of the first terminal device, the third terminal device does not send the assistance information.

If the third terminal device determines, based on at least one of the condition 1 to the condition 11 described above, that the resources indicated by the first SCI conflict with the resources indicated by the second SCI, a resource reserved for a current TB indicated by the first SCI conflicts with the resources indicated by the second SCI, and the third terminal device does not successfully decode the data of the first terminal device, the third terminal device sends the assistance information to the first terminal device. In this case, the first terminal device may perform retransmission based on the assistance information until a maximum quantity of retransmissions is reached, and the conflict resource is not used. It may be considered that when any one of the condition 1 to the condition 11 is met, and the condition 16 is further met, this implementation is executed.

In still another possible implementation, if the third terminal device determines, based on at least one of the condition 1 to the condition 11 described above, that the resources indicated by the first SCI conflict with the resources indicated by the second SCI, and a conflict occurs on a resource of another TB, the third terminal device sends the assistance information to the first terminal device regardless of whether the third terminal device successfully decodes the data of the first terminal device. It may be considered that when any one of the condition 1 to the condition 11 is met, and the condition 17 is further met, this implementation is executed.

In still another possible implementation, if the third terminal device determines, based on at least one of the condition 1 to the condition 11 described above, that the resources indicated by the first SCI conflict with the resources indicated by the second SCI, and the third terminal device successfully decodes the data of the first terminal device, the third terminal device does not send the assistance information. If the third terminal device determines, based on at least one of the condition 1 to the condition 11 described above, that the resources indicated by the first SCI conflict with the resources indicated by the second SCI, and the third terminal device does not successfully decode the data of the first terminal device, the third terminal device may send the assistance information to the first terminal device. In this case, the first terminal device may perform retransmission based on the assistance information until a maximum quantity of retransmissions is reached, and a conflict resource is not used.

In addition, the third terminal device may alternatively determine, based on channel quality or a channel congestion status, whether to send the assistance information. In other words, when at least one of the foregoing condition 1 to condition 19 is met, the third terminal device may further determine, based on the channel quality or the channel congestion status, whether to send the assistance information.

In a possible implementation, the third terminal device may send the assistance information when channel congestion is not serious, that is, the third terminal device sends the assistance information when a channel busy ratio (channel busy ratio, CBR) is less than a CBR threshold. A reason is as follows: When the channel congestion is severe, sending the assistance information aggravates the channel congestion. Therefore, from a perspective of system performance, sending the assistance information when the channel is not congested is more meaningful.

In another possible implementation, the third terminal device may send the assistance information when a channel condition is good. That the channel condition is good includes: an RSRP measurement value measured on a reference signal associated with SCI sent by the first terminal device is greater than an RSRP threshold, an RSSI measurement value measured on the reference signal associated with the SCI sent by the first terminal device is greater than an RSSI threshold, a distance between the third terminal device and the first terminal device is less than a distance threshold, or a CQI of the first terminal device is greater than a CQI threshold. A reason is as follows: When the channel condition is poor, the third terminal device sends the assistance information, and the first terminal device may fail to receive the assistance information. When the channel condition is good, the first terminal device is more likely to receive the assistance information. Therefore, from a perspective of system design, when the channel condition is poor, sending the assistance information increases a quantity of redundant transmissions.

S804: The first terminal device selects a resource based on the assistance information.

Optionally, the second terminal device selects a resource based on the assistance information.

In this embodiment of this application, selecting a resource may also be referred to as reselecting a resource or reevaluating a resource, may be understood as that a resource indicated as a conflict resource is not used or a resource indicated as a conflict resource is skipped, or may be referred to as resource retransmission, resource selection, resource preemption check, resource re-evaluation, or the like. Skipping the resource indicated as a conflict resource may be understood as that the resource indicated as a conflict resource is not used, and the next reserved resource of the resource indicated as a conflict resource is used.

In a scenario in which the first terminal device and the second terminal device are hidden nodes of each other, the resource selected by the first terminal device does not overlap with the resource indicated by the first SCI. In other words, the first terminal device has no requirement on time domain of the selected resource, and the selected resource and the resources indicated by the first SCI may overlap in time domain. This is because the third terminal device sends the RCI, and indicates that a conflict occurs on the resources indicated by the first SCI. In this case, using the conflict resource by the third terminal device causes a decrease of data transmission reliability or a failure of transmission. Therefore, in this case, the third terminal device no longer uses the resource indicated as a conflict resource, but performs resource reselection, performs resource evaluation, performs resource preemption check, or reselects a resource.

The resource selected by the second terminal device does not overlap with the resource indicated by the second SCI. In other words, the second terminal device has no requirement on time domain of the selected resource, and the selected resource and the resources indicated by the second SCI may overlap in time domain.

For a scenario in which the first terminal device and the second terminal device perform half-duplex communication, a requirement is stricter. The resource selected by the first terminal device and the resource indicated by the first SCI do not overlap in time domain. The resource selected by the second terminal device and the resources indicated by the second SCI do not overlap in time domain. This is because the first terminal device cannot receive data transmitted to the first terminal device if the first terminal device continues to use a time domain resource when a conflict occurs on the resource.

Corresponding to the foregoing case 1 to case 5, actions performed by the first terminal device may include the following several manners:

Case 1: For actions of the first terminal device (an assisted terminal device) that uses a resource allocation mode 2 and the first terminal device that uses a resource allocation mode 1, when receiving a HARQ-ACK message, the first terminal device releases a resource reserved for retransmission. Although the first terminal device does not receive the assistance information, data transmission of the first terminal device is not affected.

Case 2: For the first terminal device that uses a resource allocation mode 2, if the first terminal device receives the assistance information, the first terminal device does not use a conflict resource for retransmission, or reselects a resource for retransmission or re-evaluates a resource for retransmission. For the first terminal device that uses the resource allocation mode 1, if the first terminal device receives the assistance information, a sidelink HARQ carried on a PUCCH sent to a base station is a HARQ-NACK message.

Case 3: For the first terminal device that uses a resource allocation mode 2, if receiving a HARQ-NACK message, the first terminal device performs retransmission by using a reserved resource. However, if receiving the assistance information, the first terminal device does not use a resource on which a conflict occurs for retransmission, or reselects a resource or re-evaluates resource for retransmission. For the first terminal device that uses a resource allocation mode 1, if the first terminal device receives the HARQ-NACK message and/or the assistance information, a sidelink HARQ carried in on a PUCCH sent to a base station is the HARQ-NACK message.

Case 4: For the first terminal device that uses a resource allocation mode 2, if receiving a HARQ-ACK message, the first terminal device releases a resource reserved for retransmission. If the first terminal device receives the assistance information, and the assistance information indicates a periodic resource conflict, the first terminal device does not use a conflict resource for transmission, but reselects or re-evaluates a resource. For the first terminal device that uses a resource allocation mode 1, if the first terminal device receives the HARQ-ACK message and/or the assistance information, a sidelink HARQ carried on a PUCCH sent to a base station is a HARQ-NACK message. To be specific, the first terminal device requests, from the base station, a resource for retransmission.

Case 5: For the first terminal device that uses a resource allocation mode 2, if receiving a HARQ-NACK message, the first terminal device performs retransmission by using a reserved resource. If the first terminal device receives the assistance information, the first terminal device does not use a conflict resource for transmission, but reselects or re-evaluates a resource. For the first terminal device that uses a resource allocation mode 1, if the first terminal device receives the HARQ-NACK message and/or the assistance information, a sidelink HARQ carried on a PUCCH sent to a base station is a HARQ-NACK message.

In addition, if the sidelink HARQ is enabled, the first terminal device may determine, based on the HARQ, whether to receive the assistance information, or determine whether the assistance information is valid information.

Sidelink HARQ: A set of time-frequency resources for sidelink transmission is referred to as a resource pool. If no PSFCH resource is configured in the resource pool, the sidelink HARQ is disabled, or otherwise, the sidelink HARQ is enabled. The HARQ can be enabled by data transmitted in the resource pool. In this case, if the SCI indicates that the HARQ is enabled, the HARQ-ACK message or the HARQ-NACK message needs to be fed back for the data scheduled by the SCI. If the SCI indicates that the HARQ is disabled, the HARQ-ACK message or the HARQ-NACK message does not need to be fed back.

When the cast type indicated by the first SCI is the unicast, there are following cases:

When the first terminal device receives the HARQ-ACK message, if the assistance information does not support indicating a resource conflict of another TB, the first terminal device no longer receives the assistance information, so that signaling overheads can be reduced; or if the assistance information supports indicating a resource conflict of another TB, the first terminal device receives the assistance information.

When the first terminal device receives the HARQ-NACK message, the first terminal device receives the assistance information, regardless of whether the assistance information supports indicating a resource conflict of another TB.

When the HARQ is discontinuous transmission (discontinuous transmission, DTX), and the first terminal device does not receive the HARQ, the first terminal device is triggered to perform retransmission. Therefore, the first terminal device receives the assistance information, to avoid a conflict on a resource for retransmission.

When the cast type indicated by the first SCI is the multicast option 1, the first terminal device receives the assistance information regardless of whether the first terminal device receives the HARQ.

When the cast type indicated by the first SCI is the multicast option 2, there are following cases:

When the first terminal device receives the HARQ-NACK message, the first terminal device receives the assistance information.

When HARQ feedbacks received by the first terminal device are all HARQ-ACK messages, the first terminal device does not receive the assistance information.

When the first terminal device does not receive the HARQ feedback (which may be a HARQ-NACK message or a HARQ-ACK message) of the at least one terminal device, the first terminal device receives the assistance information.

After the first terminal device receives the assistance information, if the assistance information is a pre-conflict (Pre-conflict) indication, the first terminal device no longer uses a conflict resource, but uses the next resource reserved for retransmission or reselects a resource. If the assistance information is a post-conflict (Post-conflict) indication, the first terminal device performs retransmission.

In this embodiment of this application, the third terminal device may alternatively send the assistance information to the second terminal device. In other words, the third terminal device may send the assistance information to the first terminal device and the second terminal device. It may be understood that this embodiment of this application may be further described as follows:

The third terminal device detects first sidelink control information SCI from a first terminal device and second SCI from a second terminal device, where one or more resources indicated by the first SCI overlap with one or more resources indicated by the second SCI.

The third terminal device sends assistance information to at least one of the first terminal device and the second terminal device when at least one of the following conditions is met, where the assistance information is used to assist in resource selection, and the at least one of the first terminal device and the second terminal device selects a resource based on the assistance information:

The first terminal device is a receiver of data scheduled by the second SCI.

The third terminal device is a receiver of data scheduled by the first SCI, and the third terminal device is a receiver of data scheduled by the second SCI.

The third terminal device is a receiver of data scheduled by the first SCI, and a reference signal received power RSRP measurement value corresponding to the second SCI is greater than a first RSRP threshold.

The third terminal device is a receiver of data scheduled by the first SCI, and a received signal strength indicator RSSI measurement value corresponding to the second SCI is greater than a first RSSI threshold.

The third terminal device is a receiver of data scheduled by the first SCI, and a distance between the third terminal device and the second terminal device is less than a first distance threshold.

The third terminal device is a receiver of data scheduled by the first SCI, and a channel quality indicator CQI of the second terminal device is greater than a first CQI threshold.

The third terminal device detects that a hybrid automatic repeat request feedback corresponding to data scheduled by the first SCI is a negative acknowledgment.

The third terminal device does not successfully decode data of the first terminal device;

The third terminal device successfully decodes data of the first terminal device, and an overlapping resource is located in one or more periodic resources indicated by the first SCI.

The third terminal device successfully decodes data of the first terminal device, a cast type indicated by the first SCI is a multicast option 1 or a multicast option 2, and a quantity of retransmissions of the data of the first terminal device received by the third terminal device is greater than a retransmission threshold.

According to the communication method provided in this embodiment of this application, when the resources indicated by the first SCI from the first terminal device overlap with the resources indicated by the second SCI from the second terminal device, the third terminal device determines, based on a specific condition, that at least one of the first terminal device and the second terminal device cannot receive, due to a half-duplex communication problem, SCI sent by the other one when sending SCI. In this case, a resource used or reserved by the other one conflicts with a resource used or reserved by the at least one of the first terminal device and the second terminal device. In other words, the resources indicated by the first SCI conflict with the resources indicated by the second SCI. Alternatively, when the resources indicated by the first SCI overlap with the resources indicated by the second SCI, the third terminal device determines, based on some conditions, that the third terminal device serves as the receiver of the data scheduled by the first SCI from the first terminal device. Communication of the second terminal device causes interference to communication between the first terminal device and the third terminal device. Consequently, the resources indicated by the first SCI conflict with the resources indicated by the second SCI. In either of the two cases, the third terminal device sends the assistance information to the first terminal device, to assist the first terminal device in resource selection. Alternatively, when the resources indicated by the first SCI overlap with the resources indicated by the second SCI, the third terminal device determines, based on some conditions, that the resource overlapping is a resource conflict, and further determines, based on some conditions, that a resource associated with the resource conflict is to be used. Therefore, the third terminal device sends the assistance information to the first terminal device, to assist the first terminal device in resource selection.

An embodiment of this application provides another communication method. When detecting that one or more resources indicated by first SCI overlap with one or more resources indicated by second SCI, a third terminal device sends first information to a first terminal device, where the first information includes a destination identifier indicated by the second SCI. In this case, the first terminal device determines, based on the destination identifier, that the resources indicated by the first SCI conflict with the resources indicated by the second SCI, so as to select a resource. The communication method may be applied to a scenario in which the first terminal device and a second terminal device perform half-duplex communication.

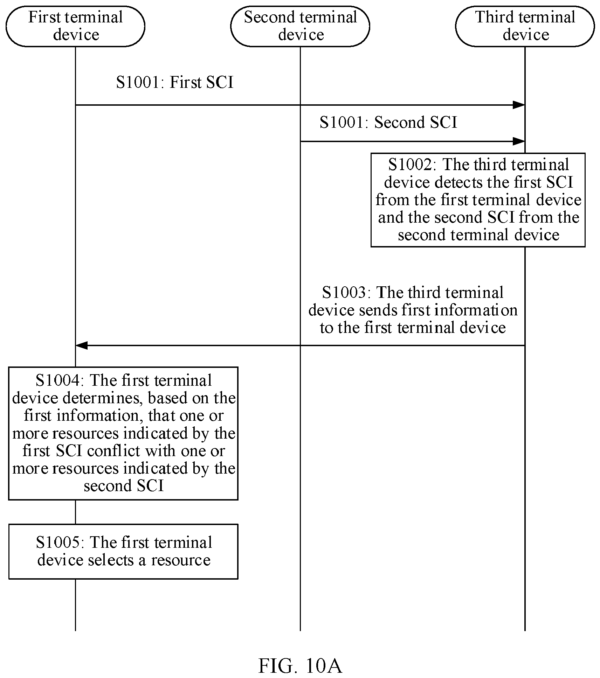

As shown in FIG. 10A, the communication method includes steps S1001 to S1005.

S1001: The first terminal device sends the first SCI, and the second terminal device sends the second SCI.

For this step, refer to step S801. Details are not described herein again.

S1002: The third terminal device detects the first SCI from the first terminal device and the second SCI from the second terminal device.

For this step, refer to step S802. Details are not described herein again.

S1003: The third terminal device sends the first information to the first terminal device.

Correspondingly, the first terminal device receives the first information.

The first information includes a destination identifier (corresponding to a destination identifier field) indicated by the second SCI. Optionally, the first information may further include a cast type (corresponding to a cast type indication field) indicated by the second SCI. Optionally, the first information may further include a source identifier (corresponding to a source identifier field) indicated by the second SCI. Optionally, the first information may further include time domain resource indication information (corresponding to a time domain resource allocation field) in the second SCI. Optionally, the first information may further include a priority value (corresponding to a priority field) in the second SCI. The first SCI and the second SCI include 2nd-stage SCI.

If a priority value indicated by the first SCI is higher than a priority value indicated by the second SCI, in other words, a priority of data scheduled by the first SCI is lower than a priority of data scheduled by the second SCI, the third terminal device may send the first information to the first terminal device, so that the first terminal device transmitting low-priority data reselects a resource.

For example, the time domain resource indication information may be in a form of a bitmap (bitmap), and a length of the bitmap (bitmap) may be a preset length, a length of a preconfigured value, or a length configured in a resource pool. For example, the length of the bitmap (bitmap) is 3, which corresponds to resources R2, R3, and R4 indicated by the first SCI. A value of 1 indicates that a conflict occurs on the resources, and a value of 0 indicates that no conflict occurs on the resources. When the bitmap (bitmap) is 101, it indicates that the resource R2 conflicts with the resource R4, and no conflict occurs on the resource R2.

S1004: The first terminal device determines, based on the first information, that the resources indicated by the first SCI conflict with the resources indicated by the second SCI.

This step may include several implementations below.

In a possible implementation, if the cast type indicated by the second SCI is a multicast option 1, a multicast option 2, or broadcast, the first information may not include the cast type indicated by the second SCI. The first terminal device may determine, based on the destination identifier included in the first information, that the first terminal device is a receiver of data sent by the second terminal device. Due to a half-duplex limitation, the first terminal device fails to receive the second SCI when sending the first SCI. Therefore, the first terminal device determines that the resources indicated by the first SCI conflict with the resources indicated by the second SCI.

For example, if a destination identifier (destination ID) included in the first information is equal to a 16-bit LSB of a layer 2 source identifier (or referred to as a source layer 2 identifier) of the first terminal device, the first terminal device may determine that the first terminal device is a receiver of data sent by the second terminal device.

In a possible implementation, the first terminal device may determine, based on a cast type and a destination identifier that are included in the first information, that the first terminal device is a receiver of data sent by the second terminal device. Due to a half-duplex limitation, the first terminal device fails to receive the second SCI when sending the first SCI. Therefore, the first terminal device determines that the resources indicated by the first SCI conflict with the resources indicated by the second SCI.

When the first terminal device is an assisted terminal device, a resource conflict is that a next to-be-used resource in the resources indicated by the first SCI conflicts with the resources indicated by the second SCI. For example, resources used and reserved by the first terminal device and indicated by the first SCI are R1, R2, and R3. The resource conflict herein is that the resource R2 indicated by the first SCI conflicts with the resources indicated by the second SCI.

For example, when a cast type included in the first information is a multicast option 1, a multicast option 2, or broadcast, if a destination identifier (destination ID) included in the first information is equal to a 16-bit LSB of a layer 2 source identifier (or referred to as a source layer 2 identifier) of the first terminal device, the first terminal device may determine that the first terminal device is a receiver of data sent by the second terminal device.

In another possible implementation, the first terminal device may determine, based on a cast type, a destination identifier, and a source identifier that are included in the first information, that the first terminal device is a receiver of data sent by the second terminal device. Due to a half-duplex limitation, the first terminal device fails to receive the second SCI when sending the first SCI. Therefore, the first terminal device determines that the resources indicated by the first SCI conflict with the resources indicated by the second SCI.

For example, when the cast type included in the first information is unicast, the destination identifier included in the first information is equal to a 16-bit LSB of a layer 2 source identifier (or referred to as a source layer 2 identifier) of the first terminal device, and the source identifier included in the first information is equal to an 8-bit LSB of a layer 2 destination identifier (or referred to as a destination layer 2 identifier) of the first terminal device. In this case, the first terminal device may determine that the first terminal device is a receiver of data sent by the second terminal device.

Optionally, the first terminal device may further determine a conflict resource based on the time domain resource indication information included in the first information. The conflict resource is a resource that is indicated by the time domain resource indication information and that overlaps with, in time domain, a resource used or reserved by the first terminal device.

Optionally, the first terminal device may further determine, based on a priority value included in the first information, whether to select a resource. If the priority value included in the first information is less than or equal to the priority value indicated by the second SCI, a resource is selected. For example, if the priority value included in the first information is greater than or equal to the priority value indicated by the first SCI, the first terminal device considers that sending is more important than receiving. In this case, data sending continues, and no resource is selected.

If the priority value included in the first information is less than or equal to the priority value indicated by the first SCI, the first terminal device considers that receiving is more important than sending. In this case, a resource is selected to avoid a resource conflict with the second terminal device.

S1005: The first terminal device selects a resource.

For details about selecting a resource by the first terminal device, refer to the descriptions of step S804. For other content, refer to the descriptions of the scenario in which the first terminal device and the second terminal device perform half-duplex communication in step S804. Details are not described herein again.

According to the foregoing communication method provided in this embodiment of this application, when the resources indicated by the first SCI from the first terminal device overlap with the resources indicated by the second SCI from the second terminal device, the third terminal device sends, to the first terminal device, the cast type and the destination identifier that are indicated by the SCI of the second terminal device, so that the first terminal device determines, based on the destination identifier, that the first terminal device fails to receive the SCI of the second terminal device due to half-duplex, and therefore determines that the resources indicated by the first SCI conflict with the resources indicated by the second SCI.

An embodiment of this application provides another communication method. When detecting that one or more resources indicated by first SCI overlap with one or more resources indicated by second SCI, a third terminal device sends first information to a first terminal device, where the first information includes a destination identifier indicated by the second SCI. In this case, the first terminal device determines, based on the destination identifier, that the resources indicated by the first SCI conflict with the resources indicated by the second SCI, so as to select a resource. The communication method may be applied to a scenario in which the first terminal device and the second terminal device perform half-duplex communication.

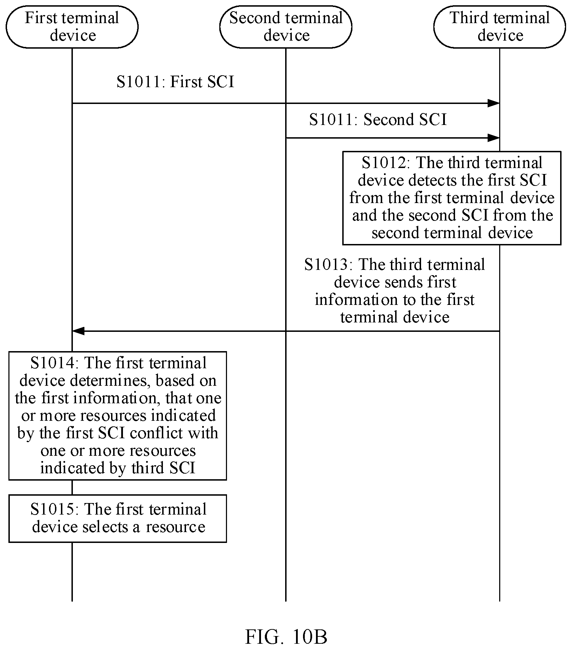

As shown in FIG. 10B, the communication method includes steps S1011 to S1015.

S1011: The first terminal device sends the first SCI, and the second terminal device sends the second SCI.

For this step, refer to step S801. Details are not described herein again.

S1012: The third terminal device detects the first SCI and at least one piece of second SCI.

It should be noted that the second terminal device may include one or more terminal devices, and correspondingly the second SCI may include one or more pieces of SCI.

The first SCI is from the first terminal device, and each piece of second SCI is from one second terminal device, or each second terminal device is a transmitter of one piece of third SCI.

For an explanation of overlapping between the resources indicated by the first SCI and the resources indicated by the second SCI, refer to step S802. Details are not described herein again.

S1013: The third terminal device sends first information to the first terminal device.

Correspondingly, the first terminal device receives the first information.

The first information includes a destination identifier (corresponding to a destination identifier field in 2nd-stage SCI) indicated by the third SCI. Optionally, the first information may further include a cast type (corresponding to a cast type indication field in the 2nd-stage SCI) indicated by the third SCI. Optionally, the first information may further include a source identifier (corresponding to a source identifier field in the 2nd-stage SCI) indicated by the third SCI. Optionally, the first information may further include time domain resource indication information (corresponding to a time domain resource allocation field in 1st-stage SCI) in the first SCI. Optionally, the first information may further include a priority value (corresponding to a priority field in the 1st-stage SCI) in the third SCI. Optionally, the first information may further include time-frequency resource indication information (corresponding to a time domain resource allocation field and a frequency domain resource allocation field in the 1st-stage SCI) in the third SCI. Optionally, the first information may further include a value of a DST field in a MAC PDU subheader (MAC subheader) of a PSSCH. Optionally, the first information may further include a value of an SRC field in a MAC PDU subheader of the PSSCH. The first SCI and the third SCI include the 2nd-stage SCI and/or the 1st-stage SCI. The third SCI is one or more pieces of SCI in the at least one piece of second SCI. Optionally, the third SCI may further include the MAC PDU subheader of the PSSCH. In this case, the first information includes the value of the SRC field or the value of the DST field in the MAC PDU subheader. For specific descriptions of the SRC field and the DST field, refer to the condition 3 in step S803.

When the second terminal device is one terminal device, the third SCI may be the second SCI.

When the second terminal device includes a plurality of terminal devices, that is, the second SCI includes a plurality of pieces of SCI, there are following cases:

In a possible implementation, in the resources indicated by the second SCI, if a resource that overlaps with the resources indicated by the first SCI is an overlapping resource, the third SCI is SCI that is in the at least one piece of second SCI and that has a largest quantity of overlapping resources. In other words, there are a largest quantity of overlapping resources between the resources indicated by the third SCI in the second SCI and the resources indicated by the first SCI. A larger quantity of overlapping resources indicates a greater potential impact of the second terminal device on future transmission of the first terminal device. Therefore, corresponding first information is worthier of being indicated to the first terminal device.

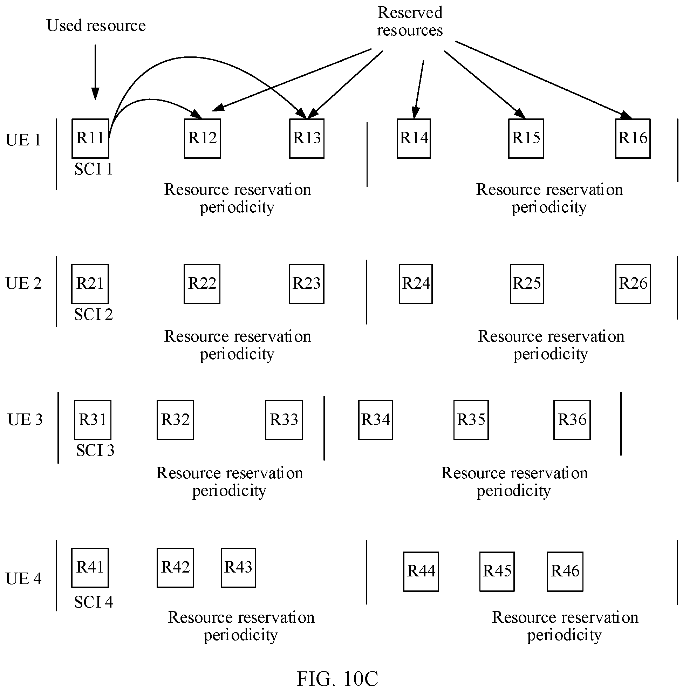

For example, as shown in FIG. 10C, it is assumed that the first terminal device is UE 1, and the second terminal device includes UE 2 to UE 4. There are six overlapping resources between resources indicated by SCI 2 sent by the UE 2 and resources indicated by SCI 1 sent by the UE 1, and there are less than six overlapping resources between resources indicated by SCI sent by another UE and the resources indicated by the SCI 1 sent by the UE 1. In this case, the third SCI is the SCI 2 sent by the UE 2, that is, the third terminal device may send, to the UE 1, first information corresponding to the SCI 2.

In another possible implementation, the third SCI may be SCI that in the at least one piece of second SCI and that indicates a smallest priority value. In this implementation, the first terminal device may not miss receiving of an important data packet (indicated by the smallest priority value).

For example, it is assumed that a priority value indicated by the SCI 1 sent by the UE 1 is 3, a priority value indicated by the SCI 2 sent by the UE 2 is 1, a priority value indicated by SCI 3 sent by the UE 3 is 7, and a priority value indicated by SCI 4 sent by the UE 4 is 5. In this case, the third SCI is the SCI 2 sent by the UE 2, that is, the third terminal device may send, to the UE 1, the first information corresponding to the SCI 2.

In still another possible implementation, the third SCI may be SCI that is in the at least one piece of second SCI and that indicates one or more resources overlapping with the resources indicated by the first SCI. In this implementation, the first terminal device can obtain most information, so that the first terminal device can identify a data packet that should be received but is not received, and further select a resource more flexibly (choose to perform sending or receiving, and further choose to receive one or more data packets if choosing to perform receiving).

For example, as shown in FIG. 10C, the resources indicated by the SCI 2 sent by the UE 2, resources indicated by SCI 3 sent by the UE 3, and resources indicated by SCI 4 sent by the UE 4 all overlap with the resources indicated by the SCI 1 sent by the UE 1. In this case, the third SCI includes the SCI 2 to the SCI 4, and the third terminal device may send, to the UE 1, first information corresponding to the SCI 2 to the SCI 4. It should be noted that, among the resources indicated by the SCI 3 and the resources indicated by the SCI 1, only a used resource R1 is an overlapping resource. In this case, the third terminal device may send, to the UE 1, first information corresponding to the SCI 3, or may not send first information corresponding to the SCI 3.

In still another possible implementation, the third SCI may be SCI that is in the at least one piece of second SCI and that indicates a resource reservation periodicity the same as a resource reservation periodicity indicated by the first SCI. In this case, one or more resources indicated by a time domain resource allocation field in the third SCI and one or more resources indicated by a time domain resource allocation field in the first SCI overlap in time domain, and a resource reservation periodicity indicated by the third SCI is the same as the resource reservation periodicity indicated by the first SCI, so that the resources indicated by the third SCI and the resources indicated by the first SCI continuously overlap in a plurality of resource reservation periodicities. If the first terminal device needs to receive a data packet sent by the second terminal device, due to the continuous overlapping, the first terminal device may continuously fail to receive the data packet sent by the second terminal device. This implementation can avoid that the first terminal device continuously fails to receive the data packet.

For example, as shown in FIG. 10C, the resources (a resource R21 used for a current TB and resources R22 and R23 reserved for the current TB) indicated by the SCI 2 sent by the UE 2 overlap with the resources (a resource R11 used by a current TB and resources R12 and R13 reserved for the current TB) indicated by the SCI 1 sent by the UE 1, and a resource reservation periodicity indicated by the SCI 2 is the same as a resource reservation periodicity indicated by the SCI 1. In this case, the third SCI is the SCI 2 sent by the UE 2, that is, the third terminal device may send, to the UE 1, the first information corresponding to the SCI 2.

In still another possible implementation, the third SCI may be SCI that is in the at least one piece of second SCI and that indicates a periodic reserved resource the same as a periodic reserved resource indicated by the first SCI. In this case, at least one of resources indicated by the time domain resource allocation field in the third SCI and at least one of the resources indicated by the time domain resource allocation field in the first SCI overlap in time domain, and the resource reservation periodicity indicated by the third SCI is the same as the resource reservation periodicity indicated by the first SCI, so that the periodic reserved resources indicated by the third SCI continuously overlap the periodic reserved resources indicated by the first SCI. Consequently, the first terminal device fails to receive a data packet in the periodic reserved resources. This implementation can avoid that the first terminal device fails to receive data packets in periodic reserved resources.

For example, as shown in FIG. 10C, if a periodic reserved resource R44 indicated by the SCI 4 sent by the UE 4 overlaps with a periodic reserved resource R14 indicated by the SCI 1 sent by the UE 1, the third SCI is the SCI 4 sent by the UE 4. In other words, the third terminal device may send, to the UE 1, first information corresponding to the SCI 4.

The third terminal device sends the first information to the first terminal device, so that it can be ensured that the first terminal device obtains information that cannot be received due to a half-duplex limitation. Therefore, the first terminal device can determine slots that are used for sending data and in which there is data to-be-received, and determine whether to reselect a resource for receiving the data (which means changing the slot for sending the data). The resources indicated by the third SCI include a currently used resource and a resource reserved for future transmission. It is assumed that after receiving the first information, the first terminal device determines that a resource reserved for to-be-sent data overlaps with a resource reserved for to-be-received data. In this case, the first terminal device may choose to receive the data or send the data in the future.

When a cast type indicated by 2$^{nd}$-stage SCI included in the third SCI is a multicast option 1, the first information may further include a time-frequency resource indicated by the third SCI (that is, a time-frequency resource indicated by the time domain resource allocation field and the frequency domain resource allocation field included in the third SCI). In this case, the third terminal device sends the first information to the first terminal device, so that the first terminal device determines that the resources indicated by the first SCI conflict with the resources indicated by the third SCI. Before feeding back a NACK to the second terminal device, the first terminal device may determine, based on a time-frequency resource indicated by 1$^{st}$-stage SCI of the third SCI, a location of a PSFCH resource for feeding back the NACK, and feed back the NACK, so that the second terminal device performs retransmission. This avoids a case in which the first terminal device cannot receive a data packet because the second terminal device does not retransmit the data packet when another terminal device successfully decodes the data packet. It should be noted that, in this case, that the resources indicated by the first SCI overlap with the resources indicated by the third SCI may be understood as: A used resource in the resources indicated by the first SCI and a used resource in resources indicated by the third SCI overlap in time domain. Herein, the used resource in the resources indicated by the SCI may be understood as a resource used for SCI scheduling, or referred to as the first resource in the resources indicated by the SCI.

In a possible implementation, the cast type corresponding to the third SCI is a multicast option 1. In this case, the first information includes the destination identifier and the time-frequency resource indication information that are indicated by the third SCI. Optionally, when the first information includes the destination identifier and the time-frequency resource indication information that are indicated by the third SCI, the first terminal device determines, based on the first information, whether to feed back a HARQ-NACK for the data scheduled by the third SCI. For example, the first terminal device determines, based on the destination identifier indicated by the third SCI, whether the first terminal device is a receiver of data sent by the second terminal device. If the first terminal device is the receiver, the first terminal device feeds back the HARQ-NACK, to request retransmission. The time-frequency resource indication information indicated by the third SCI is used to determine a location of a corresponding PSFCH resource, so that the first terminal device sends the HARQ-NACK on a PSFCH resource.

If a priority value indicated by the first SCI is greater than a priority value indicated by the third SCI, in other words, a priority of data scheduled by the first SCI is lower than a priority of data scheduled by the third SCI, the third terminal device may send the first information to the first terminal device, so that the first terminal device transmitting low-priority data reselects a resource, and data with a higher priority is received in the slot. If the third SCI is a plurality of pieces of second SCI, the priority value indicated by the third SCI is the smallest value of priority values indicated by the plurality of pieces of second SCI.

The time domain resource indication information indicates a resource that overlaps with the resources indicated by the third SCI and that is in the resources indicated by the first SCI. For example, the time domain resource indication information may be in a form of a bitmap (bitmap), and a length of the bitmap (bitmap) may be a preset length, a length of a preconfigured value, or a length configured in a resource pool.

For example, as shown in FIG. 3, the length of the bitmap may be a quantity of resources determined based on the time domain resource allocation field and the frequency domain resource allocation field that are indicated by the 1st-stage SCI. The length of the bitmap is 1. Optionally, one bit may be used to indicate whether a resource R1 (a resource used by the first SCI for scheduling) indicated by the first SCI overlaps with another resource (overlaps with another transmission in time domain). Optionally, one bit may be used to indicate whether a resource R2 (the first one of the reserved resources in the resources indicated by the first SCI) indicated by the first SCI overlaps with another resource. Optionally, one bit may be used to indicate whether a resource R4 (the first one of the periodic reserved resources in the reserved resources in the resources indicated by the first SCI) indicated by the first SCI overlaps with another resource. The length of the bitmap is 2. Optionally, two bits may be used to indicate whether resources R1 and R2 indicated by the first SCI overlap. Optionally, two bits may be used to indicate whether resources R2 and R3 indicated by the first SCI overlap. Optionally, two bits may be used to indicate whether resources R2 and R4 indicated by the first SCI overlap. The length of the bitmap is 3. Optionally, three bits may be used to indicate whether resources R1, R2, and R3 indicated by the first SCI overlap. Optionally, three bits may be used to indicate whether resources R2, R3, and R4 indicated by the first SCI overlap. The length of the bitmap is 4. Optionally, four bits may be used to indicate whether resources R1, R2, R3, and R4 indicated by the first SCI overlap. The length of the bitmap is 6. Optionally, six bits may be used to indicate whether resources R1, R2, R3, R4, R5, and R6 indicated by the first SCI overlap.

For example, the length of the bitmap is 3, which corresponds to the resources R2, R3, and R4 indicated by the first SCI. A value of 1 indicates that a conflict occurs on the resources, and a value of 0 indicates that no conflict occurs on the resources. When the bitmap (bitmap) is 101, it indicates that the resource R2 conflicts with the resource R4, and no conflict occurs on the resource R2.

For example, the third terminal device may be a receiver of data scheduled by the first SCI, or may be any terminal device that has a receiving capability.

S1014: The first terminal device determines, based on the first information, that the resources indicated by the first SCI conflict with the resources indicated by the third SCI.

This step may include several implementations below.

In a possible implementation, the first terminal device may determine, based on the first information, that the first terminal device is the receiver of the data sent by the second terminal device. Herein, that the first terminal device determines, based on the first information, that the first terminal device is the receiver of the data sent by the second terminal device may also be understood or replaced with: The first terminal device determines that a destination identifier indicated by the second SCI is an identifier of the first terminal device. It may also be understood or replaced with: The first terminal device confirms that a destination identifier indicated by the third SCI is equal to a 16-bit LSB of a destination layer 2 identifier of the first terminal device. If the first terminal device is the receiver of the data sent by the second terminal device, due to a half-duplex limitation, the first terminal device fails to receive the second SCI when sending the first SCI. Therefore, the first terminal device determines that the resources indicated by the first SCI conflict with the resources indicated by the second SCI.

When the cast type indicated by the third SCI is a multicast option 1, a multicast option 2, or broadcast, the first information may not include the cast type indicated by the third SCI. The first terminal device may determine, based on the destination identifier, that the first terminal device is the receiver of the data of the second terminal device. That the cast type indicated by the third SCI herein is the broadcast or the multicast may be understood as: The cast type indicated by the third SCI is the broadcast, or the multicast used when the HARQ information is an ACK or a NACK, or the multicast used when HARQ information is only a NACK. Herein, that the first terminal device determines, based on the destination identifier, that the first terminal device is the receiver of the data of the second terminal device may be understood as: The first terminal device determines that the destination identifier indicated by the third SCI is equal to a 16-bit LSB of a destination layer 2 identifier of the first terminal device. If the first terminal device is the receiver of the data sent by the second terminal device, due to a half-duplex limitation, the first terminal device fails to receive the third SCI when sending the first SCI. Therefore, the first terminal device determines that the resources indicated by the first SCI conflict with the resources indicated by the third SCI.

For example, if a destination identifier (destination ID) included in the first information is equal to a 16-bit LSB of a layer 2 source identifier (or referred to as a source layer 2 identifier) of the first terminal device, the first terminal device may determine that the first terminal device is the receiver of the data sent by the second terminal device.

Alternatively, the first terminal device may determine, based on the cast type and the destination identifier that are included in the first information, that the first terminal device is the receiver of the data sent by the second terminal device. If the destination identifier included in the first information is equal to a 16-bit LSB of a layer 2 source identifier of the first terminal device, and the source identifier included in the first information is equal to an 8-bit LSB of a layer 2 destination identifier of the first terminal device, the first terminal device may determine that the first terminal device is the receiver of the data sent by the second terminal device. Due to a half-duplex limitation, the first terminal device fails to receive the third SCI when sending the first SCI. Therefore, the first terminal device determines that the resources indicated by the first SCI conflict with the resources indicated by the third SCI.

Alternatively, the first information includes a value of a DST field and a value of an SRC field in a MAC PDU subheader of a PSSCH scheduled by the third SCI. If the destination identifier included in the first information is equal to a 16-bit LSB of a layer 2 source identifier of the first terminal device, the value of the DST field included in the first information is equal to an 8-bit MSB of the layer 2 source identifier of the first terminal device, the source identifier included in the first information is equal to an 8-bit LSB of a layer 2 destination identifier of the first terminal device, and the value of the SRC field included in the first information is equal to a 16-bit MSB of the layer 2 destination identifier of the first terminal device, the first terminal device may determine that the first terminal device is the receiver of the data sent by the second terminal device.

For example, when the cast type included in the first information is a multicast option 1, a multicast option 2, or broadcast, if a destination identifier (destination ID) included in the first information is equal to a 16-bit LSB of a layer 2 source identifier (or referred to as a source layer 2 identifier) of the first terminal device, the first terminal device may determine that the first terminal device is the receiver of the data sent by the second terminal device.

Alternatively, the first information further includes a value of a DST field in a MAC PDU subheader of a PSSCH scheduled by the third SCI. If the destination identifier included in the first information is equal to a 16-bit LSB of a layer 2 source identifier of the first terminal device, and the value of the DST field in the MAC PDU subheader is equal to an 8-bit MSB of a layer 2 destination identifier of the first terminal device, the first terminal device may determine that the first terminal device is the receiver of the data sent by the second terminal device. The MAC PDU subheader herein corresponds to the destination identifier. For example, if SCI indicates a destination identifier, the MAC PDU subheader is a MAC PDU subheader in a PSSCH scheduled by the SCI.

Alternatively, the first terminal device may determine, based on the cast type, the destination identifier, and the source identifier that are included in the first information, that the first terminal device is the receiver of the data sent by the second terminal device. Due to a half duplex limitation, the first terminal device fails to receive the third SCI when sending the first SCI. Therefore, the first terminal device determines that the resources indicated by the first SCI conflict with the resources indicated by the third SCI.

If the cast type indicated by the third SCI is unicast, the first terminal device may determine, based on the destination identifier and the source identifier, that the first terminal device is the receiver of the data of the second terminal device. That the first terminal device may determine, based on the destination identifier and the source identifier, that the first terminal device is the receiver of the data of the second terminal device may be understood as: The destination identifier indicated by the third SCI is equal to a 16-bit LSB of a source layer 2 identifier of the first terminal device, and the source identifier indicated by the third SCI is equal to an 8-bit LSB of a destination layer 2 identifier of the first terminal device. If the first terminal device is the receiver of the data sent by the second terminal device, due to a half duplex limitation, the first terminal device fails to receive the third SCI when sending the first SCI. Therefore, the first terminal device determines that the resources indicated by the first SCI conflict with the resources indicated by the third SCI.

For example, when the cast type included in the first information is the unicast, the destination identifier included in the first information is equal to a 16-bit LSB of a layer 2 source identifier (or referred to as a source layer 2 identifier) of the first terminal device, and the source identifier included in the first information is equal to an 8-bit LSB of a layer 2 destination identifier (or referred to as a destination layer 2 identifier) of the first terminal device. In this case, the first terminal device may determine that the first terminal device is the receiver of the data sent by the second terminal device.

Optionally, the first terminal device may further determine a conflict resource based on the time domain resource indication information included in the first information. The conflict resource is a resource that is indicated by the time domain resource indication information and that overlaps with, in time domain, a resource used and/or reserved by the first terminal device.

Optionally, the first terminal device may further determine, based on a priority value included in the first information, whether to select a resource. If the priority value included in the first information is less than or equal to the priority value indicated by the first SCI, a resource is selected. For example, if the priority value included in the first information is greater than or equal to the priority value indicated by the first SCI, the first terminal device considers that sending is more important than receiving. In this case, data sending continues, and no resource is selected.

If the priority value included in the first information is less than or equal to the priority value indicated by the first SCI, the first terminal device considers that receiving is more important than sending. In this case, a resource is selected to avoid a resource conflict with the second terminal device.

S1015: The first terminal device selects a resource.

When the first terminal device determines, based on the first information, that the resources indicated by the first SCI conflict with the resources indicated by the third SCI, if a priority value indicated by the first SCI is greater than a priority value indicated by the third SCI and/or the priority value indicated by the first SCI is greater than a priority threshold, it indicates that data scheduled by the first SCI is not important enough. In this case, the first terminal device receives data in a slot in which a conflict resource (which may be understood as a time-domain conflict resource) is located instead of sending data on the conflict resource.

When the first terminal device determines, based on the first information, that the resources indicated by the first SCI conflict with one or more resources indicated by the third SCI, if a priority value indicated by the first SCI is less than a priority value indicated by the third SCI and/or the priority value indicated by the first SCI is less than a priority threshold, it indicates that data scheduled by the first SCI is important enough. In this case, the first terminal device sends data on a conflict resource instead of receiving data in a slot in which the conflict resource is located.

For details about selecting a resource by the first terminal device, refer to the descriptions of step S804. For other content, refer to the descriptions of the scenario in which the first terminal device and the second terminal device perform half-duplex communication in step S804. Details are not described herein again.

According to the foregoing communication method provided in this embodiment of this application, when the resources indicated by the first SCI overlap with the resources indicated by the third SCI, the third terminal device sends the destination identifier of the second terminal device to the first terminal device, so that the first terminal device determines, based on the destination identifier, that the first terminal device fails to receive the SCI of the second terminal device due to a half-duplex limitation, and therefore determines that the resources indicated by the first SCI conflict with the resources indicated by the third SCI. The reason is as follows: Resource overlapping does not mean a resource conflict. When the third terminal device cannot determine, based on the destination identifier indicated by the first SCI and the destination identifier indicated by the third SCI, that the resources indicated by the first SCI conflict with the resources indicated by the third SCI, the third terminal device sends, to the first terminal device, the destination identifier indicated by the third SCI, so that the first terminal device determines whether resource overlapping is a resource conflict.

An embodiment of this application provides another communication method. When preempting a resource of a first terminal device, a third terminal device sends, to the first terminal device, assistance information corresponding to the preempted resource. When the third terminal device detects that one or more resources indicated by first SCI from the first terminal device overlap with a resource selected by the third terminal device, the third terminal device sends the assistance information to the first terminal device to assist the first terminal device in resource selection when at least one of the following conditions is met: a priority value corresponding to the resource selected by the third terminal device is less than a priority value corresponding to the first SCI; a priority value corresponding to the resource selected by the third terminal device is less than a priority threshold; and an RSRP measurement value corresponding to the first SCI is greater than an RSRP threshold. In this case, the third terminal device preempts the resource of the first terminal device.

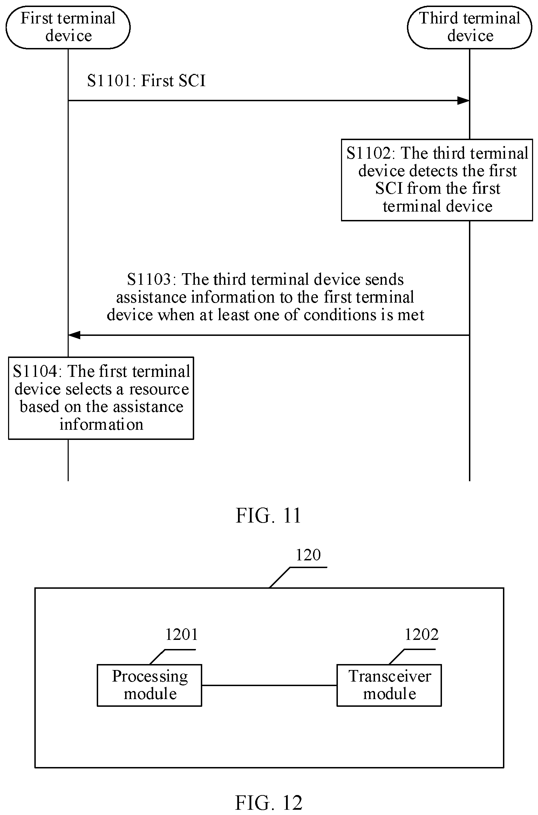

As shown in FIG. 11, the communication method includes steps S1101 to S1304.

S1101: The first terminal device sends the first SCI.

For the first SCI, refer to the descriptions of step S801. Details are not described herein again.

S1102: The third terminal device detects the first SCI from the first terminal device.

For how the third terminal device detects the first SCI from the first terminal device, refer to the descriptions of step S802. Details are not described herein again.

The resources indicated by the first SCI overlap with the resource selected by the third terminal device. Herein, the resource selected by the third terminal device may be understood as a resource reserved in SCI sent by the third terminal device, may be understood as a resource reserved in candidate resources when the third terminal device performs resource selection, may be understood as a candidate resource of the third terminal device, or may be understood as a resource indicated by SCI sent by the third terminal device.

S1103: The third terminal device sends the assistance information to the first terminal device when at least one of the following conditions is met: the priority value corresponding to the resource selected by the third terminal device is less than the priority value corresponding to the first SCI; the priority value corresponding to the resource selected by the third terminal device is less than the priority threshold; and the RSRP measurement value corresponding to the first SCI is greater than the RSRP threshold.

Correspondingly, the first terminal device receives the assistance information. For the assistance information, refer to the related descriptions of step S803. Details are not described herein again.

The foregoing conditions are described first.

**Condition 1:** The priority value corresponding to the resource selected by the third terminal device is less than the priority value corresponding to the first SCI.

A smaller priority value corresponds to a higher priority. Therefore, the condition may also be described as that a priority corresponding to the resource selected by the third terminal device is higher than a priority corresponding to the first SCI.

**Condition 2:** The priority value corresponding to the resource selected by the third terminal device is less than the priority threshold.

In other words, the resource selected by the third terminal device corresponds to a high priority.

**Condition 3:** The RSRP measurement value corresponding to the first SCI is greater than the RSRP threshold.

For the RSRP measurement value, refer to the descriptions about the condition 4 in step S803.

A combination of the condition 1, the condition 2, and the condition 3 and a combination of the condition 1 and the condition 3 indicate that in this case, the third terminal device may preempt the resource of the first terminal device. The third terminal device is a preempting terminal device, and is also an assisting terminal device. The first terminal device is a preempted terminal device, and is also an assisted terminal device.

S1104: The first terminal device selects a resource based on the assistance information.

For this step, refer to step S804. Details are not described herein again.

According to the communication method provided in this embodiment of this application, when the third terminal device detects that the resources indicated by the first SCI from the first terminal device overlaps with the resource selected by the third terminal device, the third terminal device sends the assistance information to the first terminal device to assist the first terminal device in resource selection when at least one of the following conditions is met: the priority value corresponding to the resource selected by the third terminal device is less than the priority value corresponding to the first SCI; the priority value corresponding to the resource selected by the third terminal device is less than the priority threshold; and the RSRP measurement value corresponding to the first SCI is greater than the RSRP threshold. In this case, the third terminal device preempts the resource of the first terminal device when the resources indicated by the first SCI conflict with the resource selected by the third terminal device.

It may be understood that, in the foregoing embodiments, the method and/or the steps implemented by the terminal device may be alternatively implemented by a component (for example, a chip or a circuit) that can be used in the terminal device.

An embodiment of this application further provides a communication apparatus. The communication apparatus is configured to implement the foregoing methods. The communication apparatus may be the terminal device (for example, the first terminal device, the second terminal device, or the third terminal device) in the foregoing method embodiments, an apparatus including the foregoing terminal device, or a chip or a functional module in the terminal device.

It may be understood that, to implement the foregoing functions, the communication apparatus includes a hardware structure and/or a software module for performing a corresponding function. A person skilled in the art may easily be aware that, in combination with the examples described in the embodiments disclosed in this specification, units and algorithm steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

For example, the communication apparatus is the terminal device in the foregoing method embodiments. FIG. 12 is a schematic structural diagram of a communication apparatus 120. The communication apparatus 120 includes a processing module 1201 and a transceiver module 1202. The communication apparatus 120 may be the terminal device 11 in FIG. 1. The processing module 1201 may also be referred to as a processing unit, and is configured to implement a processing function of the terminal device (for example, the first terminal device, the second terminal device, or the third terminal device) in the foregoing method embodiments, for example, perform steps S802 and S804 in FIG. 8A, steps S1002, S1004, and S1005 in FIG. 10A, steps S1012, S1014, and S1015 in FIG. 10B, and steps S1102 and S1104 in FIG. 11. The transceiver module 1202 may also be referred to as a transceiver unit, and is configured to implement receiving and sending functions of the terminal device (for example, the first terminal device, the second terminal device, or the third terminal device) in the foregoing method embodiments, for example, perform steps S801 and S803 in FIG. 8A, steps S1001 and S1003 in FIG. 10A, steps S1011 and S1013 in FIG. 10B, and steps S1101 and S1103 in FIG. 11. The transceiver module 1202 may be referred to as a transceiver circuit, a transceiver machine, a transceiver, or a communication interface.

In a possible implementation, the processing module 1201 is configured to detect first sidelink control information SCI from a first terminal device and second SCI from a second terminal device, where one or more resources indicated by the first SCI overlap with one or more resources indicated by the second SCI.

The transceiver module 1202 is configured to send assistance information to the first terminal device when at least one of the following conditions is met, where the assistance information is used to assist the first terminal device in resource selection: the first terminal device is a receiver of data scheduled by the second SCI; the second terminal device is a receiver of data scheduled by the first SCI; the communication apparatus is a receiver of data scheduled by the first SCI, and the communication apparatus is a receiver of data scheduled by the second SCI; the communication apparatus is a receiver of data scheduled by the first SCI, and a reference signal received power RSRP measurement value corresponding to the second SCI is greater than a first RSRP threshold; the communication apparatus is a receiver of data scheduled by the first SCI, and a received signal strength indicator RSSI measurement value corresponding to the second SCI is greater than a first RSSI threshold; the communication apparatus is a receiver of data scheduled by the first SCI, and a distance between the communication apparatus and the second terminal device is less than a first distance threshold; the communication apparatus is a receiver of data scheduled by the first SCI, and a channel quality indicator CQI of the second terminal device is greater than a first CQI threshold; the communication apparatus is a receiver of data scheduled by the second SCI, and a reference signal received power RSRP measurement value corresponding to the first SCI is greater than a second RSRP threshold; the communication apparatus is a receiver of data scheduled by the second SCI, and a received signal strength indicator RSSI measurement value corresponding to the first SCI is greater than a second RSSI threshold; the communication apparatus is a receiver of data scheduled by the second SCI, and a distance between the communication apparatus and the first terminal device is less than a second distance threshold; the communication apparatus is a receiver of data scheduled by the second SCI, and a channel quality indicator CQI of the first terminal device is greater than a second CQI threshold; the communication apparatus detects that a hybrid automatic repeat request feedback corresponding to data scheduled by the first SCI is a negative acknowledgment; the communication apparatus does not successfully decode data of the first terminal device; the communication apparatus successfully decodes data of the first terminal device, and an overlapping resource is located in one or more periodic resources indicated by the first SCI; the communication apparatus detects that a hybrid automatic repeat request feedback corresponding to data scheduled by the second SCI is a negative acknowledgment; the communication apparatus does not successfully decode data of the second terminal device; and the communication apparatus successfully decodes data of the second terminal device, and an overlapping resource is located in one or more periodic resources indicated by the second SCI.

In a possible implementation, a priority value indicated by the first SCI is greater than a priority value indicated by the second SCI.

In a possible implementation, the transceiver module 1202 sends the assistance information to the first terminal device, the resources indicated by the first SCI include at least one resource used by the first terminal device and at least one resource reserved by the first terminal device, the resources indicated by the second SCI include at least one resource used by the second terminal device and at least one resource reserved by the second terminal device, the assistance information is resource conflict indication information, and the resource conflict indication information indicates at least one of the following information: a plurality of resources indicated by the first SCI conflict with a plurality of resources indicated by the second SCI; the at least one resource used by the first terminal device conflicts with the at least one resource used by the second terminal device, or the at least one resource reserved by the first terminal device conflicts with the at least one resource reserved by the second terminal device; and the communication apparatus is the receiver of the data scheduled by the first SCI.

In a possible implementation, that the assistance information is used to assist the first terminal device in resource selection includes: The assistance information indicates an available resource and/or an unavailable resource to the first terminal device.

In a possible implementation, the transceiver module 1202 is configured to: when the communication apparatus successfully decodes the data of the first terminal device, and the overlapping resource is the periodic resource indicated by the first SCI, send the assistance information to the first terminal device, where the assistance information indicates that a conflict occurs on the periodic resource indicated by the first SCI.

In a possible implementation, the transceiver module 1202 is further configured to send the assistance information to the second terminal device, where the assistance information is further used to assist the second terminal device in resource selection.

In a possible implementation, the transceiver module 1202 sends the assistance information to the second terminal device, the resources indicated by the first SCI include at least one resource used by the first terminal device and at least one resource reserved by the first terminal device, the resources indicated by the second SCI include at least one resource used by the second terminal device and at least one resource reserved by the second terminal device, the assistance information is resource conflict indication information, and the resource conflict indication information indicates at least one of the following information: a plurality of resources indicated by the first SCI conflict with a plurality of resources indicated by the second SCI; the at least one resource used by the first terminal device conflicts with the at least one resource used by the second terminal device, or the at least one resource reserved by the first terminal device conflicts with the at least one resource reserved by the second terminal device; and the communication apparatus is the receiver of the data scheduled by the second SCI.

In a possible implementation, that the assistance information is further used to assist the second terminal device in resource selection includes: The assistance information further indicates an available resource and/or an unavailable resource to the second terminal device.

In a possible implementation, content of the resource conflict indication information is indicated by using a frequency domain resource carrying the resource conflict indication information.

In a possible implementation, content of the resource conflict indication information is indicated by using a cyclic shift code, a root sequence, or an orthogonal cover code associated with the resource conflict indication information.

In a possible implementation, the transceiver module 1202 is configured to send first sidelink control information SCI, where one or more resources indicated by the first SCI overlap with one or more resources indicated by second SCI of a second terminal device; the transceiver module 1202 is further configured to receive assistance information, where the assistance information is used to assist the communication apparatus in resource selection; and the processing module 1201 is configured to select a resource based on the assistance information. The resources indicated by the first SCI include at least one resource used by the communication apparatus and at least one resource reserved by the communication apparatus. The resources indicated by the second SCI include at least one resource used by the second terminal device and at least one resource reserved by the second terminal device. The assistance information is resource conflict indication information, and the resource conflict indication information indicates at least one of the following information: A plurality of resources indicated by the first SCI conflict with a plurality of resources indicated by the second SCI; the at least one resource used by the communication apparatus conflicts with the at least one resource used by the second terminal device, or the at least one resource reserved by the communication apparatus conflicts with the at least one resource reserved by the second terminal device; and a transmitter of the resource conflict indication information is a receiver of data scheduled by the first SCI.

In a possible implementation, the transceiver module 1202 is further configured to: receive the assistance information if a received hybrid automatic repeat request feedback is a negative acknowledgment.

In a possible implementation, a cast type indicated by the first SCI is a multicast option 2, and the transceiver module 1202 is further configured to receive the assistance information if no hybrid automatic repeat request feedback of at least one terminal device is received.

In a possible implementation, the processing module 1201 is configured to detect first sidelink control information SCI from a first terminal device and second SCI from a second terminal device, where one or more resources indicated by the first SCI overlap with one or more resources indicated by the second SCI; and the transceiver module 1202 is configured to send first information to the first terminal device, where the first information includes a destination identifier indicated by the second SCI, the first information is used by the first terminal device to determine that the resources indicated by the first SCI conflict with the resources indicated by the second SCI, and a cast type includes broadcast, multicast, or unicast.

In a possible implementation, the first information further includes a cast type indicated by the second SCI, and the cast type includes the broadcast, the multicast, or the unicast.

In a possible implementation, the first information further includes a source identifier indicated by the second SCI, and the cast type indicates the unicast.

In a possible implementation, the first information further includes time domain resource indication information, and the time domain resource indication information indicates a resource that conflicts with the resources indicated by the second SCI and that is in the resources indicated by the first SCI.

In a possible implementation, the transceiver module 1202 is configured to send first sidelink control information SCI, where one or more resources indicated by the first SCI overlap with one or more resources indicated by second SCI of a second terminal device, where the transceiver module 1202 is further configured to receive first information, where the first information includes a destination identifier indicated by the second SCI, and the first information is used by the communication apparatus to determine that the resources indicated by the first SCI conflict with the resources indicated by the second SCI.

In a possible implementation, that the first information is used by the communication apparatus to determine that the resources indicated by the first SCI conflict with the resources indicated by the second SCI includes: The first information is used by the communication apparatus to determine that the communication apparatus is a receiver of data sent by the second terminal device.

In a possible implementation, the first information further includes a source identifier, a cast type indicates unicast, and the cast type, the destination identifier, and the source identifier are used by the communication apparatus to determine that the communication apparatus is the receiver of the data sent by the second terminal device.

In a possible implementation, the first information further includes time domain resource indication information, and the time domain resource indication information indicates a resource that conflicts with the resources indicated by the second SCI and that is in the resources indicated by the first SCI.

In a possible implementation, the processing module 1201 is configured to detect first sidelink control information SCI and at least one piece of second SCI, where one or more resources indicated by the first SCI overlap with one or more resources indicated by the second SCI, and the first SCI is from a first terminal device; and the transceiver module 1202 is configured to send first information to the first terminal device, where the first information includes a destination identifier indicated by third SCI, the first information is used by the first terminal device to determine that the resources indicated by the first SCI conflict with one or more resources indicated by the third SCI, and the third SCI is one or more pieces of SCI in the at least one piece of second SCI.

In a possible implementation, the first information further includes a cast type indicated by the third SCI, and the cast type includes broadcast, multicast, or unicast.

In a possible implementation, the first information further includes a source identifier indicated by the third SCI.

In a possible implementation, a priority value indicated by the first SCI is greater than a priority value indicated by the third SCI.

In a possible implementation, the first information further includes time domain resource indication information, and the time domain resource indication information indicates a resource that conflicts with the resources indicated by the third SCI and that is in the resources indicated by the first SCI.

In a possible implementation, in the resources indicated by the second SCI, a resource that overlaps with the resources indicated by the first SCI is an overlapping resource, and the third SCI is SCI that is in the at least one piece of second SCI and that has a largest quantity of overlapping resources.

In a possible implementation, the third SCI is SCI that in the at least one piece of second SCI and that indicates a smallest priority value.

In a possible implementation, the third SCI is SCI that is in the at least one piece of second SCI and that indicates a resource reservation periodicity the same as a resource reservation periodicity indicated by the first SCI.

In a possible implementation, the third SCI is SCI that is in the at least one piece of second SCI and that indicates a periodic reserved resource the same as a periodic reserved resource indicated by the first SCI.

In a possible implementation, when the cast type indicated by the third SCI is a multicast option 1, the first information further includes a time-frequency resource indicated by the third SCI.

In a possible implementation, the transceiver module 1202 is configured to receive first information, where the first information includes a destination identifier indicated by third sidelink control information SCI, the third SCI is one or more pieces of SCI in at least one piece of second SCI, one or more resources indicated by the second SCI overlap with one or more resources indicated by first SCI, and the first SCI is SCI sent by the communication apparatus; and the processing module 1201 is configured to determine, based on the first information, that the resources indicated by the first SCI conflict with one or more resources indicated by the third SCI.

In a possible implementation, the processing module 1201 is specifically configured to determine, based on the first information, that the communication apparatus is a receiver of data sent by a second terminal device, where the second terminal device is a transmitter of the third SCI.

In a possible implementation, the first information further includes a cast type indicated by the third SCI, and the cast type includes broadcast, multicast, or unicast.

In a possible implementation, the first information further includes a source identifier.

In a possible implementation, the first information further includes time domain resource indication information, and the time domain resource indication information indicates a resource that overlaps with the resources indicated by the third SCI and that is in the resources indicated by the first SCI.

In a possible implementation, in the resources indicated by the second SCI, a resource that overlaps with the resources indicated by the first SCI is an overlapping resource, and the third SCI is SCI that is in the at least one piece of second SCI and that has a largest quantity of overlapping resources.

In a possible implementation, the third SCI is SCI that in the at least one piece of second SCI and that indicates a smallest priority value.

In a possible implementation, the third SCI is SCI that is in the at least one piece of second SCI and that indicates a resource reservation periodicity the same as a resource reservation periodicity indicated by the first SCI.

In a possible implementation, the third SCI is SCI that is in the at least one piece of second SCI and that indicates a periodic reserved resource the same as a periodic reserved resource indicated by the first SCI.

In a possible implementation, when a cast type indicated by $2^{nd}$-stage SCI of the third SCI is a multicast option 1, the first information further includes a time-frequency resource indicated by the third SCI.

In a possible implementation, when the communication apparatus determines, based on the first information, that the resources indicated by the first SCI conflict with the resources indicated by the third SCI, if a priority value indicated by the first SCI is greater than a priority value indicated by the third SCI and/or the priority value indicated by the first SCI is greater than a priority threshold, the transceiver module 1202 receives data in a slot in which a conflict resource is located.

In a possible implementation, when the communication apparatus determines, based on the first information, that the resources indicated by the first SCI conflict with the resources indicated by the third SCI, if a priority value indicated by the first SCI is less than a priority value indicated by the third SCI and/or the priority value indicated by the first SCI is less than a priority threshold, the transceiver module 1202 sends data on a conflict resource.

In a possible implementation, the processing module 1201 is configured to detect first sidelink control information SCI from a first terminal device, where a reserved resource indicated by the first SCI overlaps with a resource selected by a third terminal device; and the transceiver module 1202 is configured to send assistance information to the first terminal device when at least one of the following conditions is met, where the assistance information is used to assist the first terminal device in resource selection: a priority value corresponding to the resource selected by the third terminal device is less than a priority value corresponding to the first SCI; a priority value corresponding to the resource selected by the third terminal device is less than a priority threshold; and a reference signal received power RSRP measurement value corresponding to the first SCI is greater than an RSRP threshold.

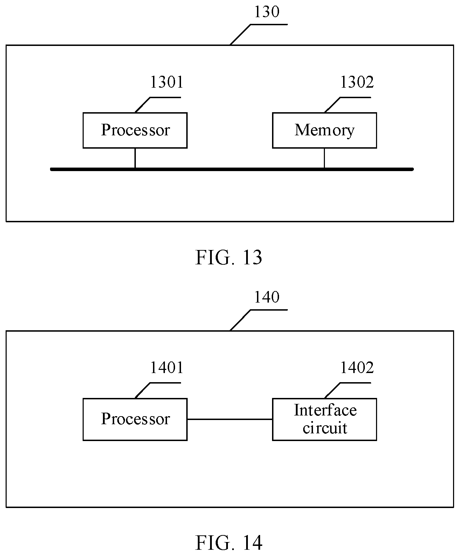

As shown in FIG. 13, an embodiment of this application further provides a communication apparatus. The communication apparatus 130 includes a processor 1301 and a memory 1302. The memory 1302 stores a program run on the processor 1301. When executing the program, the processor 1301 implements the method corresponding to each terminal device in FIG. 8A, FIG. 10A, FIG. 10B, and FIG. 11.

As shown in FIG. 14, an embodiment of this application further provides a communication apparatus. The communication apparatus 140 includes a processor 1401 and an interface circuit 1402. The interface circuit 1402 is configured to receive code instructions and transmit the code instructions to the processor 1401. The processor 1401 is configured to run the code instructions to perform the methods corresponding to each terminal device in FIG. 8A, FIG. 10A, FIG. 10B, and FIG. 11.

An embodiment of this application further provides a computer-readable storage medium. The computer-readable storage medium stores instructions, and the instructions are run on a communication apparatus, to enable the communication apparatus to perform the method corresponding to each terminal device in FIG. 8A, FIG. 10A, FIG. 10B, and FIG. 11.

An embodiment of this application further provides a computer program product including instructions. The instructions are run on a communication apparatus, to enable the communication apparatus to perform the methods corresponding to each terminal device in FIG. 8A, FIG. 10A, FIG. 10B, and FIG. 11.

An embodiment of this application provides a chip system. The chip system includes a processor, used by a communication apparatus to perform the method corresponding to each terminal device in FIG. 8A, FIG. 10A, FIG. 10B, and FIG. 11.

In a possible design, the chip system further includes a memory, and the memory is configured to store necessary program instructions and necessary data. The chip system may include a chip and an integrated circuit, or may include a chip and another discrete device. This is not specifically limited in this embodiment of this application.

The communication apparatus, the chip, the computer storage medium, the computer program product, or the chip system provided in this application are all configured to perform the foregoing methods. Therefore, for beneficial effects that can be achieved by the communication apparatus, the chip, the computer storage medium, the computer program product, or the chip system, refer to beneficial effects in the foregoing implementations. Details are not described herein again.

The processor in embodiments of this application may be a chip. For example, the processor may be a field programmable gate array (field programmable gate array, FPGA), an application-specific integrated chip (application-specific integrated circuit, ASIC), a system on chip (system on chip, SoC), a central processing unit (central processor unit, CPU), a network processor (network processor, NP), a digital signal processing circuit (digital signal processor, DSP), a micro controller unit (micro controller unit, MCU), a programmable controller (programmable logic device, PLD), or another integrated chip.

The memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, device, and method may be implemented in other manners. For example, the described device embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate components may or may not be physically separate, and components displayed as units may or may not be physical units. To be specific, the components may be located at one position, or may be distributed on a plurality of network units. Some or all of the units may be selected based on actual requirements to achieve the objectives of the solutions in the embodiments.

In addition, functional units in embodiments of this application may be integrated into one processing unit, each of the units may exist independently physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

detecting, by a third terminal device, first sidelink control information SCI from a first terminal device and second SCI from a second terminal device, wherein one or more resources indicated by the first SCI overlap with one or more resources indicated by the second SCI; and
sending, by the third terminal device, assistance information to the first terminal device when at least one of the following conditions is met, wherein the assistance information is used to assist the first terminal device in resource selection:

the first terminal device is a receiver of data scheduled by the second SCI;
the second terminal device is a receiver of data scheduled by the first SCI;
the third terminal device is a receiver of data scheduled by the first SCI, and the third terminal device is a receiver of data scheduled by the second SCI;
the third terminal device is a receiver of data scheduled by the first SCI, and a reference signal received power RSRP measurement value corresponding to the second SCI is greater than a first RSRP threshold;
the third terminal device is a receiver of data scheduled by the first SCI, and a received signal strength indicator RSSI measurement value corresponding to the second SCI is greater than a first RSSI threshold;

the third terminal device is a receiver of data scheduled by the first SCI, and a distance between the third terminal device and the second terminal device is less than a first distance threshold;

the third terminal device is a receiver of data scheduled by the first SCI, and a channel quality indicator CQI of the second terminal device is greater than a first CQI threshold;

the third terminal device is a receiver of data scheduled by the second SCI, and a reference signal received power RSRP measurement value corresponding to the first SCI is greater than a second RSRP threshold;

the third terminal device is a receiver of data scheduled by the second SCI, and a received signal strength indicator RSSI measurement value corresponding to the first SCI is greater than a second RSSI threshold;

the third terminal device is a receiver of data scheduled by the second SCI, and a distance between the third terminal device and the first terminal device is less than a second distance threshold;

the third terminal device is a receiver of data scheduled by the second SCI, and a channel quality indicator CQI of the first terminal device is greater than a second CQI threshold;

the third terminal device detects that a hybrid automatic repeat request feedback corresponding to data scheduled by the first SCI is a negative acknowledgment;

the third terminal device does not successfully decode data of the first terminal device;

the third terminal device successfully decodes data of the first terminal device, and an overlapping resource is located in one or more periodic resources indicated by the first SCI;

the third terminal device detects that a hybrid automatic repeat request feedback corresponding to data scheduled by the second SCI is a negative acknowledgment;

the third terminal device does not successfully decode data of the second terminal device; and

the third terminal device successfully decodes data of the second terminal device, and an overlapping resource is located in one or more periodic resources indicated by the second SCI.

2. The method according to claim 1, wherein a priority value indicated by the first SCI is higher than a priority value indicated by the second SCI.

3. The method according to claim 1 or 2, wherein the third terminal device sends the assistance information to the first terminal device, the resources indicated by the first SCI comprise at least one resource used by the first terminal device and at least one resource reserved by the first terminal device, the resources indicated by the second SCI comprise at least one resource used by the second terminal device and at least one resource reserved by the second terminal device, the assistance information is resource conflict indication information, and the resource conflict indication information indicates at least one of the following information:

a plurality of resources indicated by the first SCI conflict with a plurality of resources indicated by the second SCI;

the at least one resource used by the first terminal device conflicts with the at least one resource used by the second terminal device, or the at least one resource reserved by the first terminal device conflicts with the at least one resource reserved by the second terminal device; and

the third terminal device is the receiver of the data scheduled by the first SCI.

4. The method according to claim 1 or 2, wherein that the assistance information is used to assist the first terminal device in resource selection comprises:
the assistance information indicates an available resource and/or an unavailable resource to the first terminal device.

5. The method according to claim 1 or 2, wherein the sending, by the third terminal device, assistance information to the first terminal device when at least one of the following conditions is met comprises:
when the third terminal device successfully decodes the data of the first terminal device, and the overlapping resource is the periodic resource indicated by the first SCI, sending, by the third terminal device, the assistance information to the first terminal device, wherein the assistance information indicates that a conflict occurs on the periodic resource indicated by the first SCI.

6. The method according to claim 3, wherein content of the resource conflict indication information is indicated by using a frequency domain resource carrying the resource conflict indication information.

7. The method according to claim 3, wherein content of the resource conflict indication information is indicated by using a cyclic shift code, a root sequence, or an orthogonal cover code associated with the resource conflict indication information.

8. A communication method, comprising:

sending, by a first terminal device, first sidelink control information SCI, wherein one or more resources indicated by the first SCI overlap with one or more resources indicated by second SCI of a second terminal device;

receiving, by the first terminal device, assistance information, wherein the assistance information is used to assist the first terminal device in resource selection; and

selecting, by the first terminal device, a resource based on the assistance information, wherein

the resources indicated by the first SCI comprise at least one resource used by the first terminal device and at least one resource reserved by the first terminal device, the resources indicated by the second SCI comprise at least one resource used by the second terminal device and at least one resource reserved by the second terminal device, the assistance information is resource conflict indication information, and the resource conflict indication information indicates at least one of the following information:

a plurality of resources indicated by the first SCI conflict with a plurality of resources indicated by the second SCI;

the at least one resource used by the first terminal device conflicts with the at least one resource used by the second terminal device, or the at least one resource reserved by the first terminal device conflicts with the at least one resource reserved by the second terminal device; and

a transmitter of the resource conflict indication information is a receiver of data scheduled by the first SCI.

9. The method according to claim 8, wherein the receiving, by the first terminal device, assistance information comprises:
receiving, by the first terminal device, the assistance information if a hybrid automatic repeat request feedback received by the first terminal device is a negative acknowledgment.

10. The method according to claim 8, wherein a cast type indicated by the first SCI is a multicast option 2, and the receiving, by the first terminal device, assistance information comprises:
receiving, by the first terminal device, the assistance information if the first terminal device does not receive a hybrid automatic repeat request feedback of at least one terminal device.

11. The method according to any one of claims 8 to 10, wherein content of the resource conflict indication information is indicated by using a frequency domain resource carrying the resource conflict indication information.

12. The method according to any one of claims 8 to 10, wherein content of the resource conflict indication information is indicated by using a cyclic shift code, a root sequence, or an orthogonal cover code associated with the resource conflict indication information.

13. A communication method, comprising:

detecting, by a third terminal device, first sidelink control information SCI from a first terminal device and second SCI from a second terminal device, wherein one or more resources indicated by the first SCI overlap with one or more resources indicated by the second SCI; and

sending, by the third terminal device, first information to the first terminal device, wherein the first information comprises a destination identifier indicated by the second SCI, and the first information is used by the first terminal device to determine that the resources indicated by the first SCI conflict with the resources indicated by the second SCI.

14. The method according to claim 13, wherein
a priority value indicated by the first SCI is higher than a priority value indicated by the second SCI.

15. The method according to claim 13 or 14, wherein the first information further comprises a cast type indicated by the second SCI, and the cast type comprises broadcast, multicast, or unicast.

16. The method according to claim 15, wherein the first information further comprises a source identifier indicated by the second SCI, and the cast type indicates the unicast.

17. A communication method, comprising:

sending, by a first terminal device, first sidelink control information SCI, wherein one or more resources indicated by the first SCI overlap with one or more resources indicated by second SCI of a second terminal device; and

receiving, by the first terminal device, first information, wherein the first information comprises a destination identifier indicated by the second SCI, and the first information is used by the first terminal device to determine that the resources indicated by the first SCI conflict with the resources indicated by the second SCI.

18. The method according to claim 17, wherein that the first information is used by the first terminal device to determine that the resources indicated by the first SCI conflict with the resources indicated by the second SCI comprise:
the first information is used by the first terminal device to determine that the first terminal device is a receiver of data sent by the second terminal device.

19. The method according to claim 17 or 18, wherein the first information further comprises a cast type indicated by the second SCI, and the cast type comprises broadcast, multicast, or unicast.

20. The method according to claim 19, wherein
the first information further comprises a source identifier, the cast type indicates the unicast, and the cast type, the destination identifier, and the source identifier are used by the first terminal device to determine that the first terminal device is the receiver of the data sent by the second terminal device.

21. The method according to any one of claims 17 to 19, wherein the first information further comprises time domain resource indication information; and
the time domain resource indication information indicates a resource that conflicts with the resources indicated by the second SCI and that is in the resources indicated by the first SCI.

22. A communication apparatus, comprising:

a processing module, configured to detect first sidelink control information SCI from a first terminal device and second SCI from a second terminal device, wherein one or more resources indicated by the first SCI overlap with one or more resources indicated by the second SCI; and
a transceiver module, configured to send assistance information to the first terminal device when at least one of the following conditions is met, wherein the assistance information is used to assist the first terminal device in resource selection:

the first terminal device is a receiver of data scheduled by the second SCI;
the second terminal device is a receiver of data scheduled by the first SCI;
the communication apparatus is a receiver of data scheduled by the first SCI, and the communication apparatus is a receiver of data scheduled by the second SCI;
the communication apparatus is a receiver of data scheduled by the first SCI, and a reference signal received power RSRP measurement value corresponding to the second SCI is greater than a first RSRP threshold;
the communication apparatus is a receiver of data scheduled by the first SCI, and a received signal strength indicator RSSI measurement value corresponding to the second SCI is greater than a first RSSI threshold;
the communication apparatus is a receiver of data scheduled by the first SCI, and a distance between the communication apparatus and the second terminal device is less than a first distance threshold;
the communication apparatus is a receiver of data scheduled by the first SCI, and a channel quality indicator CQI of the second terminal device is greater than a first CQI threshold;
the communication apparatus is a receiver of data scheduled by the second SCI, and a reference signal received power RSRP measurement value corresponding to the first SCI is greater than a second RSRP threshold;
the communication apparatus is a receiver of data scheduled by the second SCI, and a received signal strength indicator RSSI measurement value corresponding to the first SCI is greater than a second RSSI threshold;
the communication apparatus is a receiver of data scheduled by the second SCI, and a distance between the communication apparatus and the first terminal device is less than a second distance threshold;
the communication apparatus is a receiver of data scheduled by the second SCI, and a channel quality indicator CQI of the first terminal device is greater than a second CQI threshold;
the communication apparatus detects that a hybrid automatic repeat request feedback corresponding to data scheduled by the first SCI is a negative acknowledgment;
the communication apparatus does not successfully decode data of the first terminal device;
the communication apparatus successfully decodes data of the first terminal device, and an overlapping resource is located in one or more periodic resources indicated by the first SCI;
the communication apparatus detects that a hybrid automatic repeat request feedback corresponding to data scheduled by the second SCI is a negative acknowledgment;

the communication apparatus does not successfully decode data of the second terminal device; and

the communication apparatus successfully decodes data of the second terminal device, and an overlapping resource is located in one or more periodic resources indicated by the second SCI.

23. The communication apparatus according to claim 22, wherein a priority value indicated by the first SCI is higher than a priority value indicated by the second SCI.

24. The communication apparatus according to claim 22 or 23, wherein the transceiver module sends the assistance information to the first terminal device, the resources indicated by the first SCI comprise at least one resource used by the first terminal device and at least one resource reserved by the first terminal device, the resources indicated by the second SCI comprise at least one resource used by the second terminal device and at least one resource reserved by the second terminal device, the assistance information is resource conflict indication information, and the resource conflict indication information indicates at least one of the following information:

a plurality of resources indicated by the first SCI conflict with a plurality of resources indicated by the second SCI;

the at least one resource used by the first terminal device conflicts with the at least one resource used by the second terminal device, or the at least one resource reserved by the first terminal device conflicts with the at least one resource reserved by the second terminal device; and

the communication apparatus is the receiver of the data scheduled by the first SCI.

25. The communication apparatus according to claim 22 or 23, wherein that the assistance information is used to assist the first terminal device in resource selection comprises:

the assistance information indicates an available resource and/or an unavailable resource to the first terminal device.

26. The communication apparatus according to claim 22 or 23, wherein the transceiver module is configured to:

when the assistance information indicates that a conflict occurs on the periodic resource indicated by the first SCI, the communication apparatus successfully decodes the data of the first terminal device, and the overlapping resource is the periodic resource indicated by the first SCI, send the assistance information to the first terminal device.

27. The communication apparatus according to any one of claims 22 to 26, wherein

the transceiver module is further configured to send the assistance information to the second terminal device, wherein the assistance information is further used to assist the second terminal device in resource selection.

28. The communication apparatus according to claim 27, wherein when the transceiver module sends the assistance information to the second terminal device, the resources indicated by the first SCI comprise at least one resource used by the first terminal device and at least one resource reserved by the first terminal device, the resources indicated by the second SCI comprise at least one resource used by the second terminal device and at least one resource reserved by the second terminal device, the assistance information is resource conflict indication information, and the resource conflict indication information indicates at least one of the following information:

a plurality of resources indicated by the first SCI conflict with a plurality of resources indicated by the second SCI;

the at least one resource used by the first terminal device conflicts with the at least one resource used by the second terminal device, or the at least one resource reserved by the first terminal device conflicts with the at least one resource reserved by the second terminal device; and

the communication apparatus is the receiver of the data scheduled by the second SCI.

29. The communication apparatus according to claim 27, wherein that the assistance information is further used to assist the second terminal device in resource selection comprises:

the assistance information further indicates an available resource and/or an unavailable resource to the second terminal device.

30. The communication apparatus according to claim 24 or 28, wherein content of the resource conflict indication information is indicated by using a frequency domain resource carrying the resource conflict indication information.

31. The communication apparatus according to claim 24 or 28, wherein content of the resource conflict indication information is indicated by using a cyclic shift code, a root sequence, or an orthogonal cover code associated with the resource conflict indication information.

**32.** A communication apparatus, comprising:

a transceiver module, configured to send first sidelink control information SCI, wherein one or more resources indicated by the first SCI overlap with one or more resources indicated by second SCI of a second terminal device, wherein
the transceiver module is further configured to receive assistance information, wherein the assistance information is used to assist the communication apparatus in resource selection; and
a processing module, configured to select a resource based on the assistance information, wherein
the resources indicated by the first SCI comprise at least one resource used by the communication apparatus and at least one resource reserved by the communication apparatus, the resources indicated by the second SCI comprise at least one resource used by the second terminal device and at least one resource reserved by the second terminal device, the assistance information is resource conflict indication information, and the resource conflict indication information indicates at least one of the following information:

a plurality of resources indicated by the first SCI conflict with a plurality of resources indicated by the second SCI;
the at least one resource used by the communication apparatus conflicts with the at least one resource used by the second terminal device, or the at least one resource reserved by the communication apparatus conflicts with the at least one resource reserved by the second terminal device; and
a transmitter of the resource conflict indication information is a receiver of data scheduled by the first SCI.

**33.** The communication apparatus according to claim 32, wherein the transceiver module is configured to:
receive the assistance information if a received hybrid automatic repeat request feedback is a negative acknowledgment.

**34.** The communication apparatus according to claim 32, wherein the transceiver module is configured to:
receive the assistance information if no hybrid automatic repeat request feedback of at least one terminal device is received.

**35.** The communication apparatus according to any one of claims 32 to 34, wherein content of the resource conflict indication information is indicated by using a frequency domain resource carrying the resource conflict indication information.

**36.** The communication apparatus according to any one of claims 32 to 34, wherein content of the resource conflict indication information is indicated by using a cyclic shift code, a root sequence, or an orthogonal cover code associated with the resource conflict indication information.

**37.** A communication apparatus, comprising:

a processing module, configured to detect first sidelink control information SCI from a first terminal device and second SCI from a second terminal device, wherein one or more resources indicated by the first SCI overlap with one or more resources indicated by the second SCI; and
a transceiver module, configured to send first information to the first terminal device, wherein the first information comprises a destination identifier indicated by the second SCI, and the first information is used by the first terminal device to determine that the resources indicated by the first SCI conflict with the resources indicated by the second SCI.

**38.** The communication apparatus according to claim 37, wherein
a priority value indicated by the first SCI is higher than a priority value indicated by the second SCI.

**39.** The communication apparatus according to claim 37 or 38, wherein the first information further comprises a cast type indicated by the second SCI, and the cast type comprises broadcast, multicast, or unicast.

**40.** The communication apparatus according to claim 39, wherein the first information further comprises a source identifier indicated by the second SCI.

**41.** The communication apparatus according to any one of claims 37 to 40, wherein the first information further comprises time domain resource indication information; and

the time domain resource indication information indicates a resource that conflicts with the resources indicated by the second SCI and that is in the resources indicated by the first SCI.

**42.** A communication apparatus, comprising:

a transceiver module, configured to send first sidelink control information SCI, wherein one or more resources indicated by the first SCI overlap with one or more resources indicated by second SCI of a second terminal device, wherein
the transceiver module is further configured to receive first information, wherein the first information comprises a destination identifier indicated by the second SCI, and the first information is used by the communication apparatus to determine that the resources indicated by the first SCI conflict with the resources indicated by the second SCI.

**43.** The communication apparatus according to claim 42, wherein that the first information is used by the communication apparatus to determine that the resources indicated by the first SCI conflict with the resources indicated by the second SCI comprise:
the first information is used by the communication apparatus to determine that the communication apparatus is a receiver of data sent by the second terminal device.

**44.** The communication apparatus according to claim 42 or 43, wherein
the first information further comprises a source identifier, a cast type indicates unicast, and the cast type, the destination identifier, and the source identifier are used by the communication apparatus to determine that the communication apparatus is the receiver of the data sent by the second terminal device.

**45.** The communication apparatus according to any one of claims 42 to 44, wherein the first information further comprises time domain resource indication information; and
the time domain resource indication information indicates a resource that conflicts with the resources indicated by the second SCI and that is in the resources indicated by the first SCI.

**46.** A communication method, comprising:

detecting, by a third terminal device, first sidelink control information SCI and at least one piece of second SCI, wherein one or more resources indicated by the first SCI overlap with one or more resources indicated by the second SCI, and the first SCI is from a first terminal device; and
sending, by the third terminal device, first information to the first terminal device, wherein the first information comprises a destination identifier indicated by third SCI, the first information is used by the first terminal device to determine that the resources indicated by the first SCI conflict with one or more resources indicated by the third SCI, and the third SCI is one or more pieces of SCI in the at least one piece of second SCI.

**47.** The method according to claim 46, wherein the first information further comprises a cast type indicated by the third SCI, and the cast type comprises broadcast, multicast, or unicast.

**48.** The method according to claim 46 or 47, wherein the first information further comprises a source identifier indicated by the third SCI.

**49.** The method according to any one of claims 46 to 48, wherein a priority value indicated by the first SCI is greater than a priority value indicated by the third SCI.

**50.** The method according to any one of claims 46 to 49, wherein the first information further comprises time domain resource indication information, and the time domain resource indication information indicates a resource that conflicts with the resources indicated by the third SCI and that is in the resources indicated by the first SCI.

**51.** The method according to any one of claims 46 to 50, wherein in the resources indicated by the second SCI, a resource that overlaps with the resources indicated by the first SCI is an overlapping resource, and the third SCI is SCI that is in the at least one piece of second SCI and that has a largest quantity of overlapping resources.

**52.** The method according to any one of claims 46 to 50, wherein the third SCI is SCI that is in the at least one piece of second SCI and that indicates a smallest priority value.

53. The method according to any one of claims 46 to 50, wherein the third SCI is SCI that is in the at least one piece of second SCI and that indicates a resource reservation periodicity the same as a resource reservation periodicity indicated by the first SCI.

54. The method according to any one of claims 46 to 50, wherein the third SCI is SCI that is in the at least one piece of second SCI and that indicates a periodic reserved resource the same as a periodic reserved resource indicated by the first SCI.

55. The method according to any one of claims 46 to 54, wherein when the cast type indicated by the third SCI is a multicast option 1, the first information further comprises a time-frequency resource indicated by the third SCI.

56. A communication method, comprising:

receiving, by a first terminal device, first information, wherein the first information comprises a destination identifier indicated by third sidelink control information SCI, the third SCI is one or more pieces of SCI in at least one piece of second SCI, one or more resources indicated by the second SCI overlap with one or more resources indicated by first SCI, and the first SCI is SCI sent by the first terminal device; and
determining, by the first terminal device based on the first information, that the resources indicated by the first SCI conflict with one or more resources indicated by the third SCI.

57. The method according to claim 56, wherein the determining, by the first terminal device based on the first information, that the resources indicated by the first SCI conflict with one or more resources indicated by the third SCI comprises: determining, by the first terminal device based on the first information, that the first terminal device is a receiver of data sent by a second terminal device, wherein the second terminal device is a transmitter of the third SCI.

58. The method according to claim 56 or 57, wherein the first information further comprises a cast type indicated by the third SCI, and the cast type comprises broadcast, multicast, or unicast.

59. The method according to any one of claims 56 to 58, wherein the first information further comprises a source identifier.

60. The method according to any one of claims 56 to 59, wherein the first information further comprises time domain resource indication information, and the time domain resource indication information indicates a resource that overlaps with the resources indicated by the third SCI and that is in the resources indicated by the first SCI.

61. The method according to any one of claims 56 to 60, wherein in the resources indicated by the second SCI, a resource that overlaps with the resources indicated by the first SCI is an overlapping resource, and the third SCI is SCI that is in the at least one piece of second SCI and that has a largest quantity of overlapping resources.

62. The method according to any one of claims 56 to 60, wherein the third SCI is SCI that is in the at least one piece of second SCI and that indicates a smallest priority value.

63. The method according to any one of claims 56 to 60, wherein the third SCI is SCI that is in the at least one piece of second SCI and that indicates a resource reservation periodicity the same as a resource reservation periodicity indicated by the first SCI.

64. The method according to any one of claims 56 to 60, wherein the third SCI is SCI that is in the at least one piece of second SCI and that indicates a periodic reserved resource the same as a periodic reserved resource indicated by the first SCI.

65. The method according to any one of claims 56 to 64, wherein when the cast type indicated by the third SCI is a multicast option 1, the first information further comprises a time-frequency resource indicated by the third SCI.

66. The method according to any one of claims 56 to 64, wherein when the first terminal device determines, based on the first information, that the resources indicated by the first SCI conflict with the resources indicated by the third SCI, if a priority value indicated by the first SCI is greater than a priority value indicated by the third SCI and/or the priority value indicated by the first SCI is greater than a priority threshold, the first terminal device receives data in a slot in which a conflict resource is located.

67. The method according to any one of claims 56 to 64, wherein when the first terminal device determines, based on the first information, that the resources indicated by the first SCI conflict with the resources indicated by the third SCI, if a priority value indicated by the first SCI is less than a priority value indicated by the third SCI and/or the priority value indicated by the first SCI is less than a priority threshold, the first terminal device sends data on a conflict resource.

68. A communication apparatus, comprising:

   a processing module, configured to detect first sidelink control information SCI and at least one piece of second SCI, wherein one or more resources indicated by the first SCI overlap with one or more resources indicated by the second SCI, and the first SCI is from a first terminal device; and
   a transceiver module, configured to send first information to the first terminal device, wherein the first information comprises a destination identifier indicated by third SCI, the first information is used by the first terminal device to determine that the resources indicated by the first SCI conflict with one or more resources indicated by the third SCI, and the third SCI is one or more pieces of SCI in the at least one piece of second SCI.

69. The communication apparatus according to claim 68, wherein the first information further comprises a cast type indicated by the third SCI, and the cast type comprises broadcast, multicast, or unicast.

70. The communication apparatus according to claim 68 or 69, wherein the first information further comprises a source identifier indicated by the third SCI.

71. The communication apparatus according to any one of claims 68 to 70, wherein a priority value indicated by the first SCI is greater than a priority value indicated by the third SCI.

72. The communication apparatus according to any one of claims 68 to 71, wherein the first information further comprises time domain resource indication information, and the time domain resource indication information indicates a resource that conflicts with the resources indicated by the third SCI and that is in the resources indicated by the first SCI.

73. The communication apparatus according to any one of claims 68 to 72, wherein in the resources indicated by the second SCI, a resource that overlaps with the resources indicated by the first SCI is an overlapping resource, and the third SCI is SCI that is in the at least one piece of second SCI and that has a largest quantity of overlapping resources.

74. The communication apparatus according to any one of claims 68 to 72, wherein the third SCI is SCI that is in the at least one piece of second SCI and that indicates a smallest priority value.

75. The communication apparatus according to any one of claims 68 to 72, wherein the third SCI is SCI that is in the at least one piece of second SCI and that indicates a resource reservation periodicity the same as a resource reservation periodicity indicated by the first SCI.

76. The communication apparatus according to any one of claims 68 to 72, wherein the third SCI is SCI that is in the at least one piece of second SCI and that indicates a periodic reserved resource the same as a periodic reserved resource indicated by the first SCI.

77. The communication apparatus according to any one of claims 68 to 71, wherein when the cast type indicated by the third SCI is a multicast option 1, the first information further comprises a time-frequency resource indicated by the third SCI.

78. A communication apparatus, comprising:

   a transceiver module, configured to receive first information, wherein the first information comprises a destination identifier indicated by third sidelink control information SCI, the third SCI is one or more pieces of SCI in at least one piece of second SCI, one or more resources indicated by the second SCI overlap with one or more resources indicated by first SCI, and the first SCI is SCI sent by the communication apparatus; and
   a processing module, configured to determine, based on the first information, that the resources indicated by the first SCI conflict with one or more resources indicated by the third SCI.

**79.** The communication apparatus according to claim 78, wherein the processing module is specifically configured to: determine, based on the first information, that the communication apparatus is a receiver of data sent by a second terminal device, wherein the second terminal device is a transmitter of the third SCI.

**80.** The communication apparatus according to claim 78 or 79, wherein the first information further comprises a cast type indicated by the third SCI, and the cast type comprises broadcast, multicast, or unicast.

**81.** The communication apparatus according to any one of claims 78 to 80, wherein the first information further comprises a source identifier.

**82.** The communication apparatus according to any one of claims 78 to 81, wherein the first information further comprises time domain resource indication information, and the time domain resource indication information indicates a resource that overlaps with the resources indicated by the third SCI and that is in the resources indicated by the first SCI.

**83.** The communication apparatus according to any one of claims 78 to 82, wherein in the resources indicated by the second SCI, a resource that overlaps with the resources indicated by the first SCI is an overlapping resource, and the third SCI is SCI that is in the at least one piece of second SCI and that has a largest quantity of overlapping resources.

**84.** The communication apparatus according to any one of claims 78 to 82, wherein the third SCI is SCI that is in the at least one piece of second SCI and that indicates a smallest priority value.

**85.** The communication apparatus according to any one of claims 78 to 82, wherein the third SCI is SCI that is in the at least one piece of second SCI and that indicates a resource reservation periodicity the same as a resource reservation periodicity indicated by the first SCI.

**86.** The communication apparatus according to any one of claims 78 to 82, wherein the third SCI is SCI that is in the at least one piece of second SCI and that indicates a periodic reserved resource the same as a periodic reserved resource indicated by the first SCI.

**87.** The communication apparatus according to any one of claims 78 to 86, wherein when a cast type indicated by $2^{nd}$-stage SCI of the third SCI is a multicast option 1, the first information further comprises a time-frequency resource indicated by the third SCI.

**88.** The communication apparatus according to any one of claims 78 to 87, wherein when the communication apparatus determines, based on the first information, that the resources indicated by the first SCI conflict with the resources indicated by the third SCI, if a priority value indicated by the first SCI is greater than a priority value indicated by the third SCI and/or the priority value indicated by the first SCI is greater than a priority threshold, the transceiver module receives data in a slot in which a conflict resource is located.

**89.** The communication apparatus according to any one of claims 78 to 87, wherein when the communication apparatus determines, based on the first information, that the resources indicated by the first SCI conflict with the resources indicated by the third SCI, if a priority value indicated by the first SCI is less than a priority value indicated by the third SCI and/or the priority value indicated by the first SCI is less than a priority threshold, the transceiver module sends data on a conflict resource.

**90.** A communication apparatus, wherein the communication apparatus comprises a processor and a memory, the memory stores a program running on the processor, and when the processor executes the program, the method according to any one of claims 1 to 7 is implemented.

**91.** A communication apparatus, wherein the communication apparatus comprises a processor and a memory, the memory stores a program running on the processor, and when the processor executes the program, the method according to any one of claims 8 to 12 is implemented.

**92.** A communication apparatus, wherein the communication apparatus comprises a processor and a memory, the memory stores a program running on the processor, and when the processor executes the program, the method according to any one of claims 13 to 16 is implemented.

93. A communication apparatus, wherein the communication apparatus comprises a processor and a memory, the memory stores a program running on the processor, and when the processor executes the program, the method according to any one of claims 17 to 21 is implemented.

94. A communication apparatus, wherein the communication apparatus comprises a processor and a memory, the memory stores a program running on the processor, and when the processor executes the program, the method according to any one of claims 46 to 55 is implemented.

95. A communication apparatus, wherein the communication apparatus comprises a processor and a memory, the memory stores a program running on the processor, and when the processor executes the program, the method according to any one of claims 56 to 67 is implemented.

96. A communication apparatus, wherein the communication apparatus comprises a processor and an interface circuit, wherein the interface circuit is configured to receive code instructions and transmit the code instructions to the processor; and
the processor is configured to run the code instructions to perform the method according to any one of claims 1 to 7.

97. A communication apparatus, wherein the communication apparatus comprises a processor and an interface circuit, wherein the interface circuit is configured to receive code instructions and transmit the code instructions to the processor; and
the processor is configured to run the code instructions to perform the method according to any one of claims 8 to 12.

98. A communication apparatus, wherein the communication apparatus comprises a processor and an interface circuit, wherein the interface circuit is configured to receive code instructions and transmit the code instructions to the processor; and
the processor is configured to run the code instructions to perform the method according to any one of claims 13 to 16.

99. A communication apparatus, wherein the communication apparatus comprises a processor and an interface circuit, wherein the interface circuit is configured to receive code instructions and transmit the code instructions to the processor; and
the processor is configured to run the code instructions to perform the method according to any one of claims 17 to 21.

100. A communication apparatus, wherein the communication apparatus comprises a processor and an interface circuit, wherein

the interface circuit is configured to receive code instructions and transmit the code instructions to the processor; and
the processor is configured to run the code instructions to perform the method according to any one of claims 46 to 55.

101. A communication apparatus, wherein the communication apparatus comprises a processor and an interface circuit, wherein

the interface circuit is configured to receive code instructions and transmit the code instructions to the processor; and
the processor is configured to run the code instructions to perform the method according to any one of claims 56 to 67.

102. A computer-readable storage medium, wherein the computer-readable storage medium is configured to store instructions, and when the instructions are executed, the method according to any one of claims 1 to 7 is implemented, the method according to any one of claims 8 to 12 is implemented, the method according to any one of claims 13 to 16 is implemented, the method according to any one of claims 17 to 21 is implemented, the method according to any one of claims 46 to 55 is implemented, or the method according to any one of claims 56 to 67 is implemented.

103. A computer program product comprising instructions, wherein the instructions are run on a communication apparatus, to enable the communication apparatus to perform the method according to any one of claims 1 to 7, perform the method according to any one of claims 8 to 12, perform the method according to any one of claims 13 to 16, perform the method according to any one of claims 17 to 21, perform the method according to any one of claims 46 to 55, or perform the method according to any one of claims 56 to 67.

104. A communication system, comprising the communication apparatus according to any one of claims 22 to 31 and the communication apparatus according to any one of claims 32 to 36, comprising the communication apparatus according to any one of claims 37 to 41 and the communication apparatus according to any one of claims 42 to 45, comprising the communication apparatus according to any one of claims 68 to 77 and the communication apparatus according to any one of claims 78 to 89, comprising the communication apparatus according to claim 90 and the communication apparatus according to claim 91, comprising the communication apparatus according to claim 92 and the communication apparatus according to claim 93, comprising the communication apparatus according to claim 94 and the communication apparatus according to claim 95, comprising the communication apparatus according to claim 96 and the communication apparatus according to claim 97, comprising the communication apparatus according to claim 98 and the communication apparatus according to claim 99, or comprising the communication apparatus according to claim 100 and the communication apparatus according to claim 101.

FIG. 1

FIG. 2

Used resource

Reserved resources

R1

SCI

R2

R3

R4

R5

R6

...

Resource reservation
periodicity

Resource reservation
periodicity

FIG. 3

Slot 1    Slot 2    Slot 3    Slot 4

HARQ

Data

PSFCH

FIG. 4

41

43

42

First SCI

Second SCI

Assistance information

First SCI

Second SCI

R1

Assistance information

FIG. 5

41

Assistance
information

42

43

First
SCI

Second
SCI

First SCI | Other data

R1

Second
SCI

R2

Assistance
information

FIG. 6

FIG. 7

FIG. 8A

Resources indicated by first SCI | R1 | R2 | R3 | R4 | R5 | R6 |

Resource reservation periodicity indicated by the first SCI

Resources indicated by second SCI | R1' | R2' | R3' | R4' | R5' | R6' |

Resource reservation periodicity indicated by the second SCI

FIG. 8B

Resources indicated by first SCI | R1 | R2 | R3 | R4 | R5 | R6 |

Resource reservation periodicity indicated by the first SCI

Resources indicated by second SCI | R1' | R2' | R3' | R4' | R5' | R6' |

Resource reservation periodicity indicated by the second SCI

FIG. 8C

Resources indicated by first SCI | R1 | R2 | R3 | R4 | R5 | R6 |

Resource reservation periodicity indicated by the first SCI

Resources indicated by second SCI | R1' | R2' | R3' | R4' | R5' | R6' |

Resource reservation periodicity indicated by the second SCI

FIG. 8D

FIG. 8E

FIG. 9

| First terminal device | Second terminal device | Third terminal device |
|---|---|---|

S1001: First SCI

S1001: Second SCI

S1002: The third terminal device detects the first SCI from the first terminal device and the second SCI from the second terminal device

S1003: The third terminal device sends first information to the first terminal device

S1004: The first terminal device determines, based on the first information, that one or more resources indicated by the first SCI conflict with one or more resources indicated by the second SCI

S1005: The first terminal device selects a resource

FIG. 10A

First terminal device

Second terminal device

Third terminal device

S1011: First SCI

S1011: Second SCI

S1012: The third terminal device detects the first SCI from the first terminal device and the second SCI from the second terminal device

S1013: The third terminal device sends first information to the first terminal device

S1014: The first terminal device determines, based on the first information, that one or more resources indicated by the first SCI conflict with one or more resources indicated by third SCI

S1015: The first terminal device selects a resource

FIG. 10B

Used resource

Reserved
resources

UE 1 | R11 | R12 | R13 | R14 | R15 | R16 |

SCI 1

Resource reservation
periodicity

Resource reservation
periodicity

UE 2 | R21 | R22 | R23 | R24 | R25 | R26 |

SCI 2

Resource reservation
periodicity

Resource reservation
periodicity

UE 3 | R31 | R32 | R33 | R34 | R35 | R36 |

SCI 3

Resource reservation
periodicity

Resource reservation
periodicity

UE 4 | R41 | R42 R43 | R44 R45 R46 |

SCI 4

Resource reservation
periodicity

Resource reservation
periodicity

FIG. 10C

First terminal device

Third terminal device

S1101: First SCI

S1102: The third terminal device detects the first SCI from the first terminal device

S1103: The third terminal device sends assistance information to the first terminal device when at least one of conditions is met

S1104: The first terminal device selects a resource based on the assistance information

FIG. 11

120

1201

Processing module

1202

Transceiver module

FIG. 12

130

Processor
1301

Memory
1302

FIG. 13

140

Processor
1401

Interface
circuit
1402

FIG. 14

## INTERNATIONAL SEARCH REPORT

| | International application No. |
|---|---|
| | **PCT/CN2021/085752** |

### A. CLASSIFICATION OF SUBJECT MATTER

H04W 72/02(2009.01)i; H04W 4/40(2018.01)i

According to International Patent Classification (IPC) or to both national classification and IPC

### B. FIELDS SEARCHED

Minimum documentation searched (classification system followed by classification symbols)

H04W; H04L; H04B

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 模式, 资源, 选择, 预留, 重叠, 指示, 冲突, 辅助, 侧链, 侧行, 旁路, 控制信息, 半双工, 感知, 感测, 优先级, mode, resource, selec+, overlap+, SCI, destination, colli+, assist+, reserved, sidelink, priority, sensing, reservation

### C. DOCUMENTS CONSIDERED TO BE RELEVANT

| Category* | Citation of document, with indication, where appropriate, of the relevant passages | Relevant to claim No. |
|---|---|---|
| A | CN 111601274 A (SHARP CORPORATION et al.) 28 August 2020 (2020-08-28) claims 1-10, description paragraphs [0019-0056], [0240-0246] | 1-104 |
| A | WO 2020191769 A1 (GUANGDONG OPPO MOBILE TELECOMMUNICATIONS CORP., LTD.) 01 October 2020 (2020-10-01) entire document | 1-104 |
| A | US 2020367113 A1 (GUANGDONG OPPO MOBILE TELECOMMUNICATIONS CORP., LTD.) 19 November 2020 (2020-11-19) entire document | 1-104 |
| A | ZTE et al. "Mode 2 resource allocation schemes on sidelink" *3GPP TSG RAN WG1 #99 R1-1912553*, 22 November 2019 (2019-11-22), entire document | 1-104 |
| A | NEC. "Mode 2 resource allocation mechanism for NR sidelink" *3GPP TSG RAN WG1 #99 R1-1912617*, 22 November 2019 (2019-11-22), entire document | 1-104 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 September 2021** | **14 October 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/085752**

| Patent document cited in search report | | | Publication date (day/month/year) | Patent family member(s) | | | Publication date (day/month/year) |
|---|---|---|---|---|---|---|---|
| CN | 111601274 | A | 28 August 2020 | WO | 2020169067 | A1 | 27 August 2020 |
| WO | 2020191769 | A1 | 01 October 2020 | None | | | |
| US | 2020367113 | A1 | 19 November 2020 | BR | 112020015790 | A2 | 15 December 2020 |
| | | | | TW | 201935978 | A | 01 September 2019 |
| | | | | AU | 2018405959 | A1 | 27 August 2020 |
| | | | | WO | 2019148489 | A1 | 08 August 2019 |
| | | | | CN | 112135273 | A | 25 December 2020 |
| | | | | EP | 3737174 | A1 | 11 November 2020 |
| | | | | KR | 20200116120 | A | 08 October 2020 |
| | | | | CA | 3090344 | A1 | 08 August 2019 |
| | | | | CN | 111713148 | A | 25 September 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2021072307 W